# EUROPEAN PATENT SPECIFICATION

(11) **EP 1 367 091 B1**
(45) Date of publication and mention of the grant of the patent: **30.11.2005**
(21) Application number: 03405357.9
(22) Date of filing: 22.05.2003
(51) Int. Cl.: C08K 5/00, C08K 5/3475, C08K 5/103, C08K 5/527, C08K 5/3435, C08L 67/02, C08F 287/00, C08K 5/134, C08L 51/00, C08K 5/101, C08K 5/315

(54) **Agricultural articles**
Landwirtschaftlich verwendbare Artikel
Objets agricoles

(30) Priority: 30.05.2002 EP 02405430
(43) Date of publication of application: 03.12.2003
(73) Proprietor: Ciba Specialty Chemicals Holding Inc., 4057 Basel (CH); Ciba Specialty Chemicals S.p.A., 40037 Sasso Marconi (BO) (IT)
(72) Inventor: Bonora, Michela, 40135 Bologna (IT)

(56) References cited:
- EP-A- 0 172 691
- EP-A- 0 226 453
- DE-A- 4 003 129
- GB-A- 1 582 280
- US-A- 3 909 333
- US-A- 5 859 098

## Description

The present invention relates to agricultural articles which keep their properties during the use and degrade later on, until total disintegration and disappearance of the plastic. The invention further relates to a method for controlling the weathering resistance and the degradation of agricultural articles. The desired effect is obtained with specific combinations of degradant metal salts and stabilizers.

The agricultural article of the present invention comprises an organic polymer, an organic salt of Fe, Ce, Co, Mn, Cu or Vd and one or more sterically hindered amine compounds,

Shelf stable nonwoven fabrics and films are disclosed in US-A-5,393,831. A method for controlling the degradation start time is further disclosed in JP-A-05/043749. Chemically degradable polyolefin films are also described in US-A-5,565,503.

Stabilized plastics are for example described in EP-A-226,453, GB-A-1,582,280, US-A-3,909,333, US-A-5,859,098, DE-A-4,003,129 and EP-A-172,691.

EP-A-226,453 relates to polyolefin compositions having improved light stability, more specifically polyolefin compositions blended with particular antioxidants and light stabilizers. EP-A-226,453 refers to JP-A-1983/113,236 and JP-A-1984/219,353, JP-A-1983/113,236 relates to polyolefin compositions with improved weatherability at high temperatures, which contain benzotriazoles, heterocyclic hindered amines and phenyl benzoate based compounds. JP-A-1984/219,353 discloses trimming materials for vehicles consisting of polyolefin resins which contain a specified organonickel compound.

The present invention relates in particular to an agricultural article comprising the components
(I) an organic polymer,
(II) an organic salt of Fe, Ce, Co, Mn, Cu or Vd, and
(III) one or more sterically hindered amine compounds selected from the group consisting of
a compound of the formula (A-1) 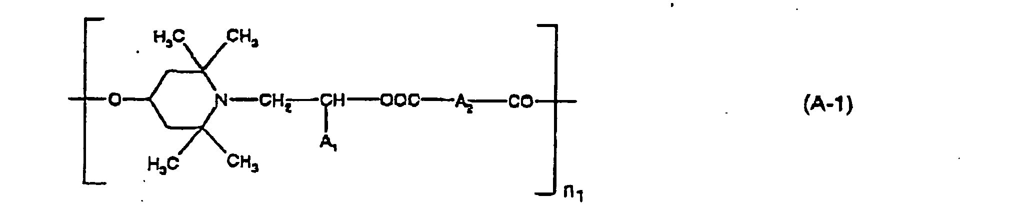 wherein
A₁ is hydrogen or C₁-C₄alkyl,
A₂ is a direct bond or C₁-C₁₀alkylene, and
n₁ is a number from 2 to 50;
at least one compound of the formulae (A-2-a) and (A-2-b) 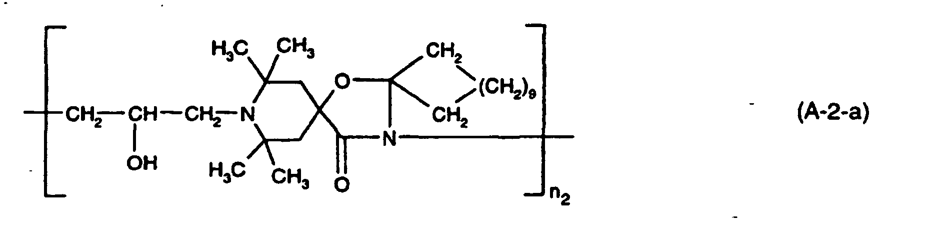 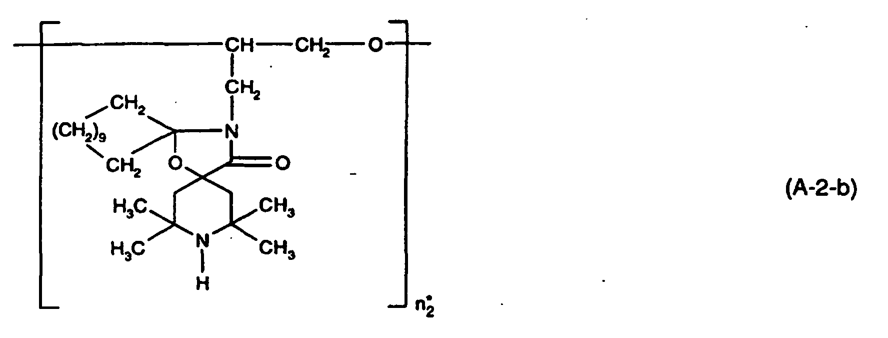 wherein
n₂ and n₂* are a number from 2 to 50;
a compound of the formula (A-3) 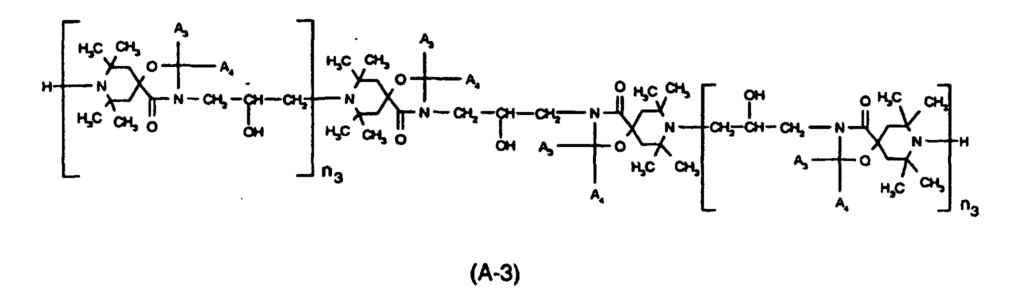 wherein
A₃ and A₄ independently of one another are hydrogen or C₁-C₈alkyl, or A₃ and A₄ together ' form a C₂-C₁₄alkylene group, and
the variables n₃ independently of one another are a number from 1 to 50;
a compound of the formula (A-4) 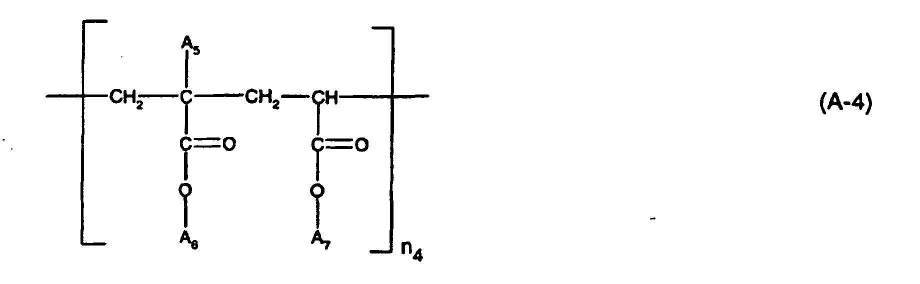 wherein
n₄ is a number from 2 to 50,
A₅ is hydrogen or C₁-C₄alkyl,
the radicals A₆ and A₇ independently of one another are C₁-C₄alkyl or a group of the formula (a-I) 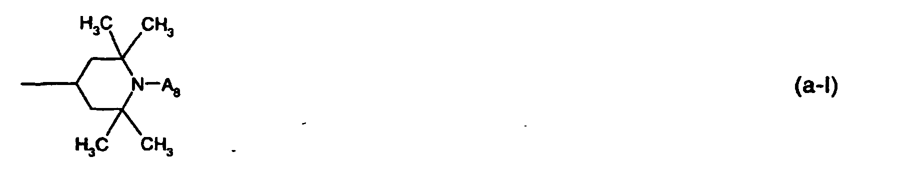 wherein A₈ is hydrogen, C₁-C₈alkyl, -O·, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
with the proviso that at least 50 % of the radicals A₇ are a group of the formula (a-I);
a compound of the formula (B-1) 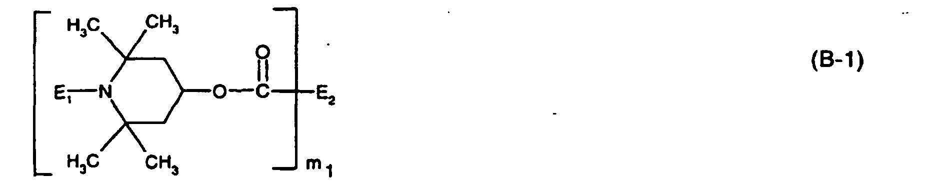 in which
E₁ is hydrogen, C₁-C₈alkyl, -O·, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
m₁ is 1, 2 or 4,
if m₁ is 1, E₂ is C₁-C₂₅alkyl,
if m₁ is 2, E₂ is C₁-C₁₄alkylene or a group of the formula (b-I) 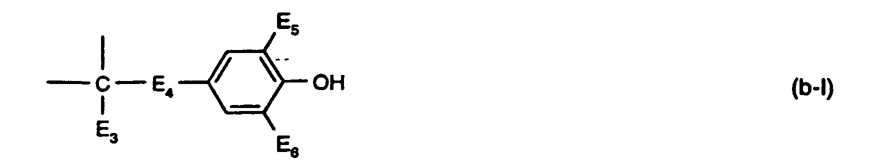 wherein E₃ is C₁-C₁₀alkyl or C₂-C₁₀alkenyl, E₄ is C₁-C₁₀alkylene, and
E₅ and E₆ independently of one another are C₁-C₄alkyl, cyclohexyl or methylcyclohexyl, and
if m₁ is 4, E₂ is C₄-C₁₀alkanetetrayl;
a compound of the formula (B-2) 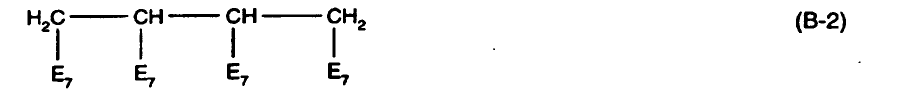 in which
two of the radicals E₇ are -COO-(C₁-C₂₀alkyl), and
two of the radicals E₇ are a group of the formula (b-ll) 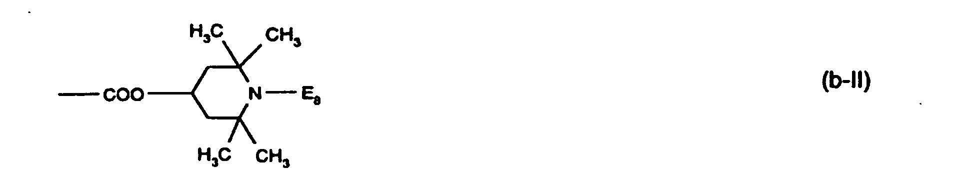 with E₈ having one of the meanings of E₁;
a compound of the formula (B-3) 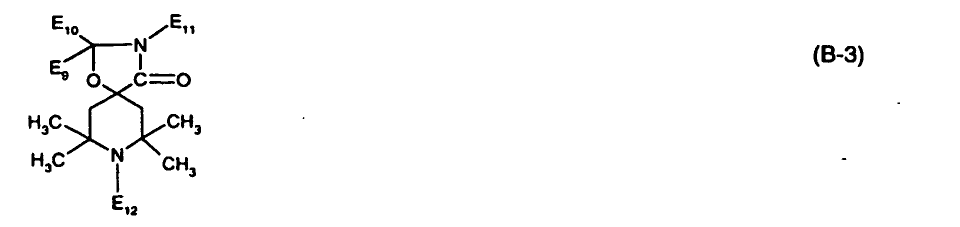 in which
E₉ and E₁₀ together form C₂-C₁₄alkylene,
E₁₁ is hydrogen or a group -Z₁-COO-Z₂,
Z₁ is C₂-C₁₄alkylene, and
Z₂ is C₁-C₂₄alkyl, and
E₁₂ has one of the meanings of E₁;
a compound of the formula (B-4) 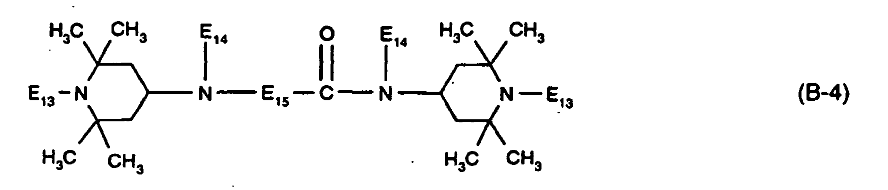 wherein
the radicals E₁₃ independently of one another have one of the meanings of E₁,
the radicals E₁₄ independently of one another are hydrogen or C₁-C₁₂alkyl, and
E₁₅ is C₁-C₁₀alkylene or C₃-C₁₀alkylidene;
a compound of the formula (B-5) 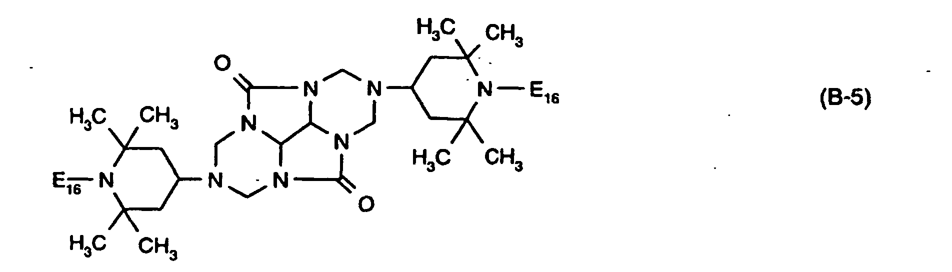 wherein
the radicals E₁₆ independently of one another have one of the meanings of E₁;
a compound of the formula (B-6) 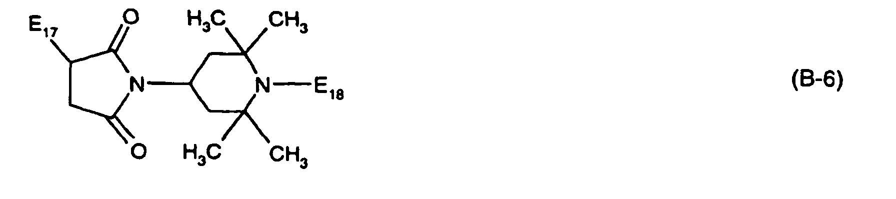 in which
E₁₇ is C₁-C₂₄alkyl, and
E₁₈ has one of the meanings of E₁;
a compound of the formula (B-7) 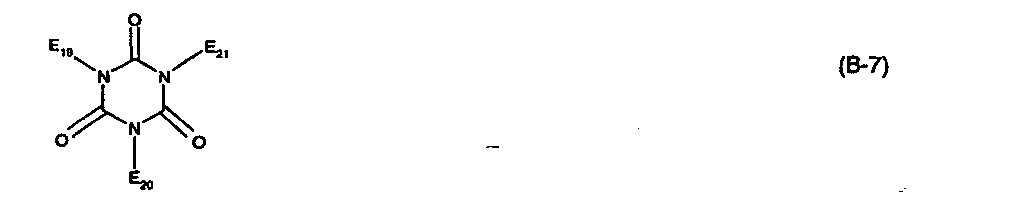 in which
E₁₉, E₂₀ and E₂₁ independently of one another are a group of the formula (b-lll) 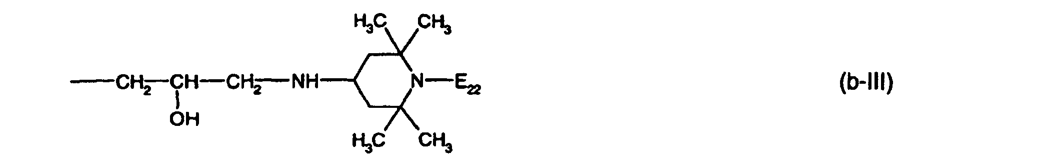 wherein E₂₂ has one of the meanings of E₁;
a compound of the formula (B-8) 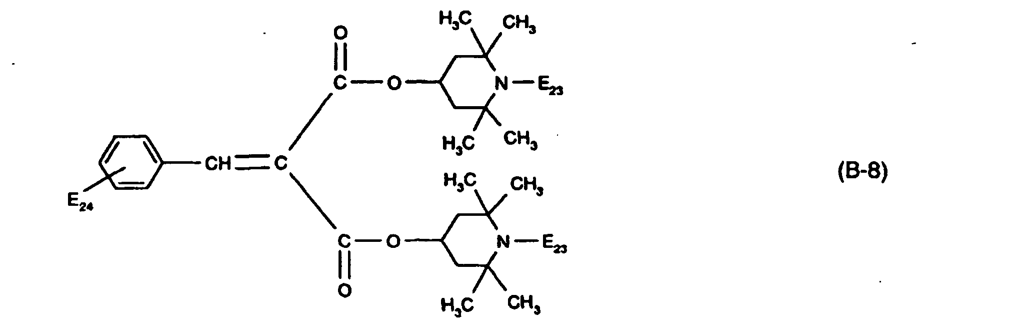 wherein
the radicals E₂₃ independently of one another have one of the meanings of E₁,
and E₂₄ is hydrogen, C₁-C₁₂alkyl or C₁-C₁₂alkoxy;
a compound of the formula (B-9) 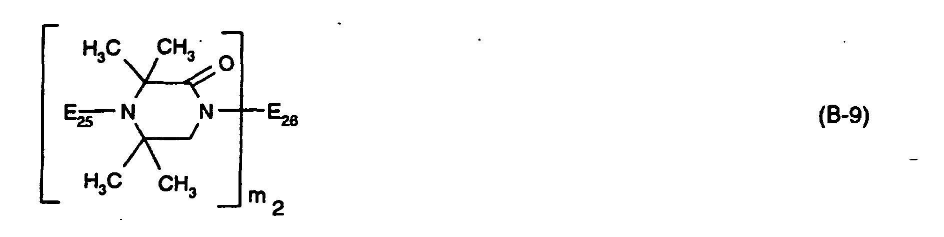 wherein
m₂ is 1, 2 or 3,
E₂₅ has one of the meanings of E₁, and
when m₂ is 1, E₂₆ is a group 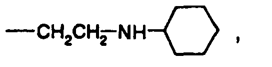 when m₂ is 2, E₂₆ is C₂-C₂₂alkylene, and
when m₂ is 3, E₂₆ is a group of the formula (b-IV) 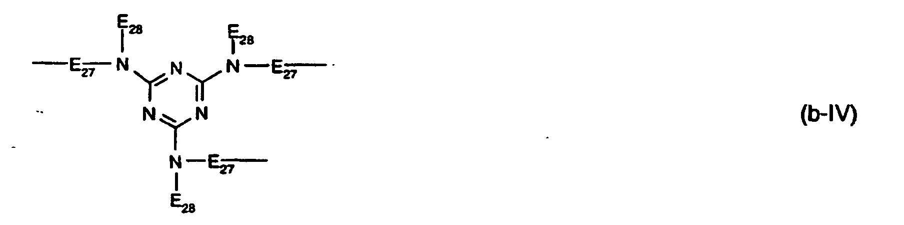 wherein the radicals E₂₇ independently of one another are C₂-C₁₂alkylene, and
the radicals E₂₈ independently of one another are C₁-C₁₂alkyl or C₅-C₁₂cycloalkyl;
a compound of the formula (B-10) 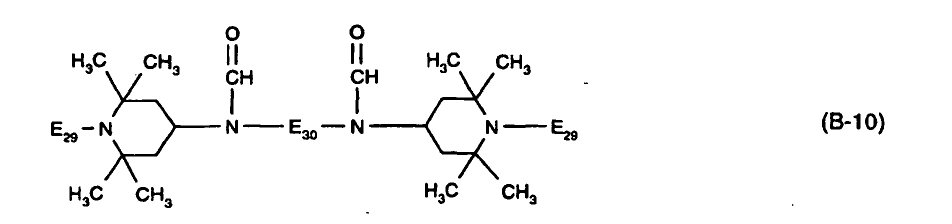 wherein
the radicals E₂₉ independently of one another have one of the meanings of E₁, and E₃₀ is C₂-C₂₂alkylene, C₅-C₇cycloalkylene, C₁-C₄alkylenedi(C₅-C₇cycloalkylene), phenylene or phenylenedi(C₁-C₄alkylene);
a compound of the formula (C-1) 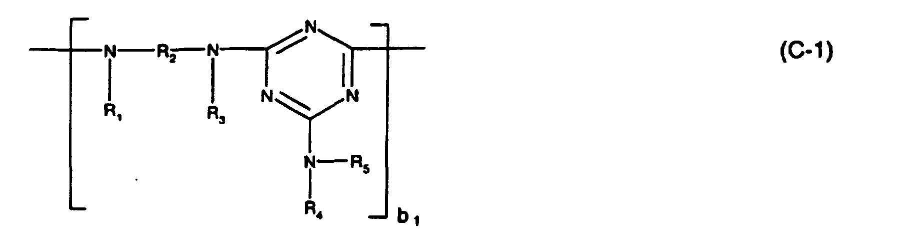 in which
R₁, R₃, R₄ and R₅ independently of one another are hydrogen, C₁-C₁₂alkyl, C₅-C₁₂cycloalkyl, C₁-C₄-alkyl-substituted C₅-C₁₂cycloalkyl, phenyl, phenyl which is substituted by -OH and/or C₁-C₁₀alkyl; C₇-C₉phenylalkyl, C₇-C₉phenylalkyl which is substituted on the phenyl radical by -OH and/or C₁-C₁₀alkyl; or a group of the formula (c-I) 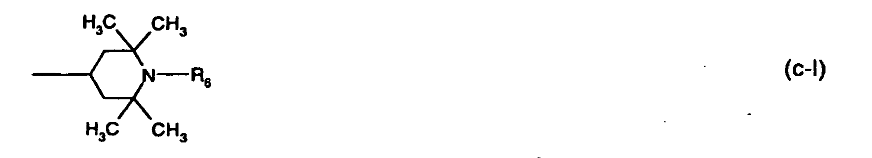 R₂ is C₂-C₁₈alkylene, C₅-C₇cycloalkylene or C₁-C₄alkylenedi(C₅-C₇cycloalkylene), or
the radicals R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, C₁-C₈alkyl, -O⁻, -OH, -CH₂CN, C₁-C₁₈alkoxy, C₂-C₁₈alkoxy substituted by -OH;
C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₆acyl, and
b₁ is a number from 2 to 50, with the proviso that at least one of the radicals R₁, R₃, R₄ and R₅ is a group of the formula (c-I);
a compound of the formula (C-2) 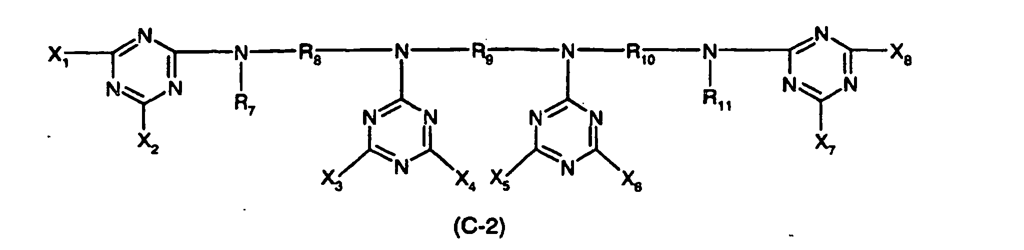 wherein
R₇ and R₁₁ independently of one another are hydrogen or C₁-C₁₂alkyl,
R₈, R₉ and R₁₀ independently of one another are C₂-C₁₀alkylene, and
X₁, X₂, X₃, X₄, X₅, X₆, X₇ and X₈ independently of one another are a group of the formula (c-II), 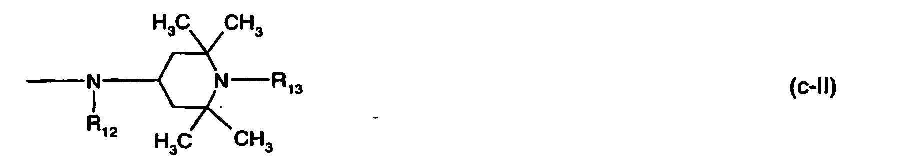 in which R₁₂ is hydrogen, C₁-C₁₂alkyl, C₅-C₁₂cycloalkyl, C₁-C₄alkyl-substituted
C₅-C₁₂cycloalkyl, phenyl, -OH- and/or C₁-C₁₀alkyl-substituted phenyl, C₇-C₉phenylalkyl,
C₇-C₉phenylalkyl which is substituted on the phenyl radical by -OH and/or C₁-C₁₀alkyl; or a group of the formula (c-l) as defined above, and
R₁₃ has one of the meanings of R₆;
a compound of the formula (C-3) 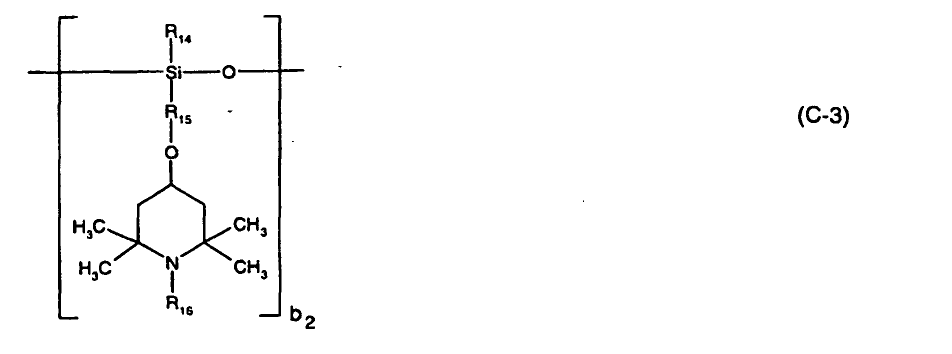 in which
R₁₄ is C₁-C₁₀alkyl, C₅-C₁₂cycloalkyl, C₁-C₄alkyl-substituted C₅-C₁₂cycloalkyl, phenyl or C₁-C₁₀alkyl-substituted phenyl,
R₁₅ is C₃-C₁₀alkylene,
R₁₆ has one of the meanings of R₆, and
b₂ is a number from 2 to 50;
a compound of the formula (C-4) 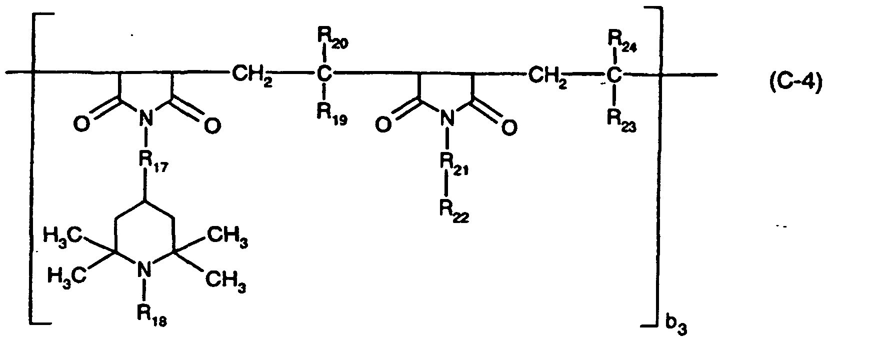 in which
R₁₇ and R₂₁ independently of one another are a direct bond or a -N(X₉)-CO-X₁₀-CO-N(X₁₁)-group, where X₉ and X₁₁ independently of one another are hydrogen, C₁-C₈alkyl,
C₅-C₁₂cycloalkyl, phenyl, C₇-C₉phenylalkyl or a group of the formula (c-I),
X₁₀ is a direct bond or C₁-C₄alkylene,
R₁₈ has one of the meanings of R₆,
R₁₉, R₂₀, R₂₃ and R₂₄ independently of one another are hydrogen, C₁-C₃₀alkyl,
C₅-C₁₂cycloalkyl or phenyl,
R₂₂ is hydrogen, C₁-C₃₀alkyl, C₅-C₁₂cycloalkyl, phenyl, C₇-C₉phenylalkyl or a group of the formula (c-I), and
b₃ is a number from 1 to 50;
a compound of the formula (C-5) 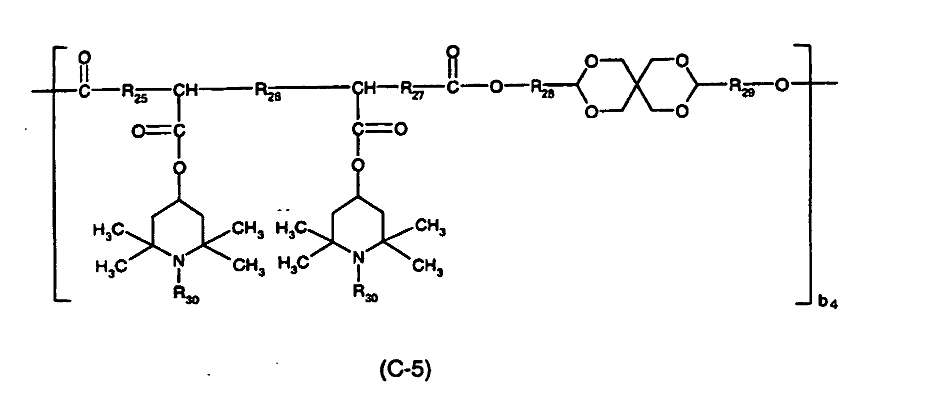 in which
R₂₅, R₂₆, R₂₇, R₂₈ and R₂₉ independently of one another are a direct bond or C₁-C₁₀alkylene,
R₃₀ has one of the meanings of R₆, and
b₄ is a number from 1 to 50; and
a product (C-6) obtainable by reacting a product, obtained by reaction of a polyamine of the formula (C-6-1) with cyanuric chloride, with a compound of the formula (C-6-2) 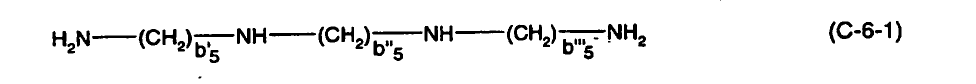 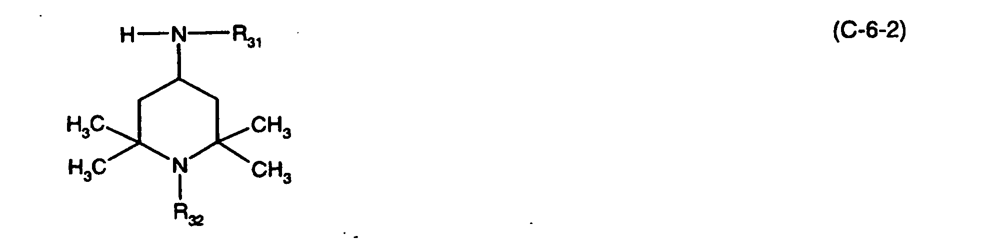 in which
b'₅, b"₅ and b'"₅ independently of one another are a number from 2 to 12,
R₃₁ is hydrogen, C₁-C₁₂alkyl, C₅-C₁₂cycloalkyl, phenyl or C₇-C₉phenylalkyl, and
R₃₂ has one of the meanings of R₆.

When the agricultural article according to the present invention contains a polyolefin, the presence of an oxidizable unsaturated compound, in particular natural rubber, styrene butadiene resin, fat or oil, is preferably disclaimed.

An agricultural article which is free of an oxidizable unsaturated compound, in particular natural rubber, styrene butadiene resin, fat or oil, is of special interest.

Examples of alkyl having up to 30 carbon atoms are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, eicosyl, docosyl and triacontyl. One of the preferred definitions of A₈, E₁, E₈, E₁₂, E₁₃, E₁₆, E₁₈, E₂₂, E₂₃, E₂₅, E₂₉, R₆, R₁₃, R₁₆, R₁₈, R₃₀ and R₃₂ is C₁-C₄alkyl, especially methyl. R₃₁ is preferably butyl.

Examples of alkoxy having up to 18 carbon atoms are methoxy, ethoxy, propoxy, isopropoxy, butoxy, isobutoxy, pentoxy, isopentoxy, hexoxy, heptoxy, octoxy, decyloxy, dodecyloxy, tetradecyloxy, hexadecyloxy and octadecyloxy. One of the preferred meanings of E₁ is octoxy. E₂₄ is preferably C₁-C₄alkoxy and one of the preferred meanings of R₆ is propoxy.

Examples of C₅-C₁₂cycloalkyl are cyclopentyl, cyclohexyl, cycloheptyl, cyclooctyl and cyclododecyl. C₅-C₈Cycloalkyl, especially cyclohexyl, is preferred.

C₁-C₄Alkyl-substituted C₅-C₁₂cycloalkyl is for example methylcyclohexyl or dimethylcyclohexyl.

Examples of C₅-C₁₂cycloalkoxy are cyclopentoxy, cyclohexoxy, cycloheptoxy, cyclooctoxy, cyclodecyloxy and cyclododecyloxy, C₅-C₈Cycloalkoxy, in particular cyclopentoxy and cyclohexoxy, is preferred.

-OH- and/or C₁-C₁₀alkyl-substituted phenyl is for example methylphenyl, dimethylphenyl, trimethylphenyl, tert-butylphenyl or 3,5-di-tert-butyl-4-hydroxyphenyl.

Examples of C₇-C₉phenylalkyl are benzyl and phenylethyl.

C₇-C₉Phenylalkyl which is substituted on the phenyl radical by -OH and/or by alkyl having up to 10 carbon atoms is for example methylbenzyl, dimethylbenzyl, trimethylbenzyl, tert-butylbenzyl or 3,5-di-tert-butyl-4-hydroxybenzyl.

Examples of alkenyl having up to 10 carbon atoms are allyl, 2-methallyl, butenyl, pentenyl and hexenyl. Allyl is preferred. The carbon atom in position 1 is preferably saturated.

Examples of acyl containing not more than 8 carbon atoms are formyl, acetyl, propionyl, butyryl, pentanoyl, hexanoyl, heptanoyl, octanoyl, acryloyl, methacryloyl and benzoyl. C₁-C₈Alkanoyl, C₃-C₈alkenyl and benzoyl are preferred. Acetyl and acryloyl are especially preferred.

Examples of alkylene having up to 22 carbon atoms are methylene, ethylene, propylene, trimethylene, tetramethylene, pentamethylene, 2,2-dimethyltrimethylene, hexamethylene, trimethylhexamethylene, octamethylene and decamethylene.

An example of C₃-C₁₀alkylidene is the group

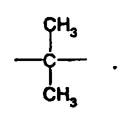

An example of C₄-C₁₀alkanetetrayl is 1,2,3,4-butanetetrayl.

An example of C₅-C₇cycloalkylene is cyclohexylene.

An example of C₁-C₄alkylenedi(C₅-C₇cycloalkylene) is methylenedicyclohexylene.

An example of phenylenedi(C₁-C₄ alkylene) is methylene-phenylene-methylene or ethylene-phenylene-ethylene.

Where the radicals R₁, R₂ and R₃, together with the nitrogen atoms to which they are attached, form a 5- to 10-membered heterocyclic ring, this ring is for example

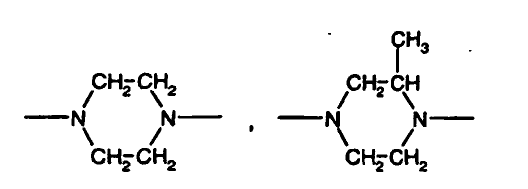

A 6-membered heterocyclic ring is preferred.

Where the radicals R₄ and R₅, together with the nitrogen atom to which they are attached, form a 5- to 10-membered heterocyclic ring, this ring is for example 1-pyrrolidyl, piperidino, morpholino, 1-piperazinyl, 4-methyl-1-piperazinyl, 1-hexahydroazepinyl, 5,5,7-trimethyl-1-homopiperazinyl or 4,5,5,7-tetramethyl-1-homopiperazinyl. Morpholino is particularly preferred.

One of the preferred definitions of R₁₉ and R₂₃ is phenyl.

R₂₆ is preferably a direct bond.

n₁, n₂, n₂* and n₄ are preferably a number from 2 to 25, in particular 2 to 20. n₃ is preferably a number from 1 to 25, in particular 1 to 20 or 2 to 20.

b₁ and b₂ are preferably a number from 2 to 25, in particular 2 to 20.

b₃ and b₄ are preferably a number from 1 to 25, in particluar 1 to 20 or 2 to 20.

b'₅ and b'''₅ are preferably 3 and b"₅ is preferably 2.

A₈ is preferably hydrogen, C₁-C₄alkyl, C₁-C₁₀alkoxy, cyclohexyloxy, allyl, benzyl or acetyl. E₁, E₈, E₁₂, E₁₃, E₁₆, E₁₈, E₂₂, E₂₃, E₂₅ and E₂₉ are preferably hydrogen, C₁-C₄alkyl, C₁-C₁₀alkoxy, cyclohexyloxy, allyl, benzyl or acetyl.
R₆, R₁₃, R₁₆, R₁₈, R₃₀ and R₃₂ are preferably hydrogen, C₁-C₄alkyl, C₁-C₁₀alkoxy, cyclohexyloxy, allyl, benzyl or acetyl.

A₈, E₁, E₈, E₁₂, E₁₃, E₁₆, E₁₈, E₂₂, E₂₃, E₂₅, E₂₉, R₆, R₁₃, R₁₆, R₁₈, R₃₀ and R₃₂ are preferably hydrogen or methyl and E₁ and R₆ additionally are C₁-C₈alkoxy.

The compounds described above as component (III) are essentially known and commercially available. All of them can be prepared by known processes.

The preparation of the compounds of the formulae (A-1), (A-2-a), (A-2-b), (A-3) and (A-4) is disclosed, for example, in US-A-4,233,412, US-A-4,340,534, WO-A-98/51,690 and EP-A-1,803.

The preparation of the compounds of the formulae (B-1), (B-2), (B-3), (B-4), (B-5), (B-6), (B-7), (B-8), (B-9) and (B-10) is disclosed, for example, in US-A-5,679,733, US-A-3,640,928, US-A-4,198,334, US-A-5,204,473, US-A-4,619,958, US-A-4,110,306, US-A-4,110,334, US-A-4,689,416, US-A-4,408,051, SU-A-768,175 (Derwent 88-138,751/20), US-A-5,049,604, US-A-4,769,457, US-A-4,356,307, US-A-4,619,956, US-A-5,182,390, GB-A-2,269,819, US-A-4,292,240, US-A-5,026,849, US-A-5,071,981, US-A-4,547,538 and US-A-4,976,889.

The preparation of the compounds of the formulae (C-1), (C-2), (C-3), (C-4) and (C-5) as well as the product (C-6) is disclosed, for example, in US-A-4,086,204, US-A-6,046,304, US-A-4,331,586, US-A-4,108,829, US-A-5,051,458, WO-A-94/12,544 (Derwent 94-177,274/22), DD-A-262,439 (Derwent 89-122,983/17), US-A-4,857,595, US-A-4,529,760 and US-A-4,477,615 and CAS 136,504-96-6.

The product (C-6) can be prepared analogously to known processes, for example by reacting a polyamine of formula (C-6-1) with cyanuric chloride in a molar ratio of from 1:2 to 1:4 in the presence of anhydrous lithium carbonate, sodium carbonate or potassium carbonate in an organic solvent such as 1,2-dichloroethane, toluene, xylene, benzene, dioxane or tert-amyl alcohol at a temperature of from -20°C to +10°C, preferably from -10°C to +10°C, in particular from 0°C to +10°C, for from 2 to 8 hours, followed by reaction of the resultant product with a 2,2,6,6-tetramethyl-4-piperidylamine of the formula (C-6-2). The molar ratio of the 2,2,6,6-tetramethyl-4-piperidylamine to polyamine of the formula (C-6-1) employed is for example from 4:1 to 8:1. The quantity of the 2,2,6,6-tetramethyl-4-piperidylamine can be added in one portion or in more than one portion at intervals of a few hours.

The molar ratio of polyamine of the formula (C-6-1) to cyanuric chloride to 2,2,6,6-tetramethyl-4-piperidylamine of the formula (C-6-2) is preferably from 1:3:5 to 1:3:6.

The following example indicates one way of preparing a preferred product (C-6-a).

Example: 23.6 g (0.128 mol) of cyanuric chloride, 7.43 g (0.0426 mol) of N,N'-bis[3-aminopropyl]ethylenediamine and 18 g (0.13 mol) of anhydrous potassium carbonate are reacted at 5°C for 3 hours with stirring in 250 ml of 1,2-dichloroethane. The mixture is warmed at room temperature for a further 4 hours. 27.2 g (0.128 mol) of N-(2,2,6,6-tetramethyl-4-piperidyl)butylamine are added and the resultant mixture is warmed at 60°C for 2 hours. A further 18 g (0.13 mol) of anhydrous potassium carbonate are added and the mixture is warmed at 60°C for a further 6 hours. The solvent is removed by distillation under a slight vacuum (200 mbar) and replaced by xylene. 18.2 g (0.085 mol) of N-(2,2,6,6-tetramethyl-4-piperidyl)butylamine and 5.2 g (0.13 mol) of ground sodium hydroxide are added, the mixture is heated at reflux for 2 hours and, for a further 12 hours, the water formed during the reaction is removed by azeotropic distillation. The mixture is filtered. The solution is washed with water and dried over Na₂SO₄. The solvent is evaporated and the residue is dried at 120-130°C in vacuo (0.1 mbar). The desired product is obtained as a colourless resin.

In general, the product (C-6) can for example be represented by a compound of the formula (C-6-α), (C-6-β) or (C-6-γ). It can also be in the form of a mixture of these three compounds.

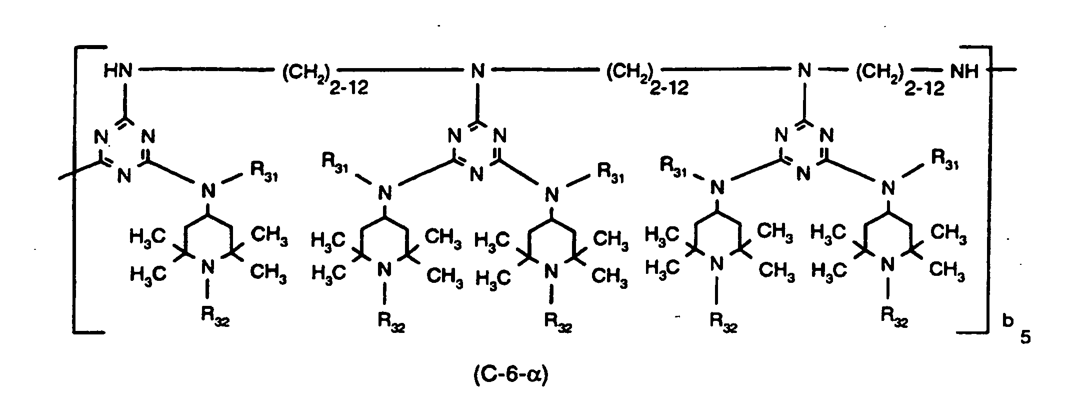

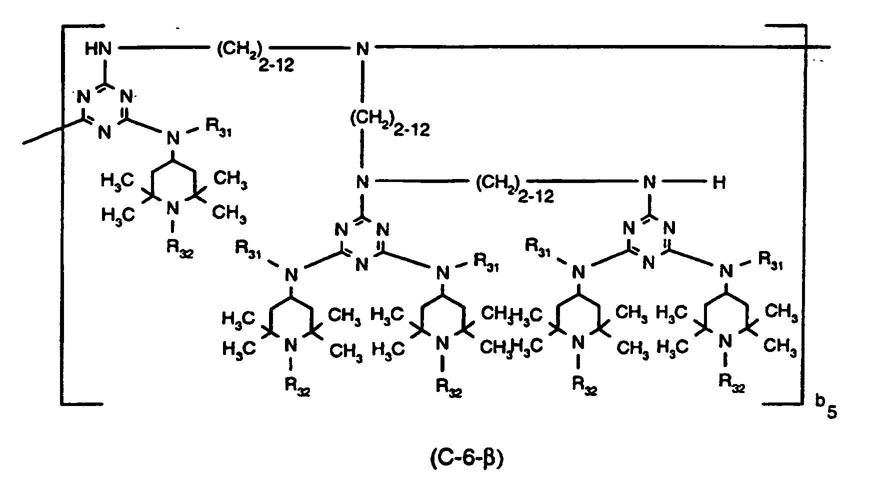

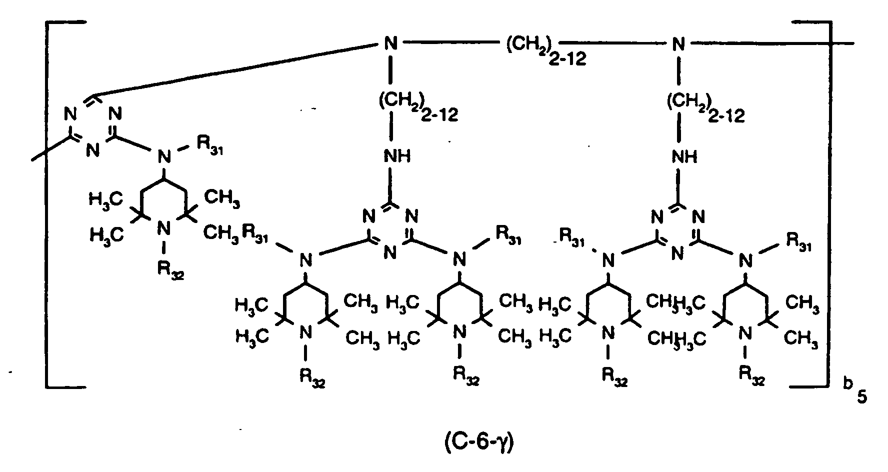

A preferred meaning of the formula (C-6-α) is

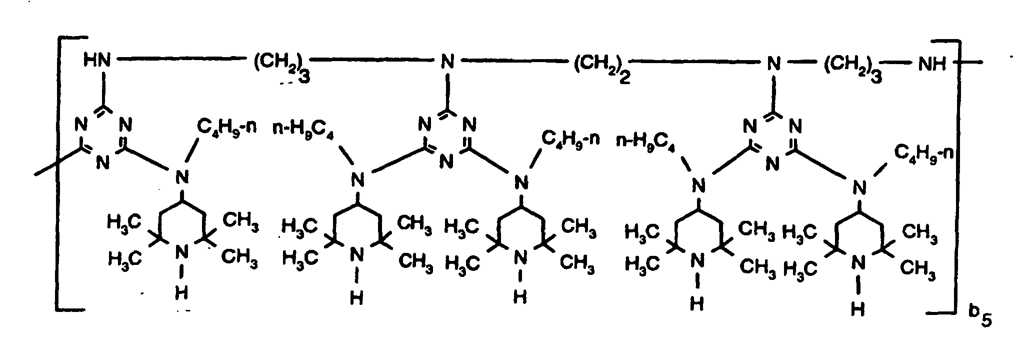

A preferred meaning of the formula (C-6-β) is

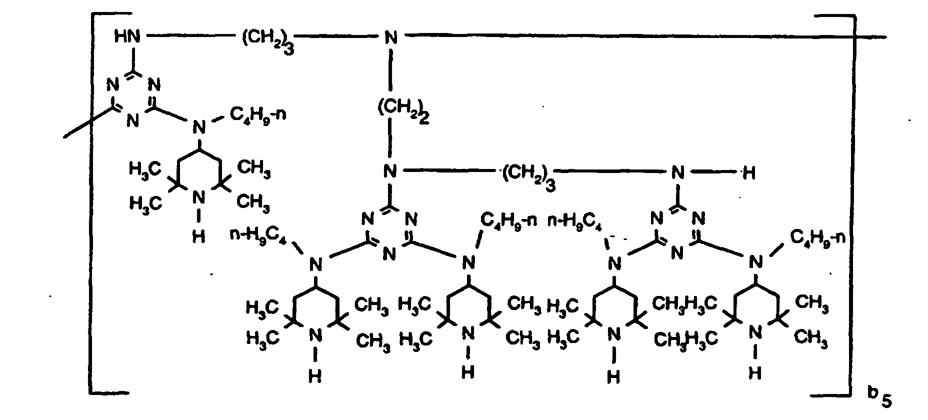

A preferred meaning of the formula (C-6-γ) is

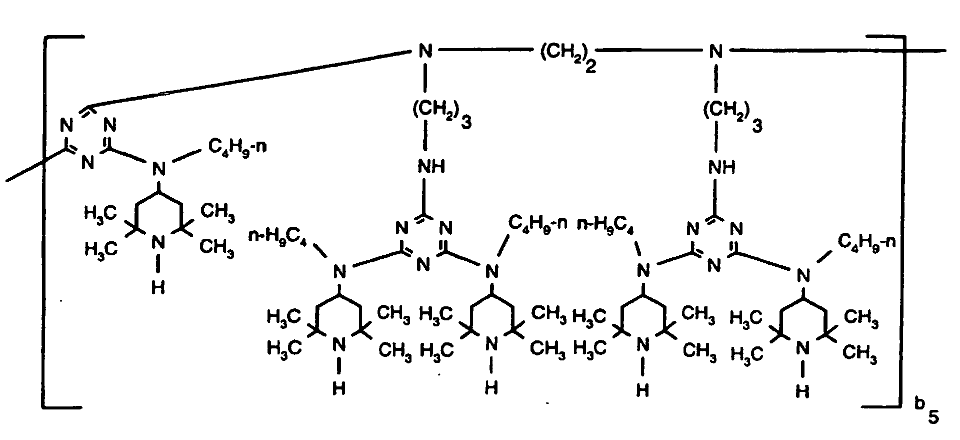

In the above formulae (C-6-α) to (C-6-γ), b₅ is preferably 2 to 20, in particular 2 to 10.

Component (III) is for example TINUVIN 622 (RTM), HOSTAVIN N 30 (RTM), FERRO AM 806 (RTM), DASTIB 845 (RTM), TINUVIN 770 (RTM), TINUVIN 765 (RTM), TINUVIN 144 (RTM), TINUVIN 123 (RTM), ADK STAB LA 52 (RTM), ADK STAB LA 57 (RTM), ADK STAB LA 62 (RTM), ADK STAB LA 67 (RTM), HOSTAVIN N 20 (RTM), HOSTAVIN N 24 (RTM), SANDUVOR 3050 (RTM), DIACETAM 5 (RTM), SUMISORB TM 61 (RTM), UVINUL 4049 (RTM), SANDUVOR PR 31 (RTM), GOODRITE UV 3034 (RTM), GOODRITE UV 3150 (RTM), GOODRITE UV 3159 (RTM), GOODRITE 3110 x 128 (RTM), UVINUL 4050 H (RTM), CHIMASSORB 944 (RTM), CHIMASSORB 2020 (RTM), CYASORB UV 3346 (RTM), CYASORB UV 3529 (RTM), DASTIB 1082 (RTM), CHIMASSORB 119 (RTM), UVASIL 299 (RTM), UVASIL 125 (RTM), UVASIL 2000 (RTM), UVINUL 5050 H (RTM), LICHTSCHUTZSTOFF UV 31 (RTM), LUCHEM HA B 18 (RTM), ADK STAB LA 63 (RTM), ADK STAB LA 68 (RTM), UVASORB HA 88 (RTM).

The meanings of the terminal groups which saturate the free valences in the compounds of the formulae (A-1), (A-2-a), (A-2-b), (A-4), (C-1), (C-3), (C-4), (C-5), (C-6-α), (C-6-β) and (C-6-γ) depend on the processes used for their preparation. The terminal groups can also be modified after the preparation of the compounds.

If the compounds of the formula (A-1) are prepared, for example, by reacting a compound of the formula 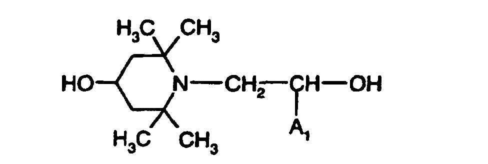 in which A₁ is hydrogen or methyl, with a dicarboxylic acid diester of the formula Y-OOC-A₂-COO-Y, in which Y is, for example, methyl, ethyl or propyl, and A₂ is as defined above, the terminal group bonded to the 2,2,6,6-tetramethyl-4-oxypiperidin-1-yl radical is hydrogen or -CO-A₂-COO-Y, and the terminal group bonded to the diacyl radical is -O-Y or 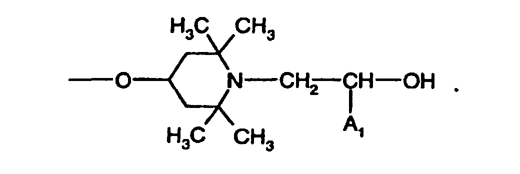 In the compounds of the formula (A-2-a), the terminal group bonded to the nitrogen can be, for example, hydrogen and the terminal group bonded to the 2-hydroxypropylene radical can be, for example, a 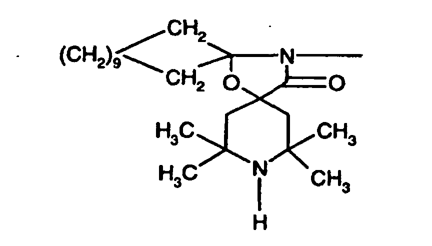 group.

In the compounds of the formula (A-2-b), the terminal group bonded to the dimethylene radical can be, for example, -OH, and the terminal group bonded to the oxygen can be, for example, hydrogen. The terminal groups can also be polyether radicals.

In the compounds of the formula (A-4), the end group bonded to the -CH₂- residue can be, for example, hydrogen and the end group bonded to the -CH(CO₂A₇) residue can be, for example, -CH=CH-COOA₇.

If the compounds of the formula (C-1) are prepared by reacting a compound of the formula 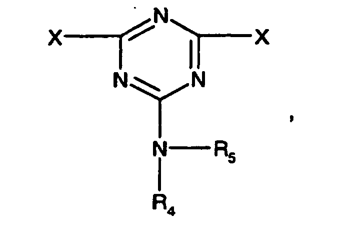 in which X is, for example, halogen, in particular chlorine, and R₄ and R₅ are as defined above, with a compound of the formula 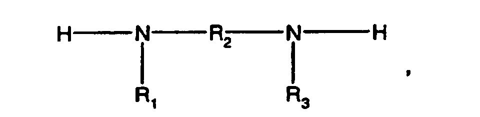 in which R₁, R₂ and R₃ are as defined above, the terminal group bonded to the diamino radical is hydrogen or 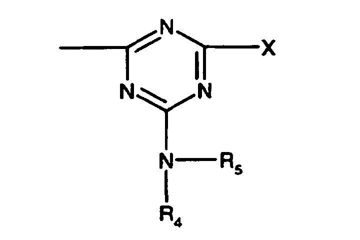 and the terminal group bonded to the triazine radical is X or

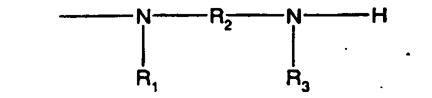

If X is halogen, it is advantageous to replace this, for example, by -OH or an amino group when the reaction is complete. Examples of amino groups which may be mentioned are pyrrolidin-1-yl, morpholino, -NH₂, -N(C₁-C₈)alkyl)₂ and -NR(C₁-C₈alkyl), in which R is hydrogen or a group of the formula (c-l).

The compounds of the formula (C-1) also cover compounds of the formula 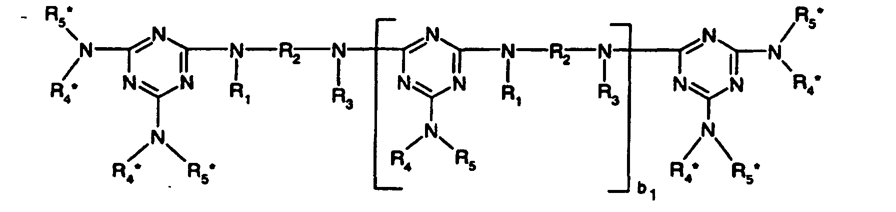 wherein R₁, R₂, R₃, R₄, R₅ and b₁ are as defined above and R₄* has one of the meanings of R₄ and R₅* has one of the meanings of R₅.

One of the particularly preferred compounds of the formula (C-1) is

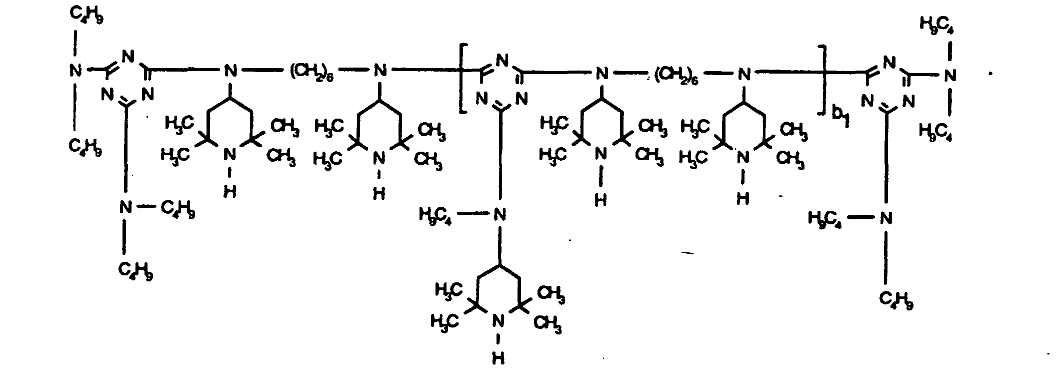

The preparation of this compound is described in Example 10 of US-A-6,046,304.

In the compounds of the formula (C-3), the terminal group bonded to the silicon atom can be, for example, (R₁₄)₃Si-O-, and the terminal group bonded to the oxygen can be, for example, -Si(R₁₄)₃.

The compounds of the formula (C-3) can also be in the form of cyclic compounds if b₂ is a number from 3 to 10, i.e. the free valences shown in the structural formula then form a direct bond.

In the compounds of the formula (C-4), the terminal group bonded to the 2,5-dioxopyrrolidine ring is, for example, hydrogen, and the terminal group bonded to the -C(R₂₃)(R₂₄)- radical is, for example,

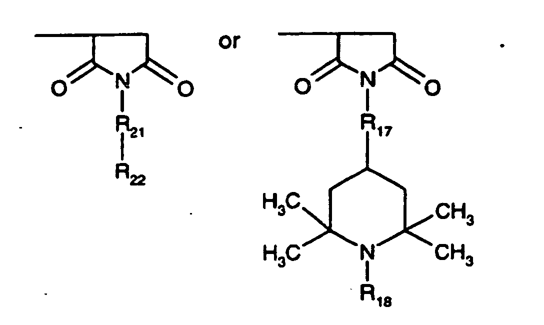

In the compounds of the formula (C-5), the terminal group bonded to the carbonyl radical is, for example, 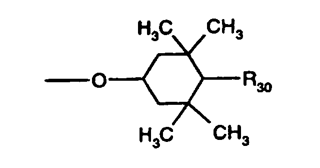 and the terminal group bonded to the oxygen radical is, for example,

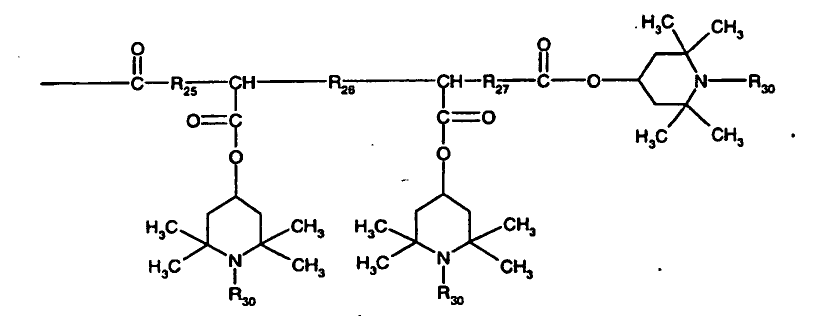

In the compounds of the formulae (C-6-α), (C-6-β) and (C-6-γ), the terminal group bonded to the triazine radical is, for example, Cl or a 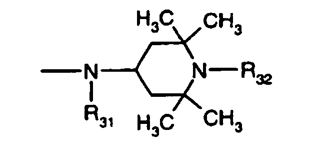 group, and the terminal group bonded to the amino radical is, for example, hydrogen or a 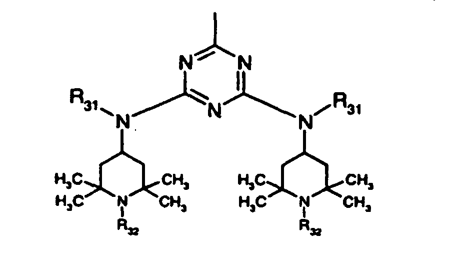 group.

According to a preferred embodiment
A₁ is hydrogen or methyl,
A₂ is a direct bond or C₂-C₆alkylene, and
n₁ is a number from 2 to 25;
n₂ and n₂* are a number from 2 to 25;
A₃ and A₄ independently of one another are hydrogen or C₁-C₄alkyl, or A₃ and A₄ together form a C₉-C₁₃alkylene group, and
the variables n₃ independently of one another are a number from 1 to 25;
n₄ is a number from 2 to 25,
A₅ and A₆ independently of one another are C₁-C₄alkyl, and
A₇ is C₁-C₄alkyl or a group of the formula (a-I)
with the proviso that at least 50 % of the radicals A₇ are a group of the formula (a-I);
m₁ is 1, 2 or 4,
if m₁ is 1, E₂ is C₁₂-C₂₀alkyl,
if m₁ is 2, E₂ is C₂-C₁₀alkylene or a group of the formula (b-I),
E₃ is C₁-C₄alkyl,
E₄ is C₁-C₆alkylene, and
E₅ and E₆ independently of one another are C₁-C₄alkyl, and
if m₁ is 4, E₂ is C₄-C₈alkanetetrayl;
two of the radicals E₇ are -COO-(C₁₀-C₁₅alkyl), and
two of the radicals E₇ are a group of the formula (b-II);
E₉ and E₁₀ together form C₉-C₁₃alkylene,
E₁₁ is hydrogen or a group -Z₁-COO-Z₂,
Z₁ is C₂-C₆alkylene, and
Z₂ is C₁₀-C₁₆alkyl;
E₁₄ is hydrogen, and
E₁₅ is C₂-C₆alkylene or C₃-C₅alkylidene;
E₁₇ is C₁₀-C₁₄alkyl;
E₂₄ is C₁-C₄alkoxy;
m₂ is 1, 2 or 3,
when m₂ is 1, E₂₆ is a group 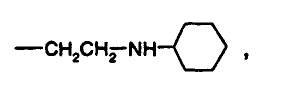 when m₂ is 2, E₂₆ is C₂-C₆alkylene, and
when m₂ is 3, E₂₆ is a group of the formula (b-IV)
the radicals E₂₇ independently of one another are C₂-C₆alkylene, and
the radicals E₂₈ independently of one another are C₁-C₄alkyl or C₅-C₈cycloalkyl; and
E₃₀ is C₂-C₈alkylene;
R₁ and R₃ independently of one another are a group of the formula (c-I),
R₂ is C₂-C₈alkylene,
R₄ and R₅ independently of one another are hydrogen, C₁-C₁₂alkyl, C₅-C₈cycloalkyl or a group of the formula (c-l), or the radicals R₄ and R₅, together with the nitrogen atom to which they are bonded, form a 5- to 10-membered heterocyclic ring, and
b₁ is a number from 2 to 25;
R₇ and R₁₁ independently of one another are hydrogen or C₁-C₄alkyl,
R₈, R₉ and R₁₀ independently of one another are C₂-C₄alkylene, and
X₁, X₂, X₃, X₄, X₅, X₆, X₇ and X₈ independently of one another are a group of the formula (c-II),
R₁₂ is hydrogen, C₁-C₄alkyl, C₅-C₈cycloalkyl or a group of the formula (c-I);
R₁₄ is C₁-C₄alkyl,
R₁₅ is C₃-C₆alkylene, and
b₂ is a number from 2 to 25;
R₁₇ and R₂₁ independently of one another are a direct bond or a group -N(X₉)-CO-X₁₀-CO-N(X₁₁)-,
X₉ and X₁₁ independently of one another are hydrogen or C₁-C₄alkyl,
X₁₀ is a direct bond,
R₁₉ and R₂₃ are C₁-C₂₅alkyl or phenyl,
R₂₀ and R₂₄ are hydrogen or C₁-C₄alkyl,
R₂₂ is C₁-C₂₅alkyl or a group of the formula (c-I), and
b₃ is a number from 1 to 25;
R₂₅, R₂₆, R₂₇, R₂₈ and R₂₉ independently of one another are a direct bond or C₁-C₄alkylene, and
b₄ is a number from 1 to 25;
b'₅, b"₅ and b'''₅ independently of one another are a number from 2 to 4, and
R₃₁ is hydrogen, C₁-C₄alkyl, C₅-C₈cycloalkyl, phenyl or benzyl.

An agricultural article of interest is one wherein
component (III) is one or more sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a); 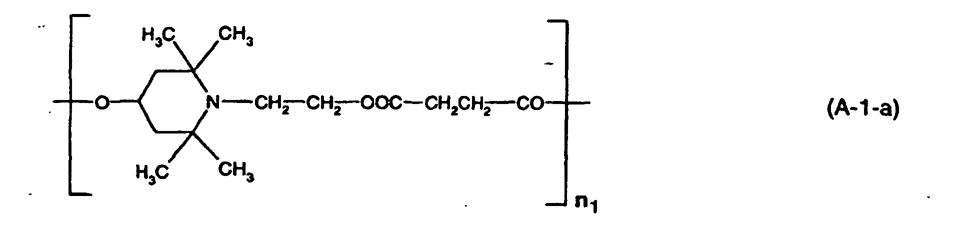 wherein n₁ is a number from 2 to 20; 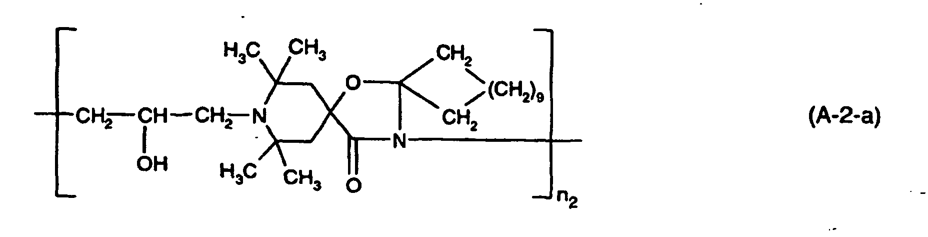 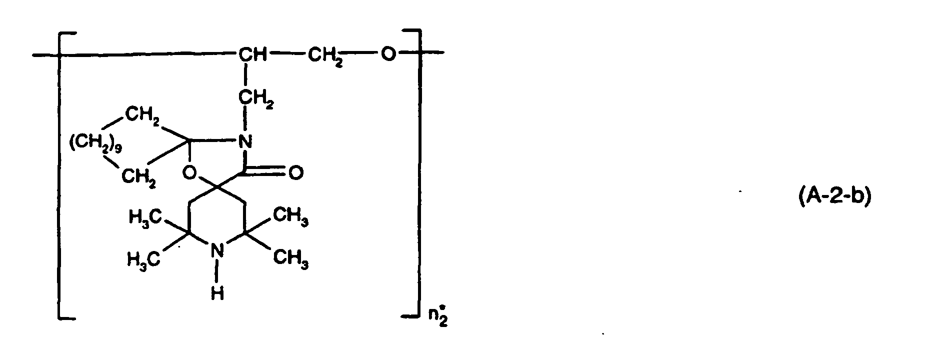 wherein n₂ and n₂* are a number from 2 to 20; 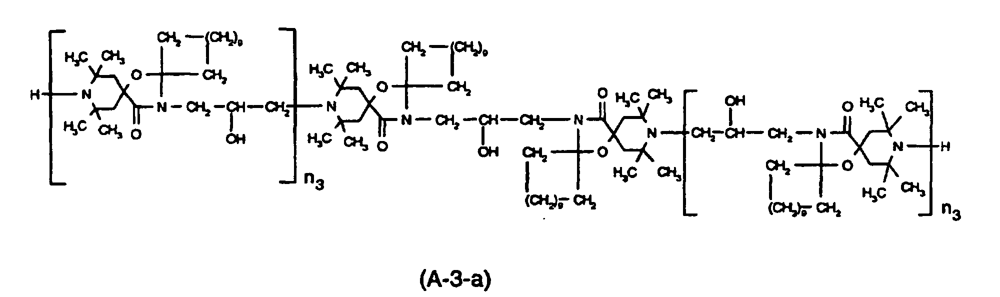 wherein the variables n₃ independently of one another are a number from 1 to 20; 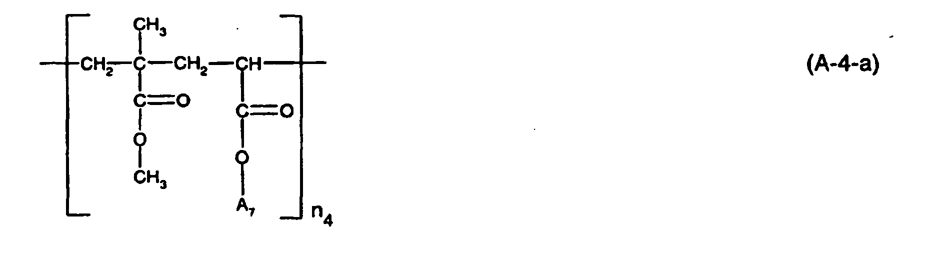 wherein n₄ is a number from 2 to 20, and
at least 50 % of the radicals A₇ are a group of the formula (a-I) 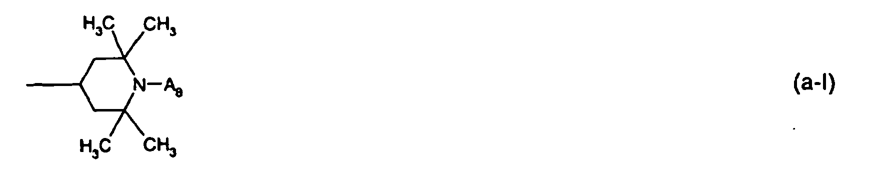 wherein A₈ is hydrogen, C₁-C₈alkyl, O⁻, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
and the remaining radicals A₇ are ethyl; 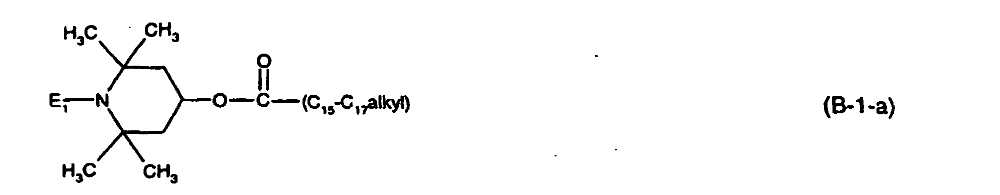 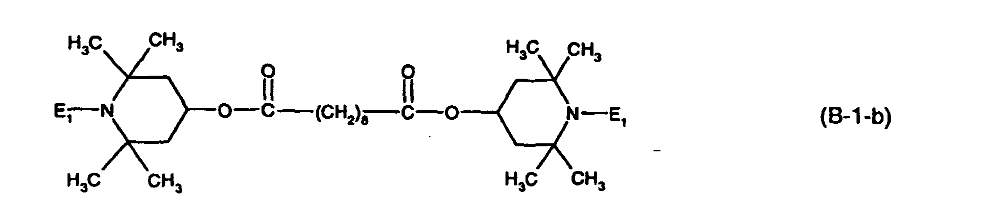 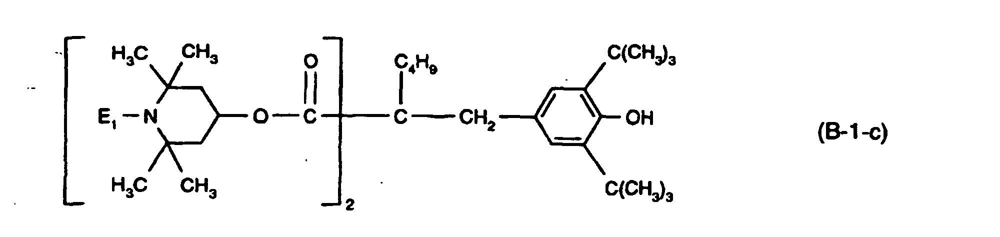 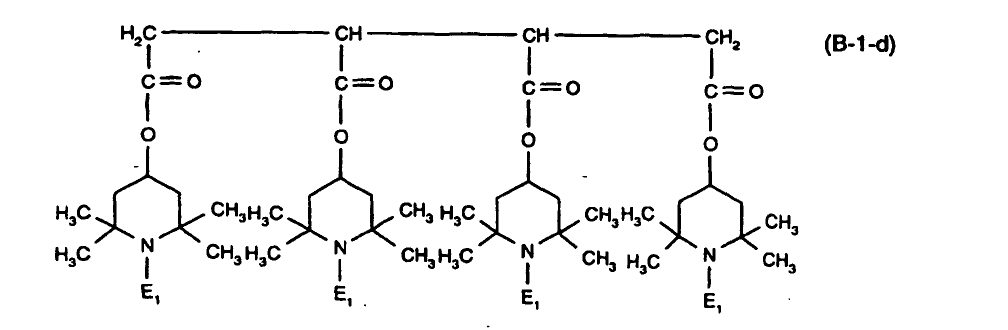 wherein E₁ is hydrogen, C₁-C₈alkyl, O⁻, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 . C₁-C₄alkyl; or C₁-C₈acyl; 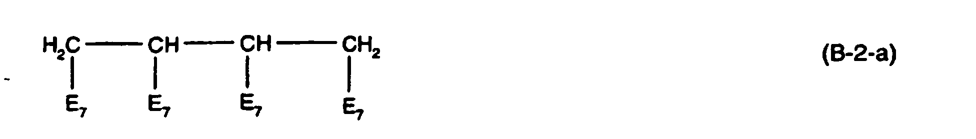 in which two of the radicals E₇ are -COO-C₁₃H₂₇ and
two of the radicals E₇ are 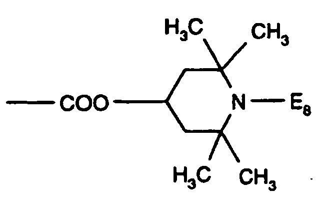 and E₈ has one of the meanings of E₁; 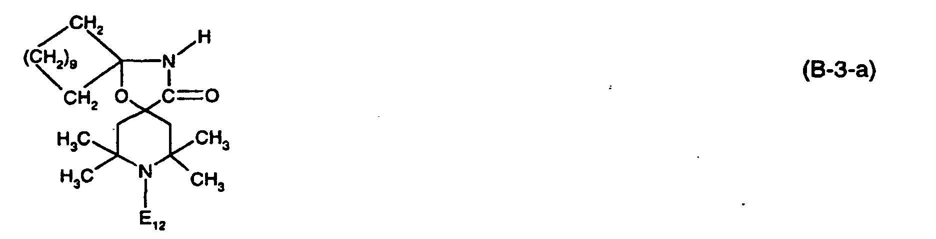 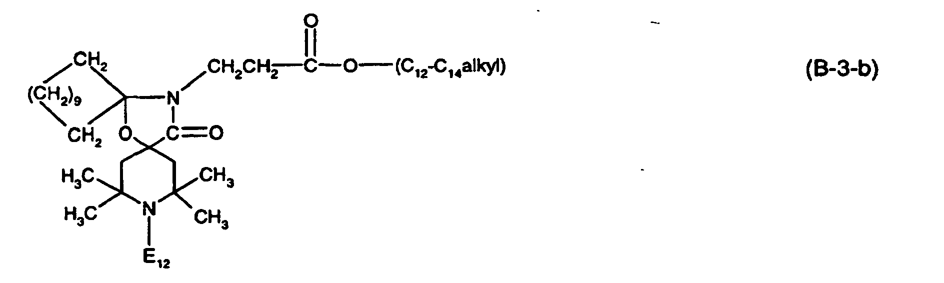 wherein E₁₂ has one of the meanings of E₁; 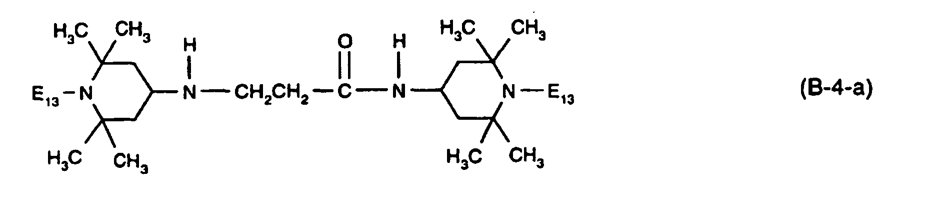 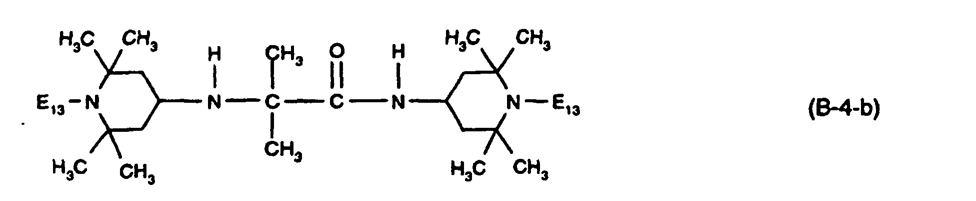 wherein E₁₃ has one of the meanings of E₁; 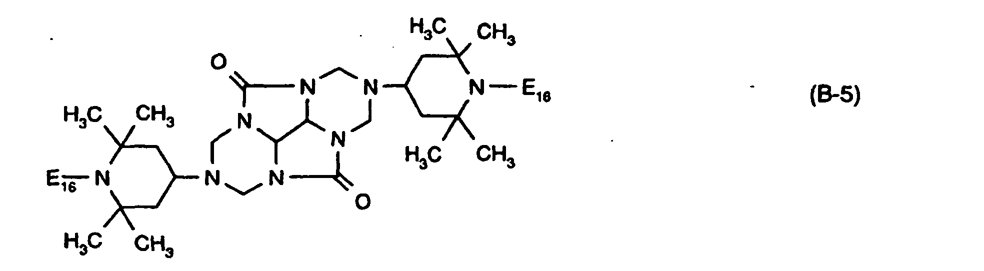 wherein E₁₆ has one of the meanings of E₁; 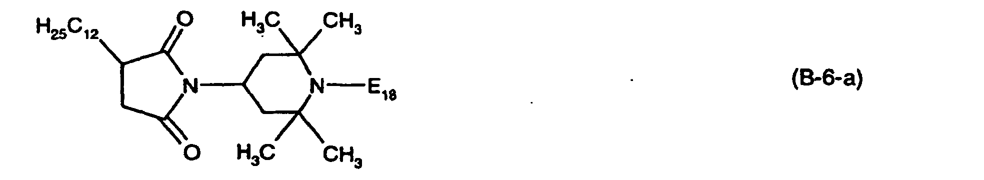 wherein E₁₈ has one of the meanings of E₁; 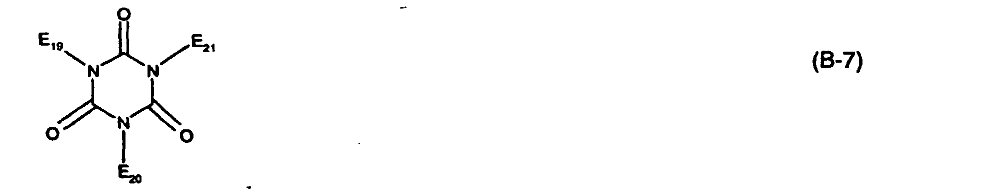 in which E₁₉, E₂₀ and E₂₁ independently of one another are a group of the formula (b-lll) 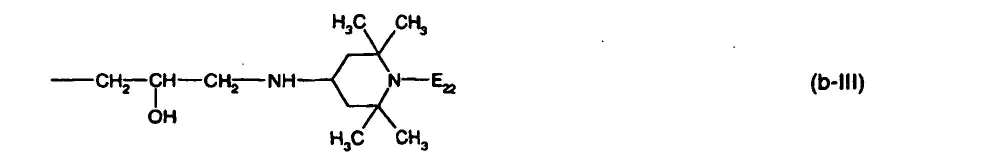 wherein E₂₂ has one of the meanings of E_{1:} 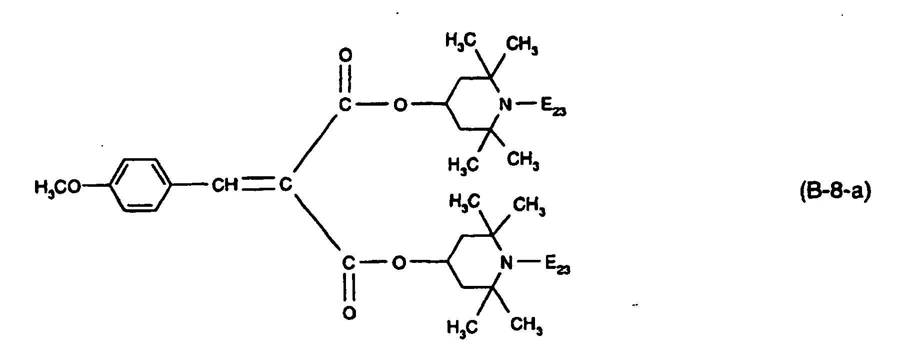 wherein E₂₃ has one of the meanings of E_{1;} 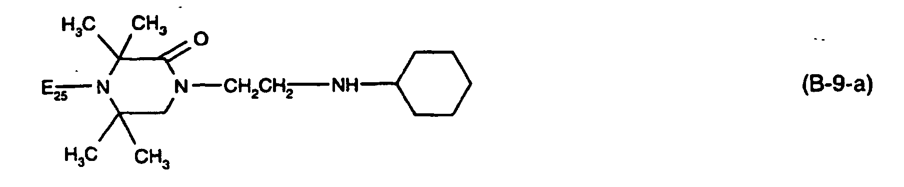 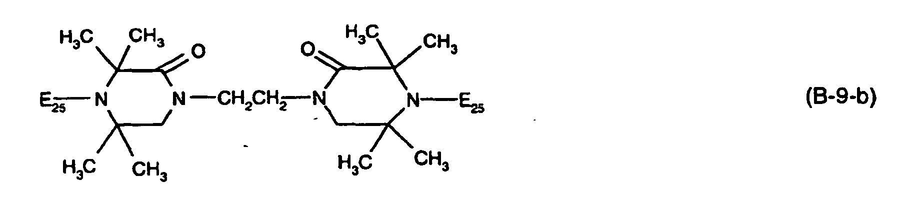 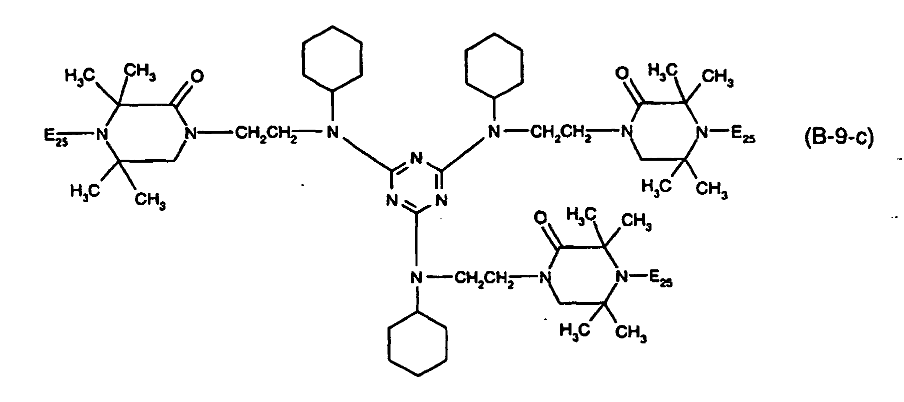 wherein E₂₅ has one of the meanings of E₁; 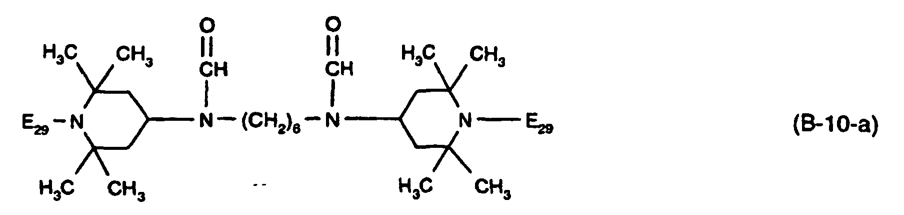 wherein E₂₉ has one of the meanings of E_{1;} 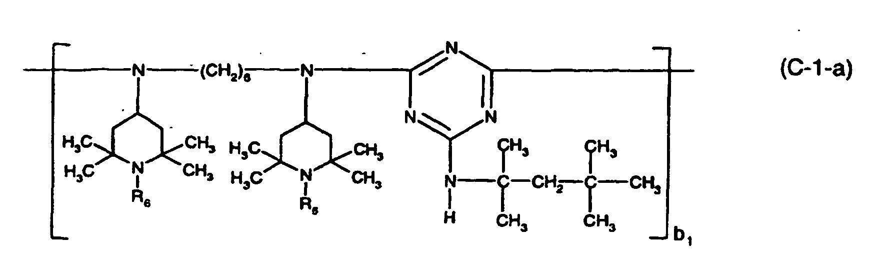 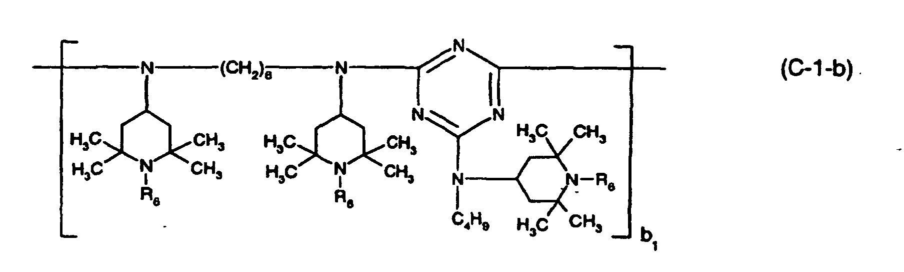 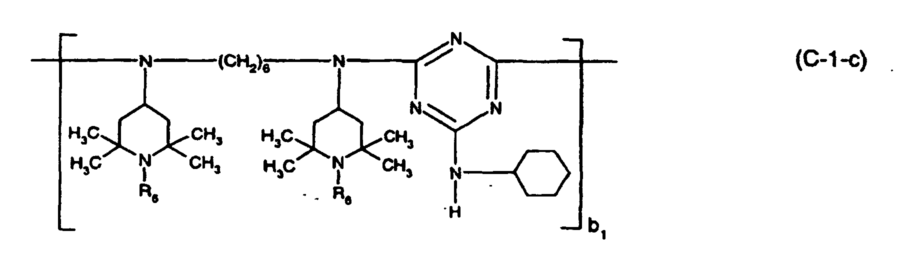 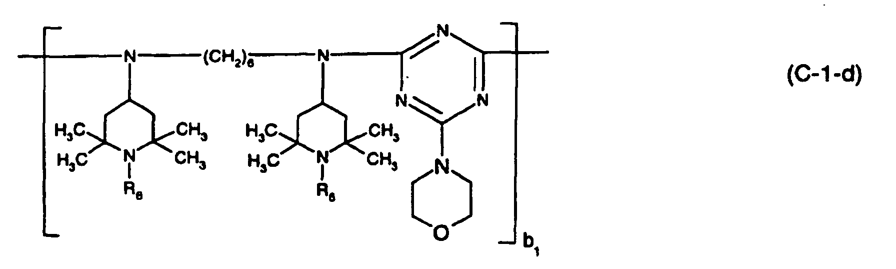 wherein b₁ is a number from 2 to 20 and R₆ is hydrogen, C₁-C₈alkyl, O⁻, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 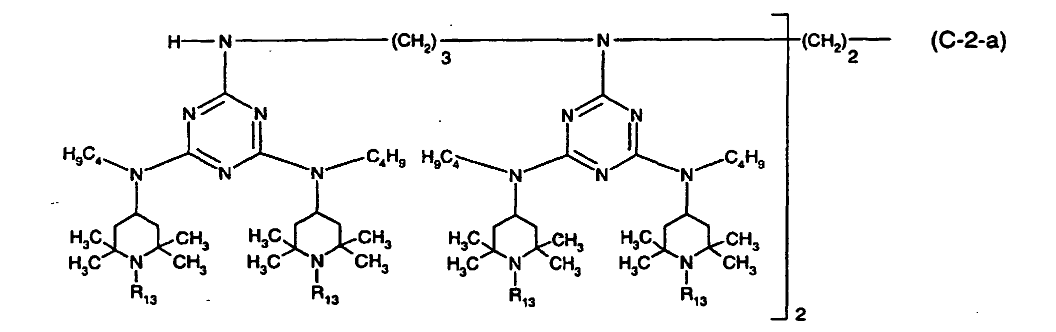 wherein R₁₃ has one of the meanings of R₆, 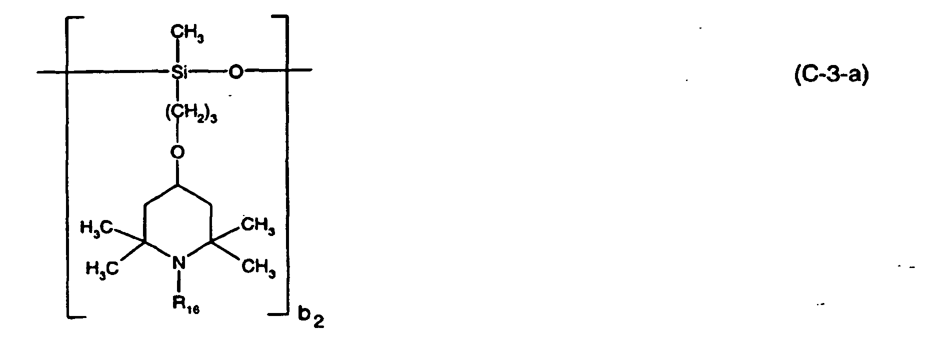 wherein b₂ is a number from 2 to 20 and R₁₆ has one of the meanings of R₆; 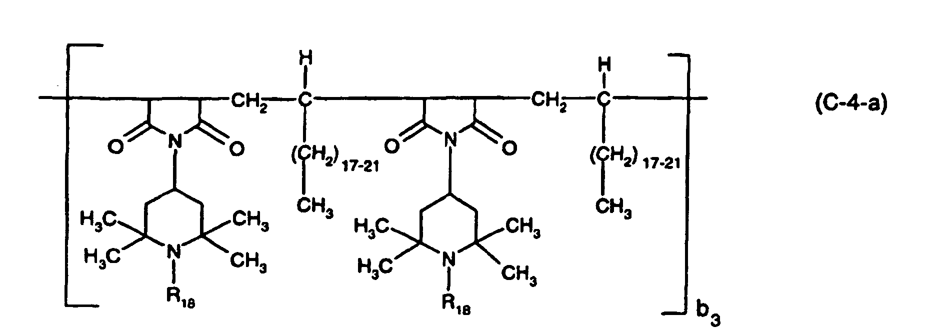 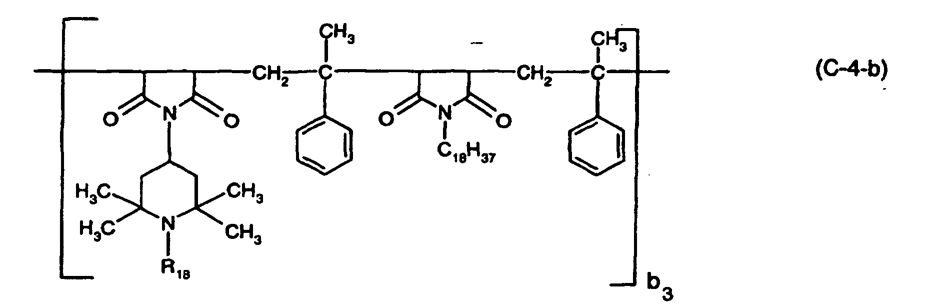 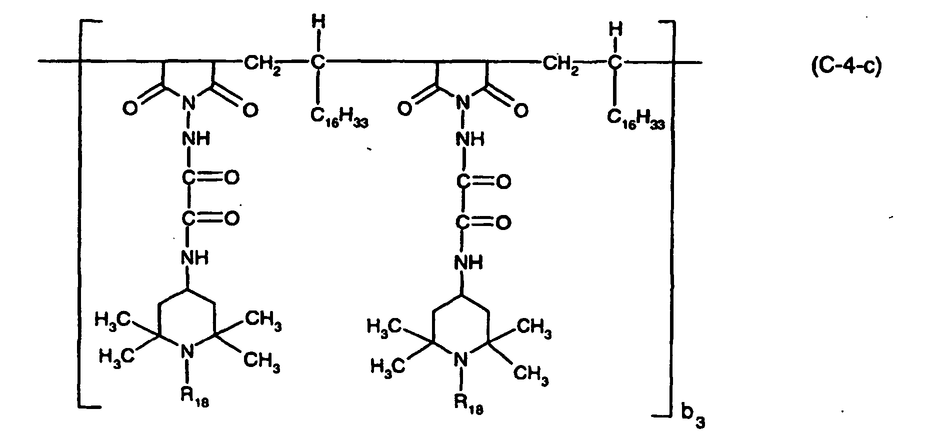 wherein b₃ is a number from 1 to 20 and R₁₈ has one of the meanings of R₆; 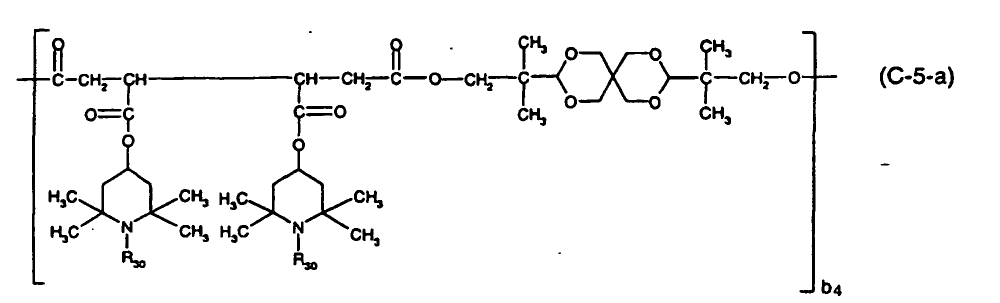 wherein b₄ is a number from 1 to 20 and R₃₀ has one of the meanings of R₆;
a product (C-6-a) obtainable by reacting a product, obtained by reaction of a polyamine of the formula (C-6-1-a) with cyanuric chloride, with a compound of the formula (C-6-2-a) 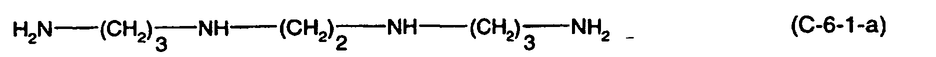 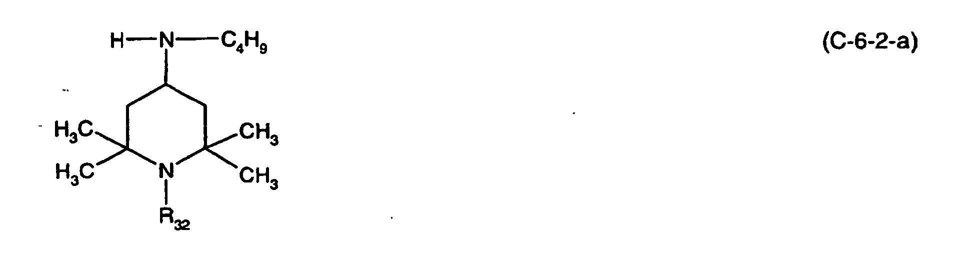 in which R₃₂ has one of the meanings of R₆.

According to a preferred embodiment component (III) is a compound of the formula
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
(C-1-a), (C-1-b), (C-1-c), (C-1-d), (C-2-a), (C-3-a), (C-4-a) or (C-5-a) or a product (C-6-a).

According to a particular preferred embodiment component (III) is a compound of the formula
(A-1-a), (A-2-a), (A-2-b),
(C-1-a), (C-1-b), (C-1-c), (C-1-d), (C-2-a), (C-3-a), (C-4-a) or (C-5-a) or a product (C-6-a).

An agricultural article which is of interest contains as component (III) two different sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a);
with the proviso that the two different sterically hindered amine compounds are not selected from the same generic formula.

Component (III) is particularly preferred a compound of the formula (A-1-a), or
a compound of the formula (C-1-a) wherein R₆ is hydrogen, or
a combination of a compound of the formula (A-1-a) with a compound of the formula (C-1-a) wherein R₆ is hydrogen, or
a combination of a compound of the formula (A-1-a) with a compound of the formula (C-2-a) wherein R₁₃ is methyl, or
a combination of a compound of the formula (B-1-b) wherein E₁ is hydrogen with a compound of the formula (C-1-a) wherein R₆ is hydrogen.

Component (II) is preferably a C₂-C₂₄carboxylate of Fe, Ce, Co, Mn, Cu or Vd, in particular Ce, Co or Mn.

C₁₀-C₂₀alkanoates of Ce, Co or Mn or C₁₀-C₂₀alkenoates of Ce, Co or Mn are of particular interest.

Examples of component (II) are stearates, oleates, linoleates, linolenates, neodecanoates, behenates, myristates, erucates and naphthenates of Fe, Ce, Co, Mn, Cu or Vd.
A particular preferred embodiment relates to stearates of Ce, Co or Mn.

Examples of component (I) are:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, lla and/or llla of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Crosslinked polymers derived from aldehydes on the one hand and phenols, ureas and melamines on the other hand, such as phenol/formaldehyde resins, urea/formaldehyde resins and melamine/formaldehyde resins.
23. Drying and non-drying alkyd resins.
24. Unsaturated polyester resins derived from copolyesters of saturated and unsaturated dicarboxylic acids with polyhydric alcohols and vinyl compounds as crosslinking agents, and also halogen-containing modifications thereof of low flammability.
25. Crosslinkable acrylic resins derived from substituted acrylates, for example epoxy acrylates, urethane acrylates or polyester acrylates.
26. Alkyd resins, polyester resins and acrylate resins crosslinked with melamine resins, urea resins, isocyanates, isocyanurates, polyisocyanates or epoxy resins.
27. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
28. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
29. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

Component (I) is preferably a synthetic polymer, in particular from one of the above groups. Polyolefins are preferred and polyethylene, polypropylene, a polyethylene copolymer or a polypropylene copolymer are particularly preferred.

According to a further preferred embodiment, component (I) is a polyolefin homo- or copolymer, a starch modified polyolefin, a starch based polymer composite or a biopolymer.

According to another preferred embodiment component (I) is a biopolymer selected from the group consisting of polycaprolactone, polylactic acid, polyglycolic acid, polyhydroxybutyrate-valerate, polybutylene succinate, polyvinyl alcohol, polyhydroxyalcanoate and polyethylene adipate.

The agricultural article of this invention may contain further one or more conventional additives. Examples are

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. Tocopherols, for example α-tocopherol, β-tocopherol, γ-tocopherol, δ-tocopherol and mixtures thereof (vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.

1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis(3,5-di-tert-butyl-4-hydroxybenzyl)malonate, bis[4-(1,1,3,3-tetramethylbutyl)phenyl]-2,2-bis(3.5-di-tert-butyl-4-hydroxybenzyl)malonate.

1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxyanilino)-1,3,5-triazine, 2-octyimercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris (3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3.5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylol propane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol; diethylene glycol, triethylene glycol, pentaerythritol, tris(hydroxyethyl)isocyanurate, N,N'-bis (hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl)-2,4,8,10-tetraoxaspiro[5.5]-undecane.

1.15. Esters of β-(3.5-dicyclohexyl-4-hydroxyPhenyl)pronionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard®XL-1, supplied by Uniroyal).

### 1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.

### 2. UV absorbers and light stabilisers

2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; , 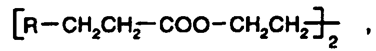 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl) malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyt)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-tri-chloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-di-aza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.

3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-mothyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

The following phosphites are especially preferred:

Tris(2,4-di-tert-butylphenyl) phosphite (Irgafos® 168, Ciba-Geigy), tris(nonylphenyl) phosphite,

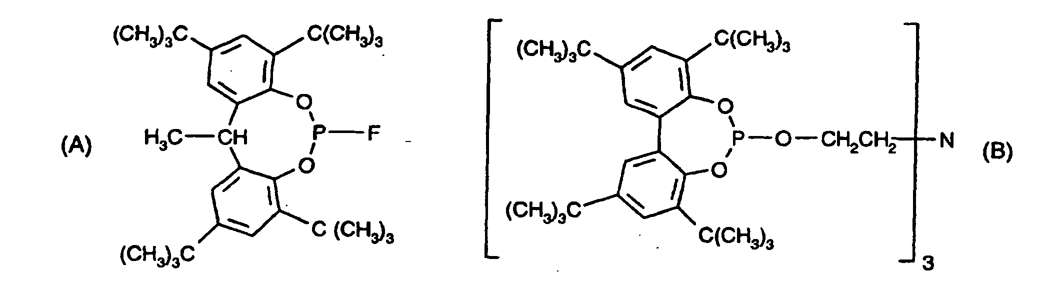

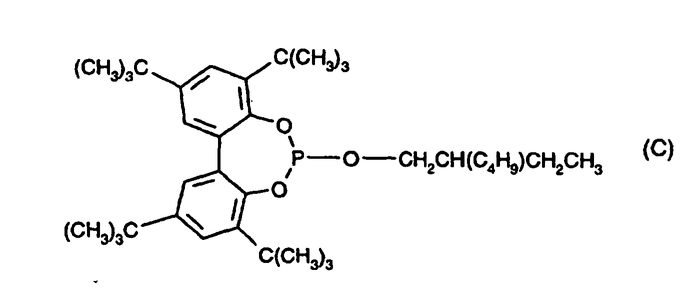

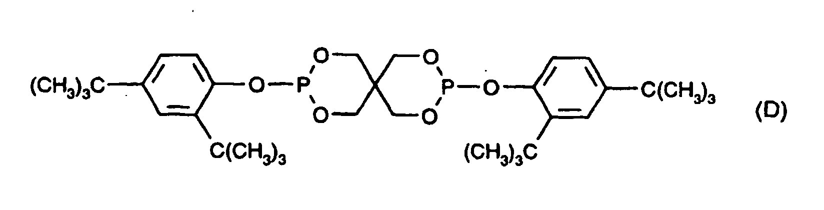

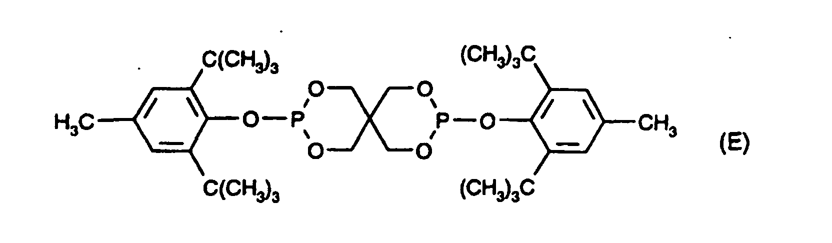

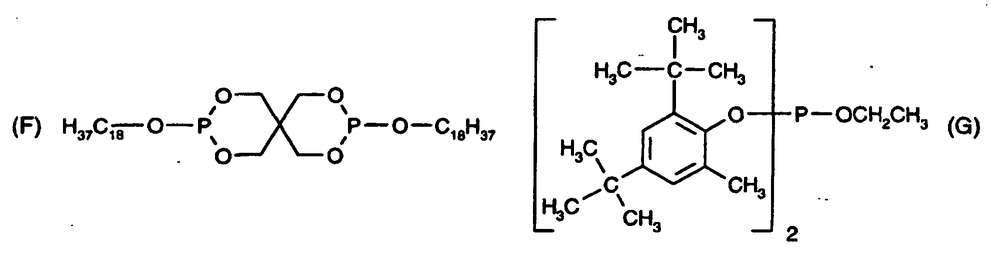

5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecyinitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

7. Thiosynergists, for example dilauryl thiodipropionate or distearyl thiodipropionate.

8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

9. Polyamide stabilisers, for example copper salts in combination with iodides and/or phosphorus compounds and salts of divalent manganese.

10. Basic co-stabilisers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.

12. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.

13. Other additives, for example plasticisers, lubricants, emulsifiers, pigments, rheology additives, catalysts, flow-control agents, optical brighteners, flameproofing agents, antistatic agents and blowing agents.

14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy) phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.

A preferred agricultural article additionally contains an aliphatic poly hydroxy-carboxyl acid, in particular citric acid.

An aliphatic poly hydroxy-carboxyl acid is in particular an aliphatic acid having either more than one -OH or more than one -COOH group in the organic acid. Examples are the aliphatic, dihydroxy, monocarboxyl acids, such as glyoxylic acid and glyceric acid; the aliphatic, polyhydroxy, monocarboxyl acids, such as erythric acid, arabic acid or mannitic acid; the aliphatic, monohydric, dicarboxyl acids, such as tartronic acid or malic acid; the aliphatic, dihydroxy, dicarboxyl acids, such as tartaric acid; the aliphatic, polyhydroxy, dicarboxyl acids, such as trihydroxyglutaric acid and succharic acid; and the aliphatic, monohydroxy, tricarboxyl acids, such as citric acid.

A further preferred embodiment of this invention relates to an agricultural article which contains in addition one or more of the following components
(IV) an antioxidant,
(V) an UV absorber,
(VI) a filler,
(VII) a pigment,
(VIII) an inorganic or organic salt of Ca, Mg, Zn or Al.

Preferred antioxidants (component IV)) are those which are described above under item 1.

Suitable examples of fillers (component (VI)) are those described above under item 12. Preferred fillers are inorganic or synthetic carbonates, nepheline syenite, talc, magnesium hydroxide, aluminum trihydrate, diatomaceous earth, mica, natural or synthetic silica and calcinated clay.

Examples of the UV absorber (component (V)) are a 2-(2'-hydroxyphenyl)benzotriazole, a 2-hydroxybenzophenone, an ester of substituted or unsubstituted benzoic acid, an acrylate, an, oxamide, a 2-(2-hydroxyphenyl)-1,3,5-triazine, a monobenzoate of resorcinol or a formamidine.

The 2-(2'-hydroxyphenyl)benzotriazole is e.g. 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'--methylene-bis[4-(1,1,3,3-tetramethylbutyl)-6-benzotriazole-2-ylphenol] or the transesterification product of 2-[3-tert-butyl-5'-(2-methoxycarbonylethyl)-2'-hydroxyphenyl]-2H-benzotriazole with polyethylene glycol 300; [R-CH₂CH₂-COO(CH₂)₃-]₂ where R = 3'-tert-butyl-4'-hydroxy-5'-2H-benzotriazol-2-ylphenyl.

2-(3',5'-Di-tert-butyl-2'-hydroxyphenyl)-5-chloro-benzotriazole, 2-(3'-tert-butyl-2'-hydroxy-5'-methylphenyl)-5-chloro-benzotriazole and 2-(3',5'-di-tert-amyl-2'-hydroxyphenyl)-benzotriazole are preferred.

The 2-hydroxybenzophenone is for example the 4-hydroxy, 4-methoxy, 4-octyloxy, 4-decyloxy, 4-dodecyloxy, 4-benzyloxy, 4,2',4'-trihydroxy or 2'-hydroxy-4,4'-dimethoxy derivatives.

2-Hydroxy-4-octyloxybenzophenone is preferred.

The ester of a substituted or unsubstituted benzoic acid is for example 4-tert-butyl-phenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate or 2-methyl-4,6-di-tert-butylphenyl 3,5-di-tert-butyl-4-hydroxybenzoate.

2,4-Di-tert-butylphenyl 3,5-di-tert-butyl-4-hydroxybenzoate and hexadecyl 3,5-di-tert-butyl-4-hydroxybenzoate are preferred.

The acrylate is for example ethyl α-cyano-β,β-diphenylacrylate, isooctyl α-cyano-β,β-di-phenylacrylate, methyl α-carbomethoxycinnamate, methyl α-cyano-β-methyl-p-methoxycinnamate, butyl α-cyano-β-methyl-p-methoxy-cinnamate, methyl α-carbomethoxy-p-methoxycinnamate or N-(β-carbomethoxy-β-cyanovinyl)-2-methylindoline.

The oxamide is for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide or its mixture with 2-ethoxy-2'-ethyl-5,4'-di-tert-butoxanilide or mixtures of ortho- and para-methoxy-disubstituted oxanilides or mixtures of o- and p-ethoxy-disubstituted oxanilides.

The 2-(2-hydroxyphenyl)-1,3,5-triazine is for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2--hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine or 2-[2-hydroxy-4-(2-ethylhexyloxy)phenyl]-4,6-bis[4-phenylphenyl]-1,3,5-triazine.

2-(2-Hydroxy-4-octyloxyphenyl)-4,6-bis(2,4-dimethylphenyl)-1,3,5-triazine, 2-(2-hydroxy-4-hexyloxy)phenyl-4,6-diphenyl-1,3,5-triazine and 2-[2-hydroxy-4-(2-ethylhexyloxy)phenyl]-4,6-bis[4-phenylphenyl]-1,3,5-triazine are preferred.

The monobenzoate of resorcinol is for example the compound of the formula

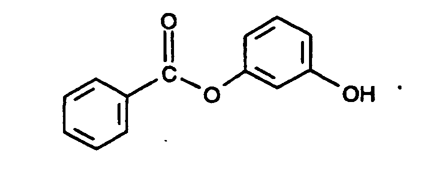

The formamidine is for example the compound of the formula

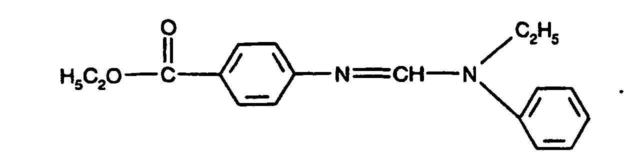

The UV absorber is in particular a 2-(2'-hydroxyphenyl)benzotriazole, a 2-hydroxybenzophenone or a hydroxyphenyltriazine.

The pigment (component (VII)) may be an inorganic or organic pigment.

Examples of inorganic pigments are titanium dioxide, zinc oxide, carbon black, cadmium sulfide, cadmium selenide, chromium oxide, iron oxide, lead oxide and so on.

Examples of organic pigments are azo pigments, anthraquinones, phthalocyanines, tetrachloroisoindolinones, quinacridones, isoindolines, perylenes, pyrrolopyrroles (such as Pigment Red 254) and so on.

All pigments described in "Gächter/Müller: Plastics Additives Handbook, 3rd Edition, Hanser Publishers, Munich Vienna New York", page 647 to 659, point 11.2.1.1 to 11.2.4.2 can be used as component (VII).

Particularly preferred pigments are titanium dioxide or carbon black, optionally in combination with an organic pigment.

Examples of such organic pigments are:

C.I. (Colour Index) Pigment Yellow 93, C.I. Pigment Yellow 95, C.I. Pigment Yellow 138, C.I. Pigment Yellow 139, C.I. Pigment Yellow 155, C.I. Pigment Yellow 162, C.I. Pigment Yellow 168, C.I. Pigment Yellow 180, C.I. Pigment Yellow 183, C.I. Pigment Red 44, C.I. Pigment Red 170, C.I. Pigment Red 202, C.I. Pigment Red 214, C.I. Pigment Red 254, C.I. Pigment Red 264, C.I. Pigment Red 272, C.I. Pigment Red 48:2, C.I. Pigment Red 48:3, C.I. Pigment Red 53:1, C.I. Pigment Red 57:1, C.I. Pigment Green 7, C.I. Pigment Blue 15:1, C.I. Pigment Blue 15:3 and C.I. Pigment Violet 19.

The organic salt of calcium, magnesium, zinc or aluminum defined in component (VII) is preferably a compound of the formula MeL₂, in which Me is calcium, magnesium or zinc, or a compound of the formula AIL₃. L is an anion of an organic acid or of an enol. The organic acid can, for example, be a sulfonic acid, sulfinic acid, phosphonic acid or phosphinic acid, but is preferably a carboxylic acid. The acid can be aliphatic, aromatic, araliphatic or cycloaliphatic; it can be linear or branched; it can be substituted by hydroxyl or alkoxy groups; it can be saturated or unsaturated and it preferably contains 1 to 24 carbon atoms.

Examples of carboxylic acids of this type are formic, acetic, propionic, butyric, isobutyric, caprioic, 2-ethylcaproic, caprylic, capric, lauric, palmitic, stearic, behenic, oleic, lactic, ricinoleic, 2-ethoxypropionic, benzoic, salicylic, 4-butylbenzoic, toluic, 4-dodecylbenzoic, phenylacetic, naphthylacetic, cyclohexanecarboxylic, 4-butylcyclohexanecarboxylic or cyclohexylacetic acid. The carboxylic acid can also be a technical mixture of carboxylic acids, for example technical mixtures of fatty acids or mixtures of alkylated benzoic acids.

Examples of organic acids containing sulfur or phosphorus are methanesulfonic, ethanesulfonic, α,α-dimethylethanesulfonic, n-butanesulfonic, n-dodecanesulfonic, benzenesulfonic, toluenesulfonic, 4-nonylbenzenesulfonic, 4-dodecylbenzenesulfonic or cyclohexanesulfonic acid, dodecanesulfinic, benzenesulfinic or naphthalenesulfinic acid, butylphosphonic acid, phenylphosphonic acid, monomethyl or monoethyl phenylphosphonate, monobutyl benzylphosphonate, dibutylphosphinic acid or diphenylphosphinic acid.

If L is an enolate anion, it is preferably an anion of a β-dicarbonyl compound or of an o-acylphenol. Examples of β-dicarbonyl compounds are acetylacetone, benzoylacetone, dibenzoylmethane, ethyl acetoacetate, butyl acetoacetate, lauryl acetoacetate or α-acetylcyclohexanone. Examples of o-acylphenols are 2-acetylphenol, 2-butyroylphenol, 2-acetyl-1-naphthol, 2-benzoylphenol or salicylaldehyde. The enolate is preferably the anion of a β-dicarbonyl compound having 5 to 20 carbon atoms.

Organic salts of zinc or magnesium are preferably an acetylacetonate or an aliphatic monocarboxylate having, for example, 1 to 24 carbon atoms. Magnesium acetate, laurate and stearate, zinc formate, acetate, oenanthate, laurate and stearate as well as zinc acetylacetonate and magnesium acetylacetonate are some of the particular preferred examples.

Zinc stearate, magnesium stearate, zinc acetylacetonate, magnesium acetylacetonate, zinc acetate and magnesium acetate are of special interest.

The inorganic salt of zinc, magnesium or aluminum is for example
a carbonate containing compound such as
- Zn-hydroxide-carbonate, Mg-hydroxide-carbonate, dolomite, e.g a Ca/Mg carbonate such as Microdol Super (RTM) from Micro Minerals (RTM); or
- a natural or synthetic hydrotalcite.

The natural hydrotalcite is held to possess a structure Mg₆Al₂(OH)₁₆CO₃ · 4 H₂O. A typical empirical formula of a synthetic hydrotalcite is

Al₂Mg_{4.35}OH_{11.36}CO_{3(1.67)} · x H₂O.

Examples of the synthetic product include:

Mg_{0.7}Al_{0.3}(OH)₂(CO₃)_{0.15} · 0.54 H₂O,

Mg_{4.5}Al₂(OH)₁₃CO₃ · 3.5 H₂O,

or

Mg_{4.2}Al(OH)_{12.4}CO₃.

Preferred synthetic hydrotalcites are L-55R II (RTM) from REHEIS (RTM) as well as ZHT-4A (RTM) and DHT-4A (RTM) from Kyowa Chemical Industry Co (RTM).

Component (VII) can also be a mixture of two different Mg- and/or Zn- compounds, for example
- Mg-stearate and hydrotalcite (DHT-4A (RTM)),
- Zn-stearate and hydrotalcite (DHT-4A (RTM)),
- Mg-acetylacetonate and hydrotalcite (DHT-4A (RTM)),
- Mg-oxide and hydrotalcite (DHT-4A (RTM)),
- Mg-hydroxide and hydrotalcite (DHT-4A (RTM)),
- Zn-hydroxide-carbonate and Mg-stearate,
- Zn-hydroxide-carbonate and Zn-stearate,
- Zn-hydroxide-carbonate and Mg-acetylacetonate,
- Zn-hydroxide-carbonate and Mg-oxide,
- Zn-hydroxide-carbonate and Zn-oxide,
- Zn-hydroxide-carbonate and Mg-hydroxide,
- hydrotalcite (REHEIS (RTM)) and Mg-stearate,
- hydrotalcite (REHEIS (RTM)) and Zn-stearate,
- hydrotalcite (REHEIS (RTM)) and Mg-oxide,
- dolomite (Microdol Super (RTM)) and Zn-stearate,
- dolomite (Microdol Super (RTM)) and Mg-stearate,
- dolomite (Microdol Super (RTM)) and Zn-oxide,
- dolomite (Microdol Super (RTM)) and Mg-hydroxide,
- Mg-stearate and Zn-stearate,
- Mg-stearate and Zn-acetylacetonate,
- Mg-stearate and Mg-oxide,
- Mg-stearate and Zn-oxide,
- Mg-stearate and Mg-hydroxide,
- Zn-stearate and Mg-acetate,
- Zn-stearate and Mg-oxide,
- Zn-stearate and Mg-hydroxide,
- Mg-acetylacetonate and Zn-acetylacetonate,
- Mg-acetylacetonate and Mg-oxide,
- Mg-acetylacetonate and Zn-oxide,
- Mg-acetylacetonate and Mg-hydroxide,
- Zn-acetylacetonate and Mg-oxide,
- Zn-acetylacetonate and Zn-oxide, or
- Mg-oxide and Zn-oxide.

In this case, the two different compounds of component (VII) may be present in a weight ratio of 1:10 to 10:1.

According to a preferred embodiment of this invention component (VII) is selected from the group consisting of Mg carboxylates, Zn carboxylates, Al carboxylates, Mg oxides, Zn oxides, Al oxides, Mg hydroxides, Zn hydroxides, Al hydroxides, Mg carbonates, Zn carbonates or Al carbonates.

Preferred examples of component (VII) as an organic salt of Ca are carboxylates such as Ca-stearate, Ca-laurate, Ca-lactate and Ca-stearoyl-lactate.

Examples of component (VII) as an inorganic salt of Ca are CaO, Ca(OH)₂, CaCO₃, CaCl₂, CaF₂, Ca₃(PO₄)₂, CaHPO₄, Ca(PO₃)₂, Ca₂P₂O₇, CaSO₄ and CaSiO₃.

According to another preferred embodiment of this invention component (VII) is a Ca carboxylate, a Mg carboxylate, a Zn carboxylate or a hydrotalcite.

Components (II) and (III) and optionally components (IV) to (VIII) may be added to the organic polymer either individually or mixed with one another.

Components (II) and (III) and optionally components (IV) to (VIII) are present in the organic polymer in an amount suitable to obtain a sufficient weathering resistance and to initiate a controlled degradation at a desired moment.

The possibility of lifetime control is fundamental for agricultural articles. The article has to keep its properties and its performance during the service and degradation has to take place when the function of the article is finished. Service lifetimes can vary dramatically depending on the country, crop, type of film, season and many other variables. However, degradation has to lead to complete disappearance of the plastic according to the farmer practices.

The main components being present in the organic polymer are one or more prodegradant additives (component (II)) and one or more stabilizers (components (III) to (VIII)). By appropriately dosing the amount of prodegradant and the amount of stabilizer, the required service periods and time to disappearance can be obtained.

Component (II) may be present in the organic polymer in an amount of, for example, 0.005 to 10 % or 0.005 to 5 %, preferably 0.005 to 1 %, in particular 0.03 to 0.4 %, relative to the weight of the organic polymer.

Component (III) may be present in the organic polymer in an amount of, for example 0.01 to 20 % or 0.01 to 10 % or 0.01 to 5 %, preferably 0.01 to 1.5 %, in particular 0.05 to 1.2 %, relative to the weight of the organic polymer.

Component (IV) may be present in the organic polymer in an amount of preferably 0.005 to 1 %, in particular 0.01 to 0.3 %, relative to the weight of the organic polymer.

Component (V) may be present in the organic polymer in an amount of preferably 0.01 to 5 %, in particular 0.1 to 2 %, relative to the weight of the organic polymer.

Component. (VI) may be present in the organic polymer in an amount of preferably 0.05 to 80 %, in particular 0.5 to 70 %, relative to the weight of the organic polymer.

Component (VII) may be present in the organic polymer in an amount of preferably 0.05 to 40 %, in particular 0.5 to 30 %, relative to the weight of the organic polymer.

Component (VIII) may be present in the organic polymer in an amount of preferably 0.005 to 5 %, in particular 0.05 to 1 %, relative to the weight of the organic polymer.

The total amount of the components (III) to (VIII) being present in the organic polymer is preferably 0.15 to 90 %, in particular 1.2 to 80 %, relative to the weight of the organic polymer.

The weight ratio of the components (ll):(lll) may be for example 0.0003:1 to 1000:1 or 0.003:1 to 100:1, in particular 0.025:1 to 8:1.

The weight ratio of the components (II):(IV) may be for example 0.005:1 to 200:1, in particular 0.1:1 to 40:1.

The weight ratio of the components (II):(V) may be for example 0.001:1 to 100:1, in particular 0.015:1 to 4:1.

The weight ratio of the components (II):(VI) may be for example 0.0001:1 to 20:1, in particular 0.0004:1 to 1.0:1.

The weight ratio of the components (II):(VII) may be for example 0.001:1 to 200:1, in particular 0.015:1 to 8:1.

The weight ratio of the components (II):(VIII) may be for example 0.001:1 to 200:1, in particular 0.015:1 to 8:1.

The above components can be incorporated into the organic polymer to be stabilized in a controlled form by known methods, for example before or during shaping or by applying the dissolved or dispersed compounds to the organic polymer, if necessary with subsequent evaporation of the solvent. The components can be added to the organic polymer in the form of a powder, granules or a masterbatch, which contains these components in, for example, a concentration of from 2.5 to 25 % by weight.

If desired, the components (II) and (III) and optionally (IV) to (VIII) can be blended with each other before incorporation into the organic polymer. They can be added to the polymer before or during the polymerization or before the crosslinking.

The agricultural articles according to the present invention may be for example mulch films, small tunnel films and banana bags. Direct covers, nonwoven, twines and pots for agricultural use are also of interest.

Mulch films represent a particular preferred embodiment of the present invention.

Mulch films are used to protect crops in the early stages of their development. Mulch films, depending on the type of crop and on the purpose, can be laid after the seeding or at the same time as the seeding. They protect the crop until the crop has reached a certain development stage. When the harvest is finished, the field is prepared for another cultivation.

Standard plastic films have to be collected and disposed in order to allow the new cultivation. The additive systems of the present invention (components (II) to (VIII)), when added to the standard plastic mulch films, allow the film to keep its properties until the crop has reached the required development, then degradation starts and the film is completely embrittled when the new cultivation has to be started.

The length of the service period and of the time to degradation and time to complete disappearance depends on the type of crop and on the environmental conditions. Depending on the specific time requirements, the additive combinations are designed.

The main components of the present additive system are a prodegradant additive (component (II)) and a weathering stabilizer (component (III)). By appropriately dosing the amount of the prodegradant and the amount of the weathering stabilizer, the required service periods and time to degradation and disappearance can be obtained. Examples of typical life times of mulch films are 10 to 180 days, lifes up to 24 months can also be required and achieved.

Thus, a further preferred embodiment of the present invention is a mulch film containing the components (I), (II) and (III) as defined above and having a life time of 10 to 720 days.

Mulch films can be mono or multilayer (preferably three layers), transparent or appropriately pigmented (white, black, silver, green, brown) on the base of the agronomic needs.

The thickness of the mulch films can range, for example, between 5 to 100 microns. Films from 10 to 60 microns are preferred.

The example below illustrates the invention in greater detail. All percentages and parts are by weight, unless stated otherwise.

### Example 1:

Each compound of the list reported below is mixed via master batch, in a slow mixer, with low density polyethylene (LDPE) pellets (Riblene FF 29 (RTM), supplied by Polimeri Europa(RTM); characterized by a density of 0.921 g/cm³ and a melt flow index of 0.60 at 190°C and 2.16 Kg), and with linear low density polyethylene (LLDPE) pellets (Clearflex FG308 (RTM), supplied by Polimeri Europa (RTM); characterized by a density of 0.924 g/cm³ and a melt flow index of 0.97 at 190°C and 2.16 Kg). The ratio LDPE/LLDPE is 1:4.

The mixture is blown at 210°C and films of 12 and 25 microns thickness are obtained.

The films are exposed outdoors in Pontecchio Marconi (Bologna, Italy) according to the below reported procedure to simulate mulch films conditions. Total irradiation in the location is 110 Klys/year.

Plastic boxes are filled with soil; the film is laid on the soil in the box, one part of the film being exposed to the light and another part being covered by the soil. The boxes can be exposed outdoors in July. During the exposure, the films are periodically checked visually and the time to start of degradation (fessuration) and to embrittlement (= very fragile film = end of the life time) is registered.

The results are indicated in Tables 1 to 4.

**Table 1:**

| Films without pigment, 25 microns thick. | | | | |
|---|---|---|---|---|
| Cobalt Stearate % | 1:1 Mixture of Stabilizer (A-1-a) and Stabilizer (C-1-a-1) % | Stabilizer (A-1-a) % | Days to fessuration | Days to embrittlement |
| Without | Without | Without | 92 | 350 |
| 0.13 | 0.05 | Without | 39 | 67 |
| 0.13 | Without | 0.2 | 52 | 108 |

**Table 2:**

| Films without pigment, 12 microns thick. | | | |
|---|---|---|---|
| Cobalt Stearate % | 1:1 Mixture of Stabilizer (A-1-a) and Stabilizer (C-1-a-1) % | Days to fessuration | Days to embrittlement |
| 0.13 | 0.05 | 43 | 65 |
| 0.13 | 0.2 | 43 | 128 |

**Table 3:**

| Films with 3 % of carbon black, 25 microns thick. | | | |
|---|---|---|---|
| Cobalt Stearate % | 1:1 Mixture of Stabilizer (A-1-a) and Stabilizer (C-1-a-1) % | Days to fessuration | Days to embrittlement |
| Without | Without | 120 | 410 |
| 0.13 | 0.6 | 57 | 79 |

**Table 4:**

| Films with 3 % of carbon black, 12 microns thick. | | | |
|---|---|---|---|
| Cobalt Stearate % | 1:1 Mixture of Stabilizer (A-1-a) and Stabilizer (C-1-a-1) % | Days to fessuration | Days to embrittlement |
| 0.13 | 0.2 | 36 | 57 |
| 0.13 | 0.6 | 53 | 75 |

### Stabilizer (A-1-a):

### TINUVIN 622 (RTM)

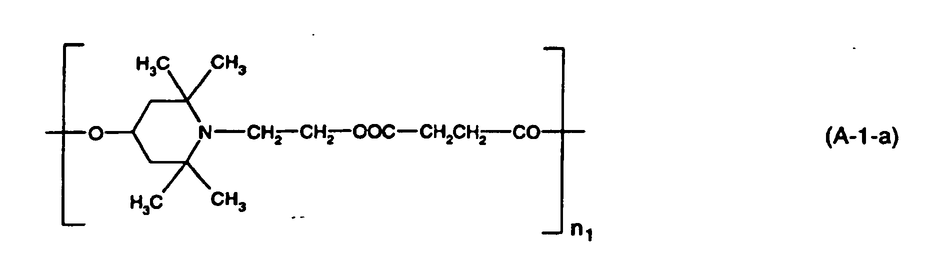

wherein n₁ is a number from 2 to 20.

### Stabilizer (C-1-a-1):

### CHIMASSORB 944 (RTM)

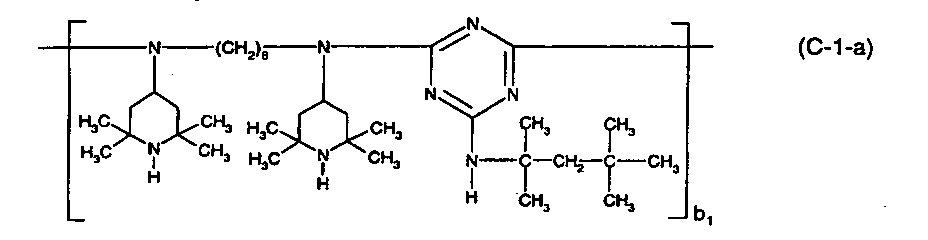

wherein b₁ is a number from 2 to 20.

## Claims

1. An agricultural article comprising the components
(I) an organic polymer,
(II) an organic salt of Fe, Ce, Co, Mn, Cu or Vd, and
(III) one or more sterically hindered amine compounds selected from the group consisting of
a compound of the formula (A-1) 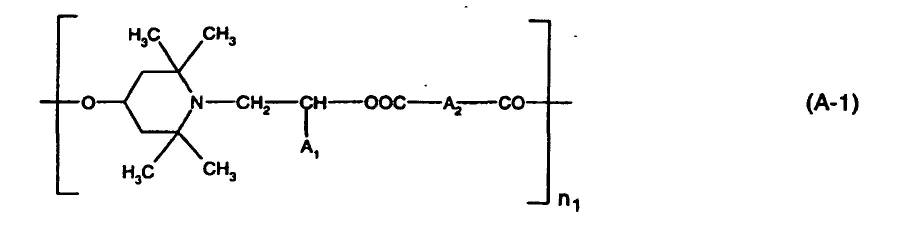 wherein
A₁ is hydrogen or C₁-C₄alkyl,
A₂ is a direct bond or C₁-C₁₀alkylene, and
n₁ is a number from 2 to 50;
at least one compound of the formulae (A-2-a) and (A-2-b) 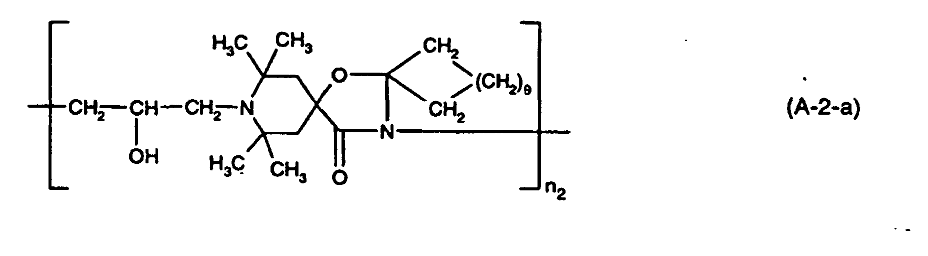 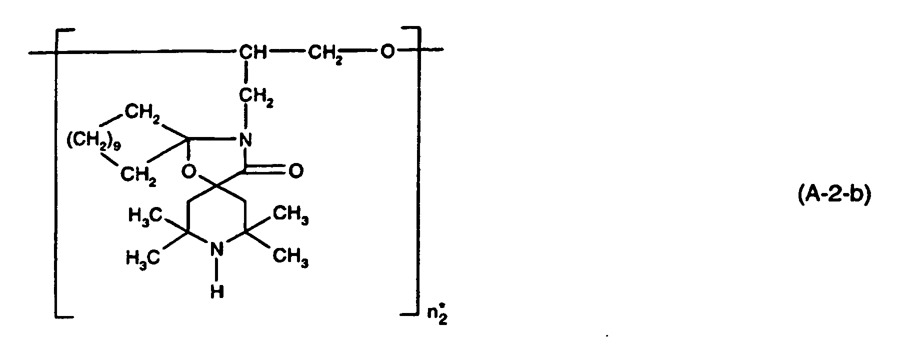 wherein
n₂ and n₂* are a number from 2 to 50;
a compound of the formula (A-3) 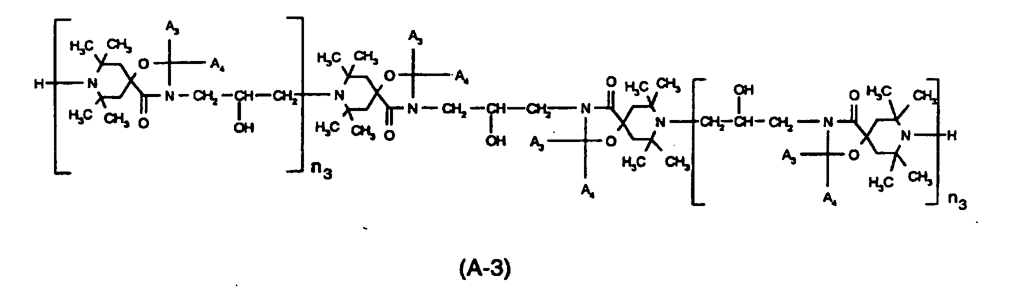 wherein
A₃ and A₄ independently of one another are hydrogen or C₁-C₈alkyl, or A₃ and A₄ together form a C₂-C₁₄alkylene group, and
the variables n₃ independently of one another are a number from 1 to 50;
a compound of the formula (A-4) 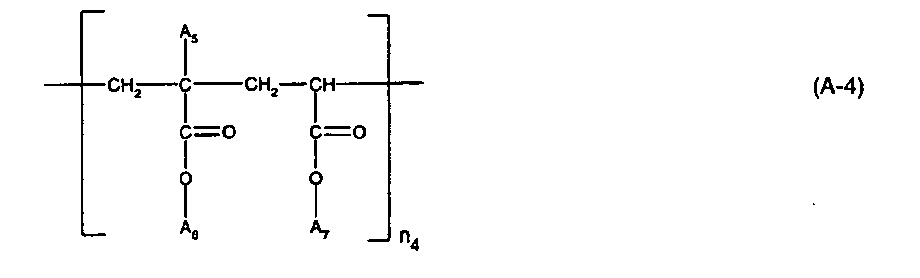 wherein
n₄ is a number from 2 to 50,
A₅ is hydrogen or C₁-C₄alkyl,
the radicals A₆ and A₇ independently of one another are C₁-C₄alkyl or a group of the formula (a-I) 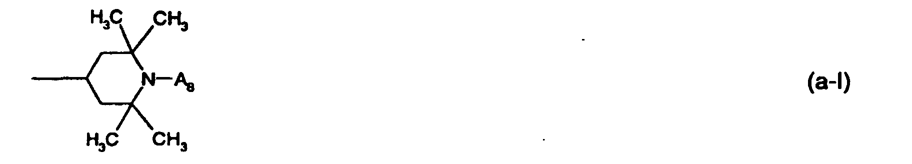 wherein A₈ is hydrogen, C₁-C₈alkyl, -O⁻, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
with the proviso that at least 50 % of the radicals A₇ are a group of the formula (a-I);
a compound of the formula (B-1) 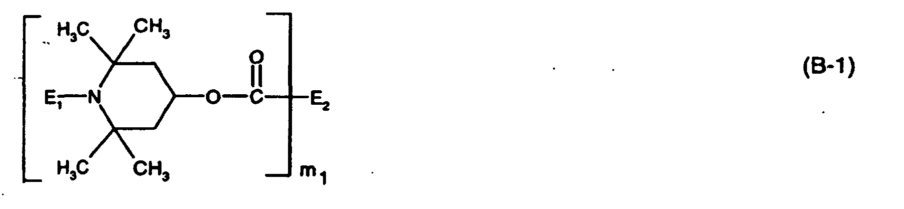 in which
E₁ is hydrogen, C₁-C₈alkyl, -O⁻, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
m₁ is 1, 2 or 4,
if m₁ is 1, E₂ is C₁-C₂₅alkyl,
if m₁ is 2, E₂ is C₁-C₁₄alkylene or a group of the formula (b-I) 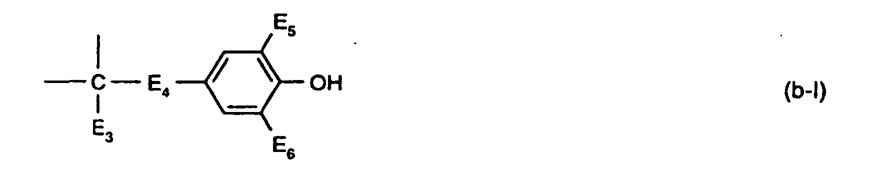 wherein E₃ is C₁-C₁₀alkyl or C₂-C₁₀alkenyl, E₄ is C₁-C₁₀alkylene, and
E₅ and E₆ independently of one another are C₁-C₄alkyl, cyclohexyl or
- methylcyclohexyl, and
if m₁ is 4, E₂ is C₄-C₁₀alkanetetrayl;
a compound of the formula (B-2) 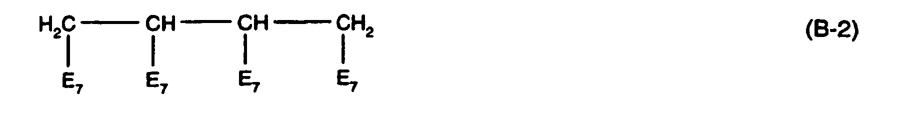 in which
two of the radicals E₇ are -COO-(C₁-C₂₀alkyl), and
two of the radicals E₇ are a group of the formula (b-II) 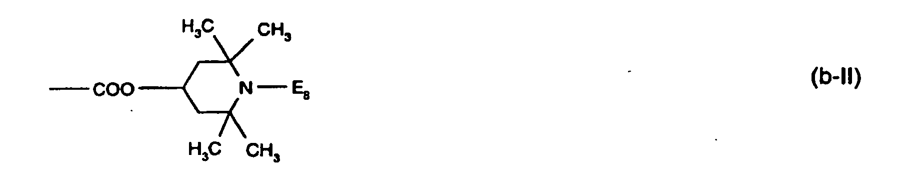 with E₈ having one of the meanings of E₁;
a compound of the formula (B-3) 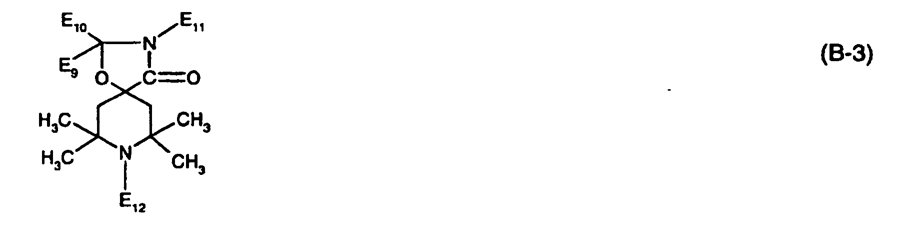 in which
E₉ and E₁₀ together form C₂-C₁₄alkylene,
E₁₁ is hydrogen or a group -Z₁-COO-Z₂,
Z₁ is C₂-C₁₄alkylene, and
Z₂ is C₁-C₂₄alkyl, and
E₁₂ has one of the meanings of E₁;
a compound of the formula (B-4) 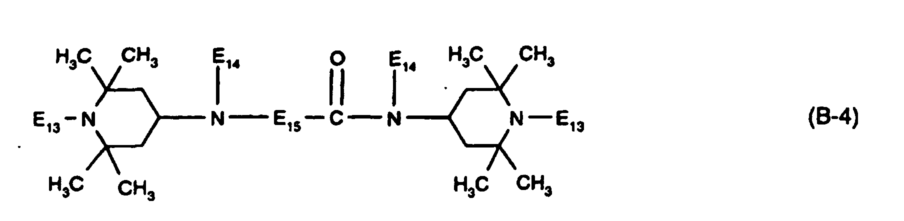 wherein
the radicals E₁₃ independently of one another have one of the meanings of E₁,
the radicals E₁₄ independently of one another are hydrogen or C₁-C₁₂alkyl, and E₁₅ is C₁-C₁₀alkylene or C₃-C₁₀alkylidene;
a compound of the formula (B-5) 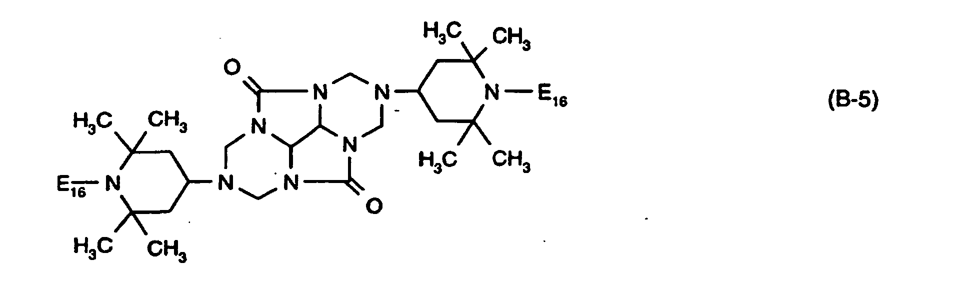 wherein
the radicals E₁₆ independently of one another have one of the meanings of E₁;
a compound of the formula (B-6) 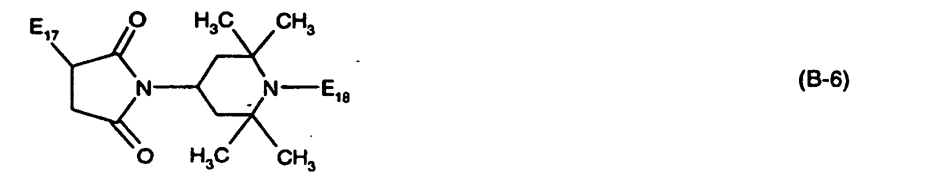 in which
E₁₇ is C₁-C₂₄alkyl, and
E₁₈ has one of the meanings of E₁;
a compound of the formula (B-7) 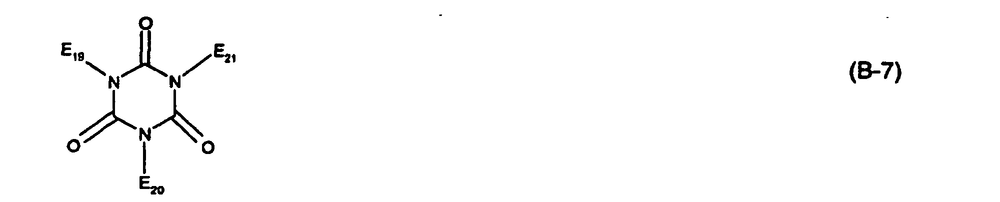 in which
E₁₉, E₂₀ and E₂₁ independently of one another are a group of the formula (b-III) 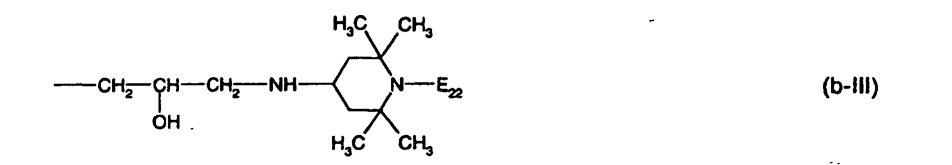 wherein E₂₂ has one of the meanings of E₁;
a compound of the formula (B-8) 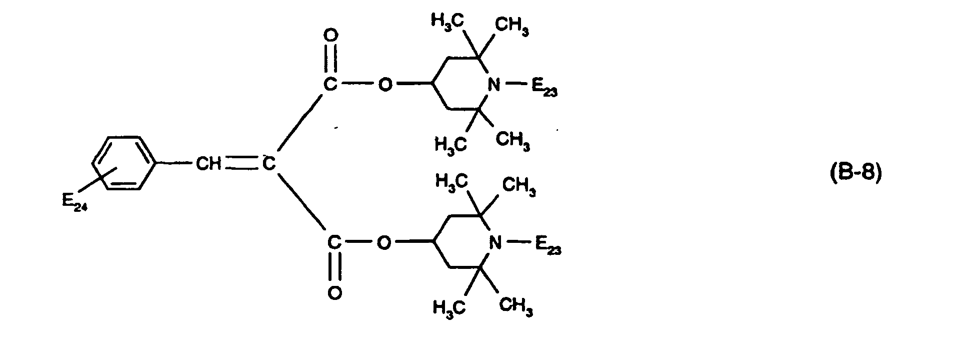 wherein
the radicals E₂₃ independently of one another have one of the meanings of E₁, and E₂₄ is hydrogen, C₁-C₁₂alkyl or C₁-C₁₂alkoxy;
a compound of the formula (B-9) 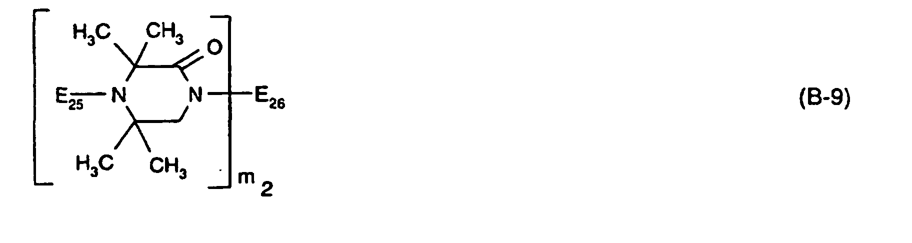 wherein
m₂ is 1, 2 or 3,
E₂₅ has one of the meanings of E₁, and
when m₂ is 1, E₂₆ is a group 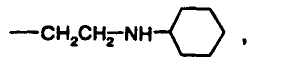 when m₂ is 2, E₂₆ is C₂-C₂₂alkylene, and
when m₂ is 3, E₂₆ is a group of the formula (b-IV) 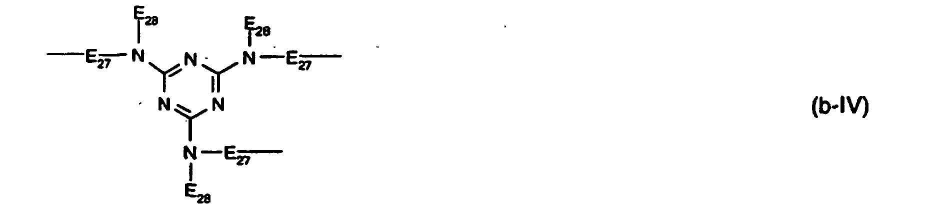 wherein the radicals E₂₇ independently of one another are C₂-C₁₂alkylene, and the radicals E₂₈ independently of one another are C₁-C₁₂alkyl or C₅-C₁₂cycloalkyl;
a compound of the formula (B-10) 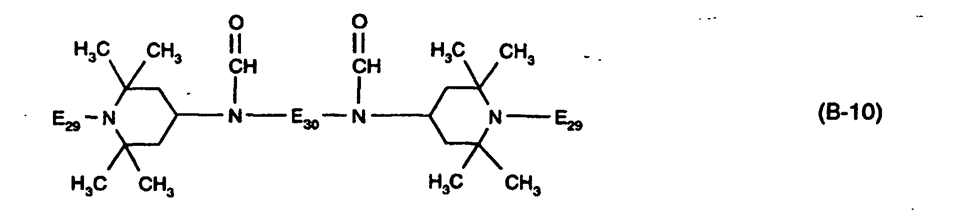 wherein
the radicals E₂₉ independently of one another have one of the meanings of E₁, and E₃₀ is C₂-C₂₂alkylene, C₅-C₇cycloalkylene, C₁-C₄alkylenedi(C₅-C₇cycloalkylene), phenylene or phenylenedi(C₁-C₄alkylene);
a compound of the formula (C-1) 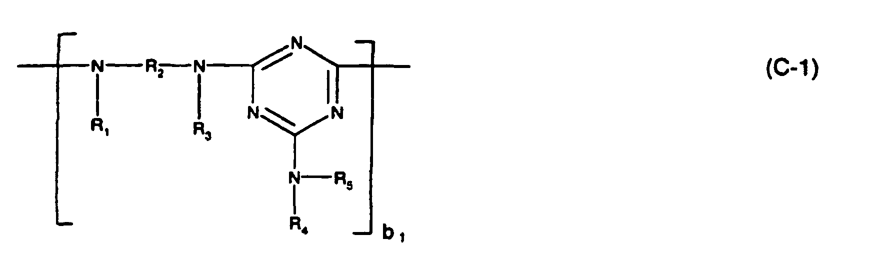 in which
R₁, R₃, R₄ and R₅ independently of one another are hydrogen, C₁-C₁₂alkyl, C₅-C₁₂cycloalkyl, C₁-C₄-alkyl-substituted C₅-C₁₂cycloalkyl, phenyl, phenyl which is substituted by -OH and/or C₁-C₁₀alkyl; C₇-C₉phenylalkyl, C₇-C₉phenylalkyl which is substituted on the phenyl radical by -OH and/or C₁-C₁₀alkyl; or a group of the formula (c-I) 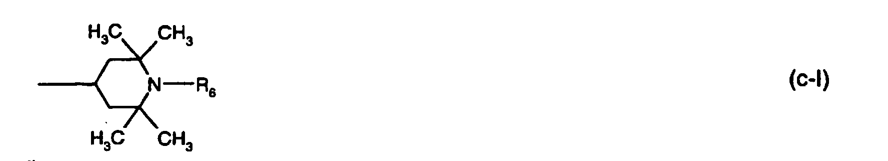 R₂ is C₂-C₁₈alkylene, C₅-C₇cycloalkylene or C₁-C₄alkylenedi(C₅-C₇cycloalkylene), or
the radicals R₁, R₂ and R₃, together with the nitrogen atoms to which they are bonded, perform a 5- to 10-membered heterocyclic ring, or
R₄ and R₅, together with the nitrogen atom to which they are bonded, form a 5- to 10-membered heterocyclic ring,
R₆ is hydrogen, C₁-C₈alkyl, -O⁻, -OH, -CH₂CN, C₁-C₁₈alkoxy, C₂-C₁₈alkoxy substituted by -OH; C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl, and
b₁ is a number from 2 to 50,
with the proviso that at least one of the radicals R₁, R₃, R₄ and R₅ is a group of the formula (c-I);
a compound of the formula (C-2) 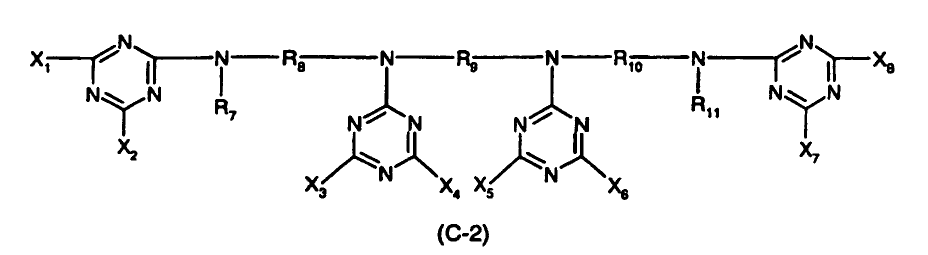 wherein
R₇ and R₁₁ independently of one another are hydrogen or C₁-C₁₂alkyl,
R₈, R₉ and R₁₀ independently of one another are C₂-C₁₀alkylene, and
X₁, X₂, X₃, X₄, X₅, X₆, X₇ and X₈ independently of one another are a group of the formula (c-II), 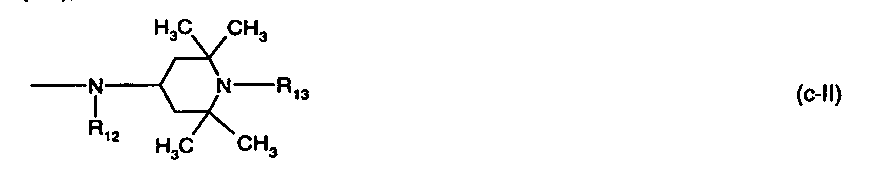 in which R₁₂ is hydrogen, C₁-C₁₂alkyl, C₅-C₁₂cycloalkyl, C₁-C₄alkyl-substituted C₅-C₁₂cycloalkyl, phenyl, -OH- and/or C₁-C₁₀alkyl-substituted phenyl, C₇-C₉phenylalkyl, C₇-C₉phenylalkyl which is substituted on the phenyl radical by -OH and/or C₁-C₁₀alkyl; or a group of the formula (c-l) as defined above, and
R₁₃ has one of the meanings of R₆;
a compound of the formula (C-3) 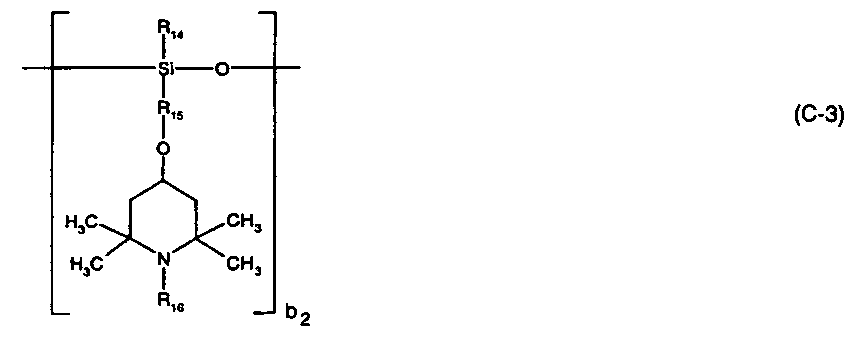 in which
R₁₄ is C₁-C₁₀alkyl, C₅-C₁₂cycloalkyl, C₁-C₄alkyl-substituted C₅-C₁₂cycloalkyl, phenyl or C₁-C₁₀alkyl-substituted phenyl,
R₁₅ is C₃-C₁₀alkylene,
R₁₆ has one of the meanings of R₆, and
b₂ is a number from 2 to 50;
a compound of the formula (C-4) 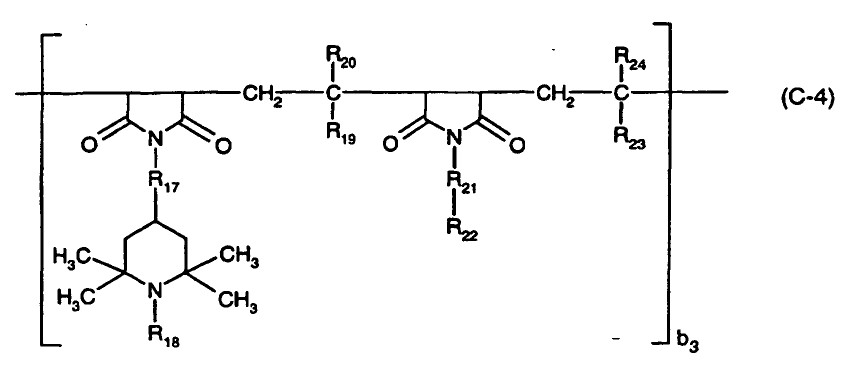 in which
R₁₇ and R₂₁ independently of one another are a direct bond or a -N(X₉)-CO-X₁₀-CO-N(X₁₁)-group, where X₉ and X₁₁ independently of one another are hydrogen, C₁-C₈alkyl, C₅-C₁₂cycloalkyl, phenyl, C₇-C₉phenylalkyl or a group of the formula (c-I),
X₁₀ is a direct bond or C₁-C₄alkylene,
R₁₈ has one of the meanings of R₆,
R₁₉, R₂₀, R₂₃ and R₂₄ independently of one another are hydrogen, C₁-C₃₀alkyl, C₅-C₁₂cycloalkyl or phenyl,
R₂₂ is hydrogen, C₁-C₃₀alkyl, C₅-C₁₂cycloalkyl, phenyl, C₇-C₉phenylalkyl or a group of the formula (c-l), and
b₃ is a number from 1 to 50;
a compound of the formula (C-5) 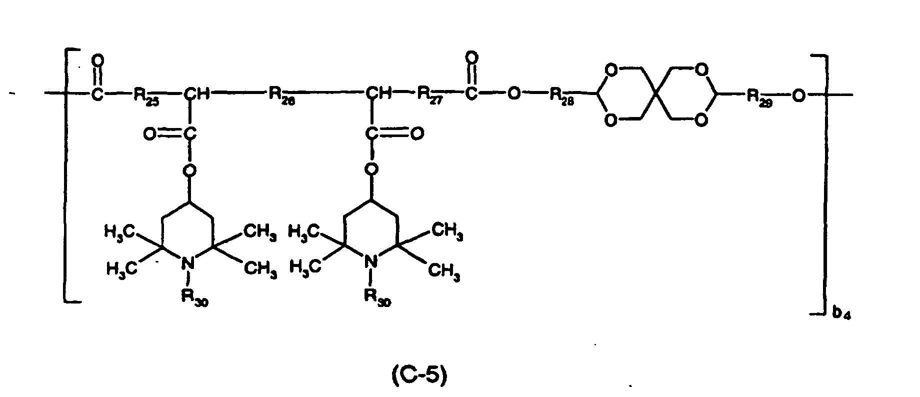 in which
R₂₅, R₂₆, R₂₇, R₂₈ and R₂₉ independently of one another are a direct bond or C₁-C₁₀alkylene,
R₃₀ has one of the meanings of R₆, and
b₄ is a number from 1 to 50; and
a product (C-6) obtainable by reacting a product, obtained by reaction of a polyamine of the formula (C-6-1) with cyanuric chloride, with a compound of the formula (C-6-2) 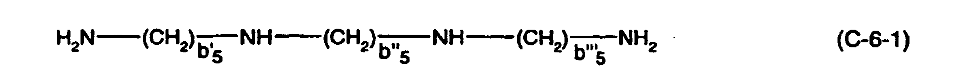 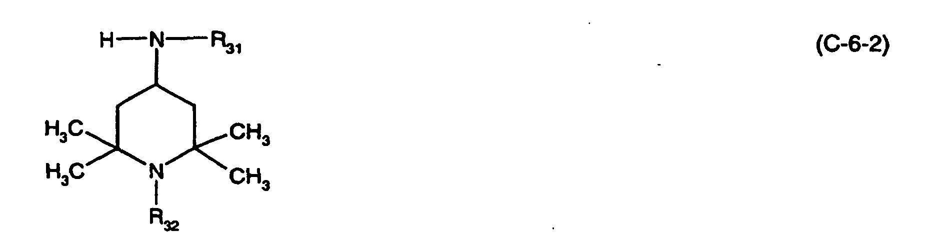 in which
b'₅, b"₅ and b'"₅ independently of one another are a number from 2 to 12,
R₃₁ is hydrogen, C₁-C₁₂alkyl, C₅-C₁₂cycloalkyl, phenyl or C₇-C₉phenylalkyl, and
R₃₂ has one of the meanings of R₆.

2. An agricultural article according to claim 1 wherein
component (I) is a polyolefin homo- or copolymer, a starch modified polyolefin, a starch based polymer composite or a biopolymer.

3. An agricultural article according to claim 1 wherein
component (I) is polyethylene, polypropylene, a polyethylene copolymer or a polypropylene copolymer.

4. An agricultural article according to claim 1 wherein
component (I) is a biopolymer selected from the group consisting of polycaprolactone, polylactic acid, polyglycolic acid, polyhydroxybutyrate-valerate, polybutylene succinate, polyvinyl alcohol, polyhydroxyalcanoate and polyethylene adipate.

5. An agricultural article according to claim 1 wherein
component (II) is a C₂-C₂₄carboxylate of Fe, Ce, Co, Mn, Cu or Vd.

6. An agricultural article according to claim 1 wherein
component (II) is a C₂-C₂₄carboxylate of Ce, Co or Mn.

7. An agricultural article according to claim 1 wherein
component (II) is a C₁₀-C₂₀ alkanoate of Ce, Co or Mn or a C₁₀-C₂₀alkenoate of Ce, Co or Mn.

8. An agricultural article according to claim 1 wherein
A₁ is hydrogen or methyl,
A₂ is a direct bond or C₂-C₆alkylene, and
n₁ is a number from 2 to 25;
n₂ and n₂* are a number from 2 to 25;
A₃ and A₄ independently of one another are hydrogen or C₁-C₄alkyl, or A₃ and A₄ together form a C₉-C₁₃alkylene group, and
the variables n₃ independently of one another are a number from 1 to 25;
n₄ is a number from 2 to 25,
A₅ and A₆ independently of one another are C₁-C₄alkyl, and
A₇ is C₁-C₄alkyl or a group of the formula (a-I)
with the proviso that at least 50 % of the radicals A₇ are a group of the formula (a-I);
m₁ is 1, 2 or 4,
if m₁ is 1, E₂ is C₁₂-C₂₀alkyl,
if m₁ is 2, E₂ is C₂-C₁₀alkylene or a group of the formula (b-I),
E₃ is C₁-C₄alkyl,
E₄ is C₁-C₆alkylene, and
E₅ and E₆ independently of one another are C₁-C₄alkyl, and
if m₁ is 4, E₂ is C₄-C₈alkanetetrayl;
two of the radicals E₇ are -COO-(C₁₀-C₁₅alkyl), and
two of the radicals E₇ are a group of the formula (b-II);
E₉ and E₁₀ together form C₉-C₁₃alkylene,
E₁₁ is hydrogen or a group -Z₁-COO-Z₂,
Z₁ is C₂-C₆alkylene, and
Z₂ is C₁₀-C₁₆alkyl;
E₁₄ is hydrogen, and
E₁₅ is C₂-C₆alkylene or C₃-C₅alkylidene;
E₁₇ is C₁₀-C₁₄alkyl;
E₂₄ is C₁-C₄alkoxy;
m₂ is 1, 2 or 3,
when m₂ is 1, E₂₆ is a group 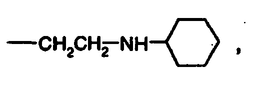 when m₂ is 2, E₂₆ is C₂-C₆alkylene, and
when m₂ is 3, E₂₆ is a group of the formula (b-IV)
the radicals E₂₇ independently of one another are C₂-C₆alkylene, and
the radicals E₂₈ independently of one another are C₁-C₄alkyl or C₅-C₈cycloalkyl; and
E₃₀ is C₂-C₈alkylene;
R₁ and R₃ independently of one another are a group of the formula (c-I),
R₂ is C₂-C₈alkylene,
R₄ and R₅ independently of one another are hydrogen, C₁-C₁₂alkyl, C₅-C₈cycloalkyl or a group of the formula (c-l), or the radicals R₄ and R₅, together with the nitrogen atom to which they are bonded, form a 5- to 10-membered heterocyclic ring, and
b₁ is a number from 2 to 25;
R₇ and R₁₁ independently of one another are hydrogen or C₁-C₄alkyl,
R₈, R₉ and R₁₀ independently of one another are C₂-C₄alkylene, and
X₁, X₂, X₃, X₄, X₅, X₆, X₇ and X₈ independently of one another are a group of the formula (c-II),
R₁₂ is hydrogen, C₁-C₄alkyl, C₅-C₈cycloalkyl or a group of the formula (c-I);
R₁₄ is C₁-C₄alkyl,
R₁₅ is C₃-C₆alkylene, and
b₂ is a number from 2 to 25;
R₁₇ and R₂₁ independently of one another are a direct bond or a group -N(X₉)-CO-X₁₀-CO-N(X₁₁)-,
X₉ and X₁₁ independently of one another are hydrogen or C₁-C₄alkyl,
X₁₀ is a direct bond,
R₁₉ and R₂₃ are C₁-C₂₅alkyl or phenyl,
R₂₀ and R₂₄ are hydrogen or C₁-C₄alkyl,
R₂₂ is C₁-C₂₅alkyl or a group of the formula (c-I), and
b₃ is a number from 1 to 25;
R₂₅, R₂₆, R₂₇, R₂₈ and R₂₉ independently of one another are a direct bond or
C₁-C₄alkylene, and
b₄ is a number from 1 to 25;
b'₅, b"₅ and b'"₅ independently of one another are a number from 2 to 4, and
R₃₁ is hydrogen, C₁-C₄alkyl, C₅-C₈cycloalkyl, phenyl or benzyl.

9. An agricultural article according to claim 1 wherein
component (III) is one or more sterically hindered amine compounds selected from the group consisting of the compounds of the formulae
(A-1-a), (A-2-a), (A-2-b), (A-3-a), (A-4-a),
(B-1-a), (B-1-b), (B-1-c). (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a); 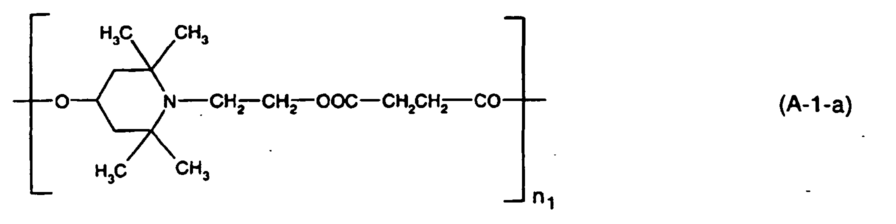 wherein n₁ is a number from 2 to 20; 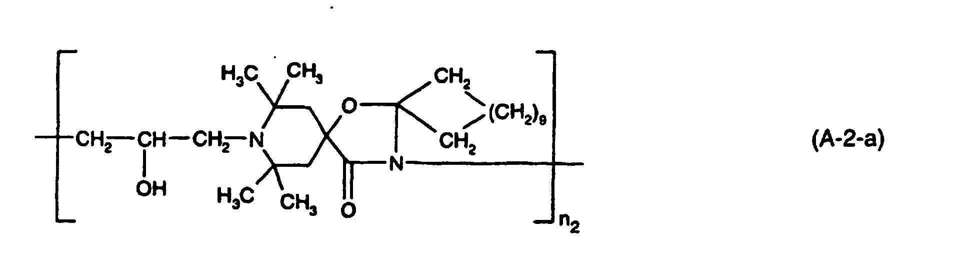 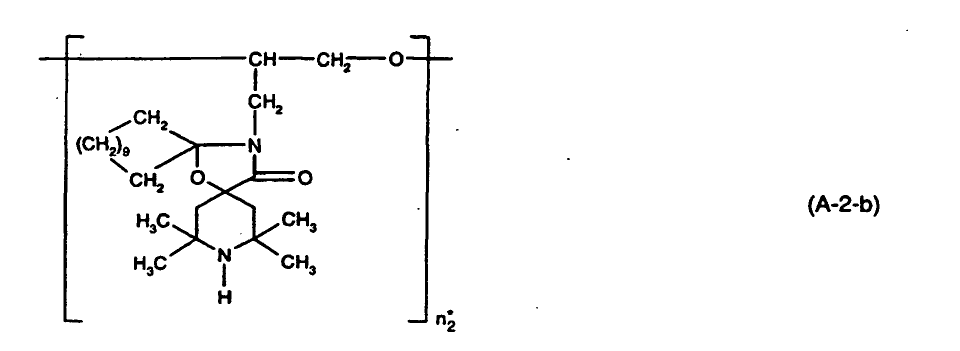 wherein n₂ and n₂* are a number from 2 to 20; 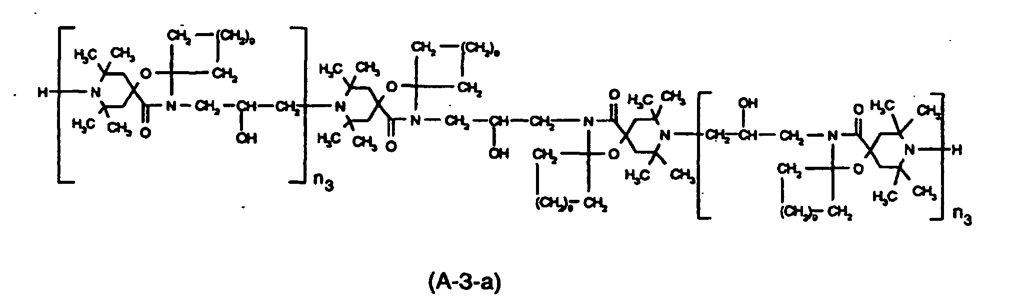 wherein the variables n₃ independently of one another are a number from 1 to 20; 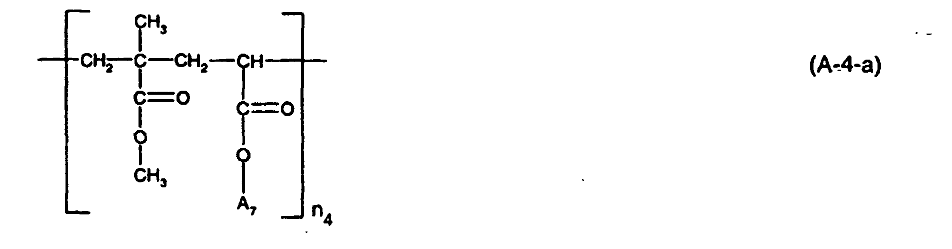 wherein n₄ is a number from 2 to 20, and
at least 50 % of the radicals A₇ are a group of the formula (a-I) 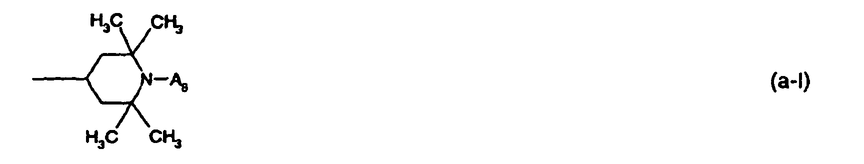 wherein A₈ is hydrogen, C₁-C₈alkyl, O⁻, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl,
and the remaining radicals A₇ are ethyl; 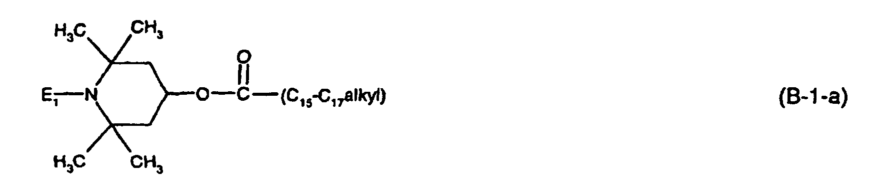 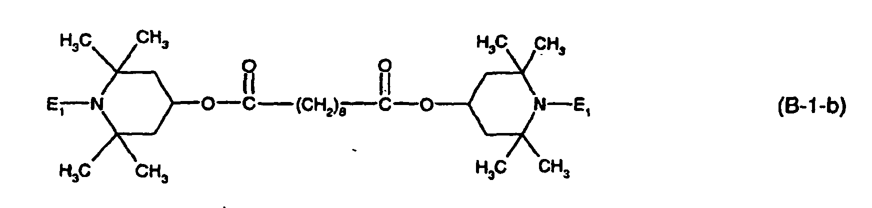 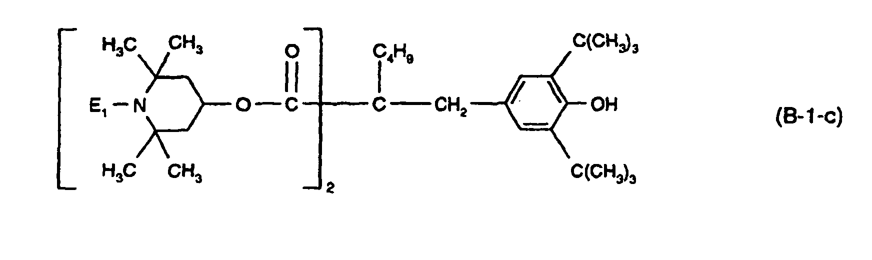 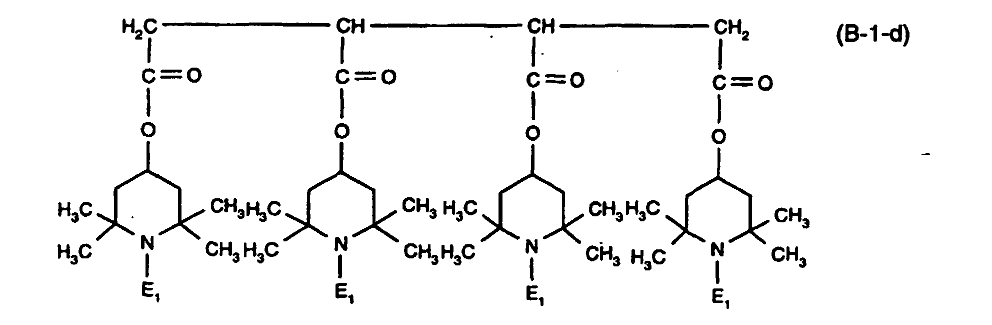 wherein E₁ is hydrogen, C₁-C₈alkg, O⁻, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 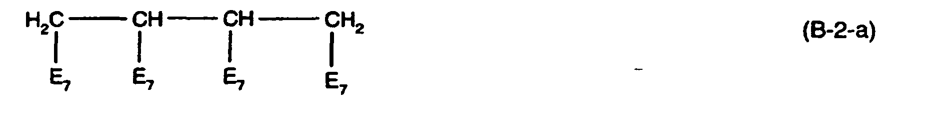 in which two of the radicals E₇ are -COO-C₁₃H₂₇ and
two of the radicals E₇ are 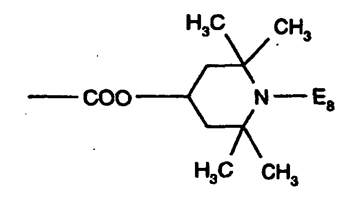 and E₈ has one of the meanings
of E₁; 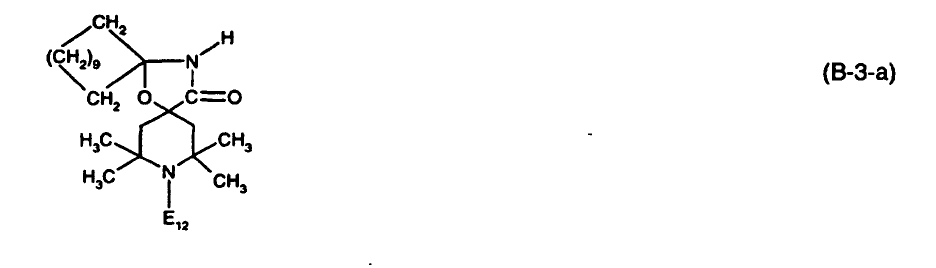 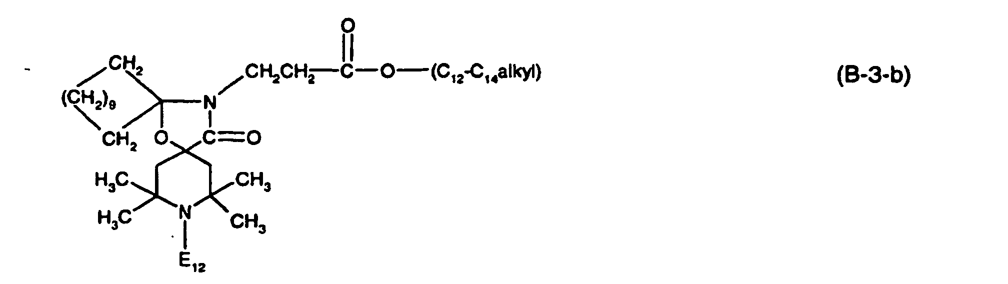 wherein E₁₂ has one of the meanings of E₁; 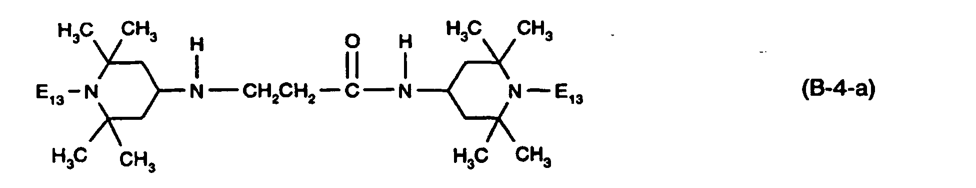 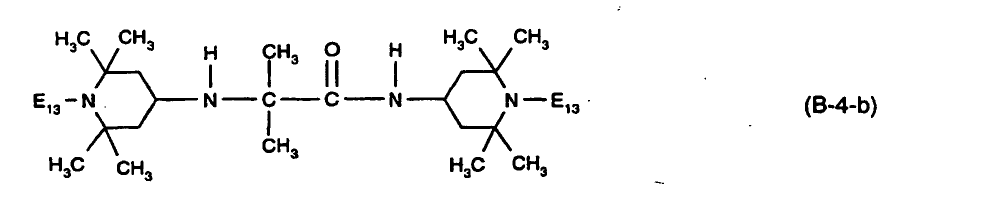 wherein E₁₃ has one of the meanings of E₁; 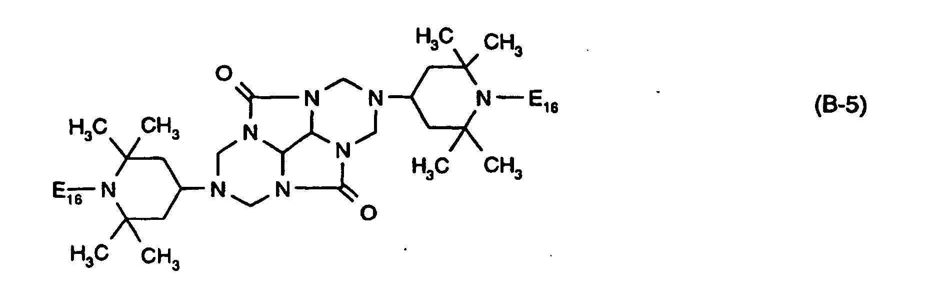 wherein E₁₆ has one of the meanings of E₁; 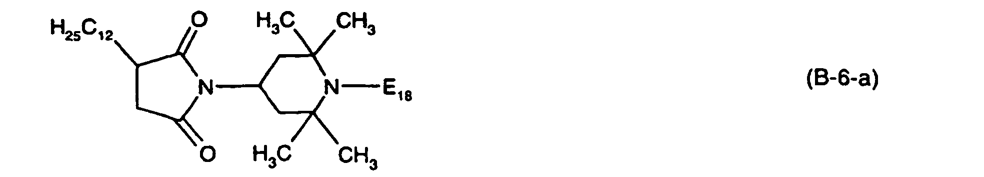 wherein E₁₈ has one of the meanings of E_{1;} 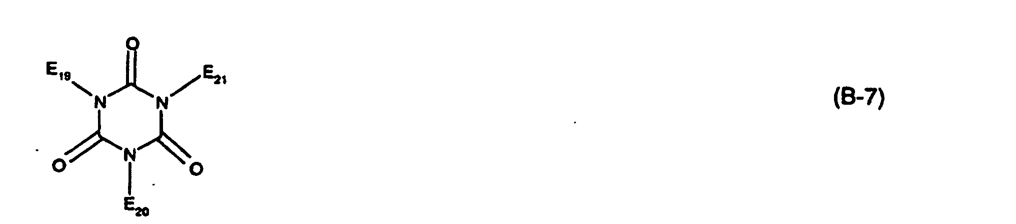 in which E₁₉, E₂₀ and E₂₁ independently of one another are a group of the formula (b-III) 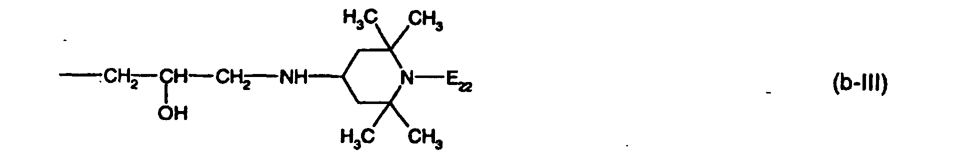 wherein E₂₂ has one of the meanings of E₁; 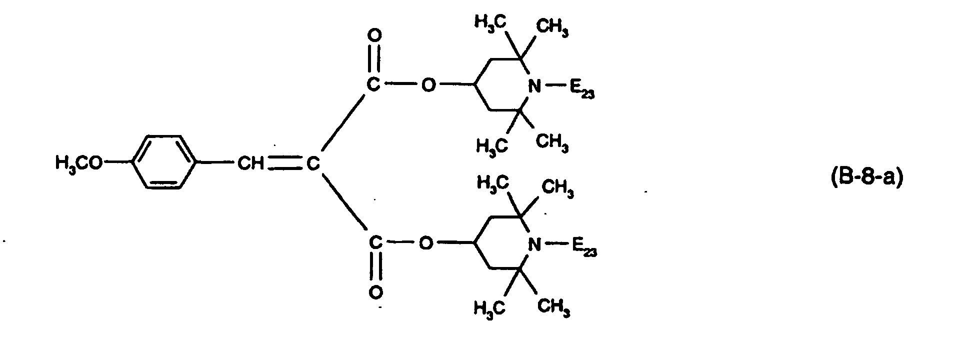 wherein E₂₃ has one of the meanings of E₁; 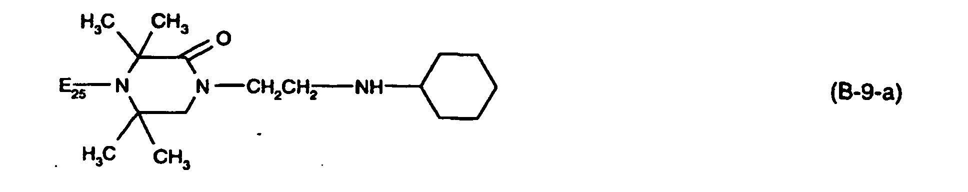 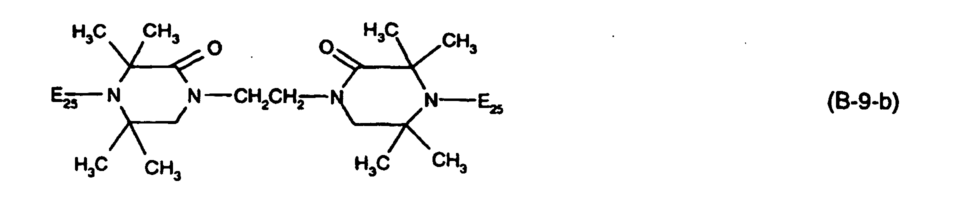 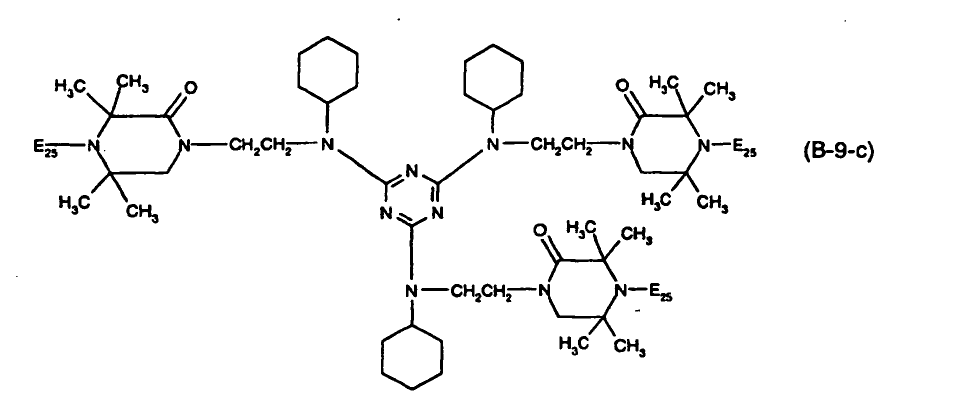 wherein E₂₅ has one of the meanings of E₁; 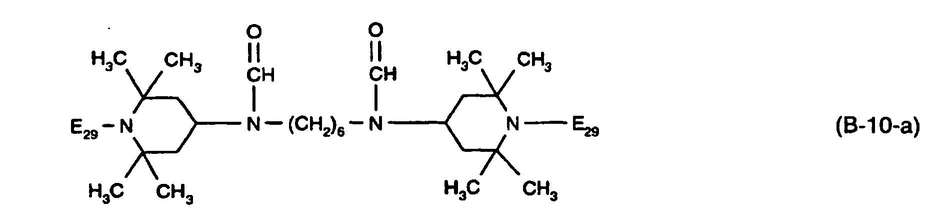 wherein E₂₉ has one of the meanings of E_{1;} 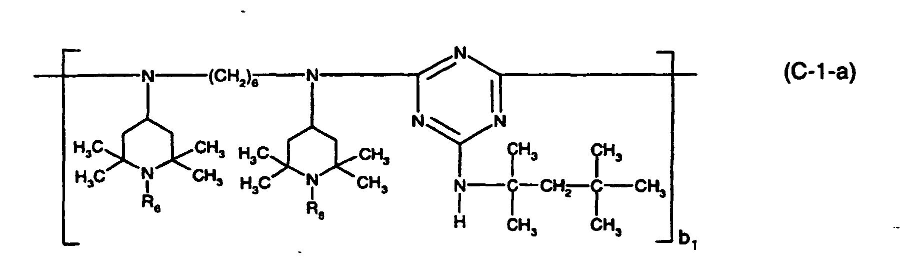 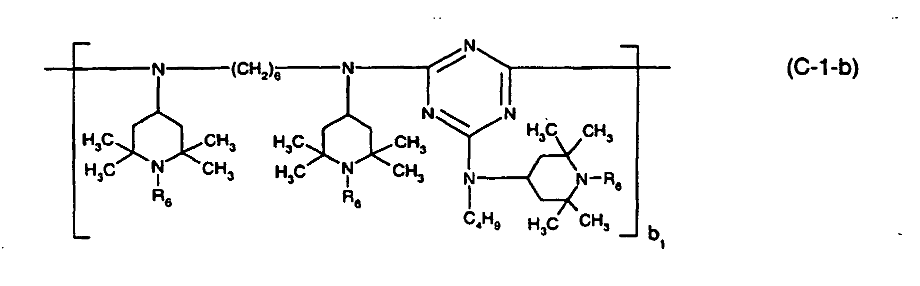 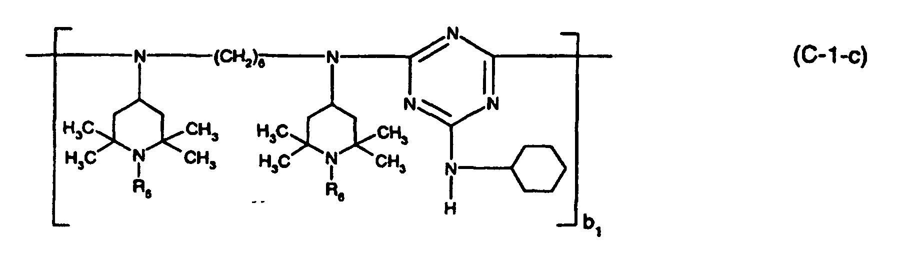 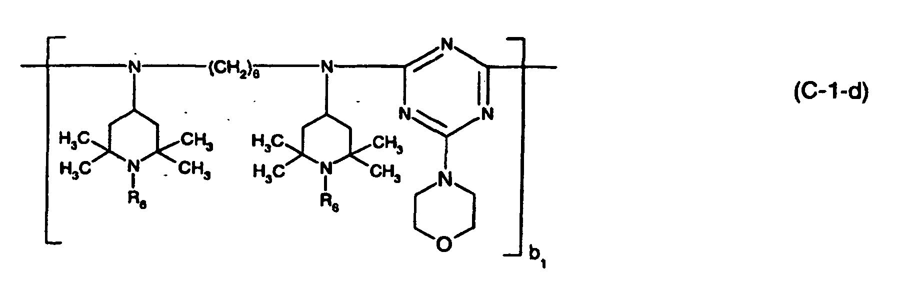 wherein b₁ is a number from 2 to 20 and R₆ is hydrogen, C₁-C₈alkyl, O⁻, -OH, -CH₂CN, C₁-C₁₈alkoxy, C₅-C₁₂cycloalkoxy, C₃-C₆alkenyl, C₇-C₉phenylalkyl unsubstituted or substituted on the phenyl by 1, 2 or 3 C₁-C₄alkyl; or C₁-C₈acyl; 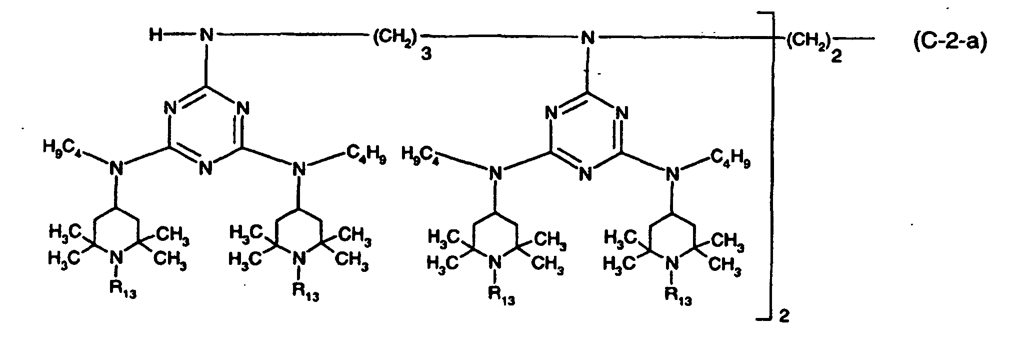 wherein R₁₃ has one of the meanings of R₆, 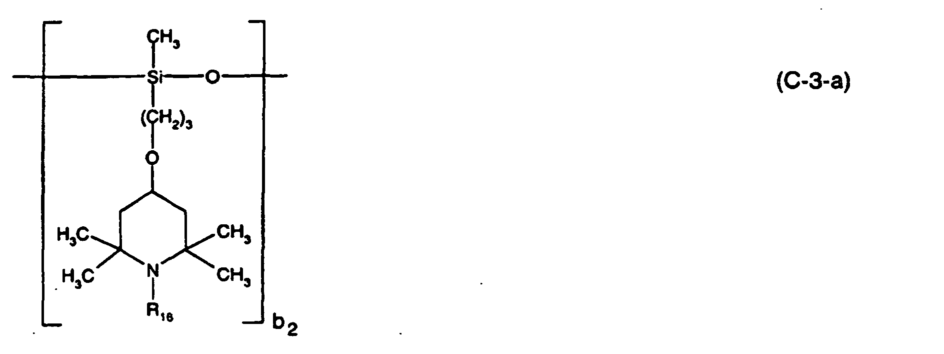 wherein b₂ is a number from 2 to 20 and R₁₆ has one of the meanings of R₆; 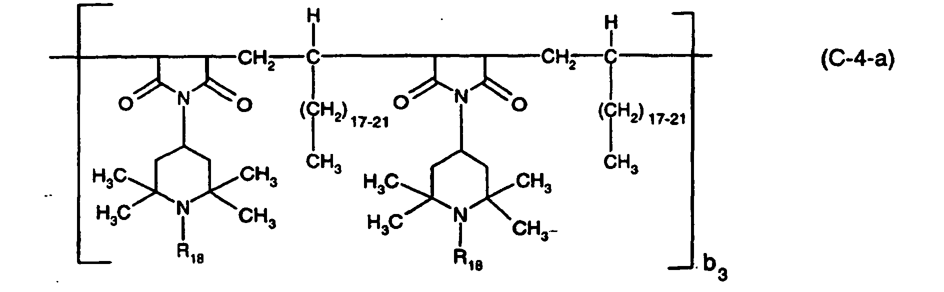 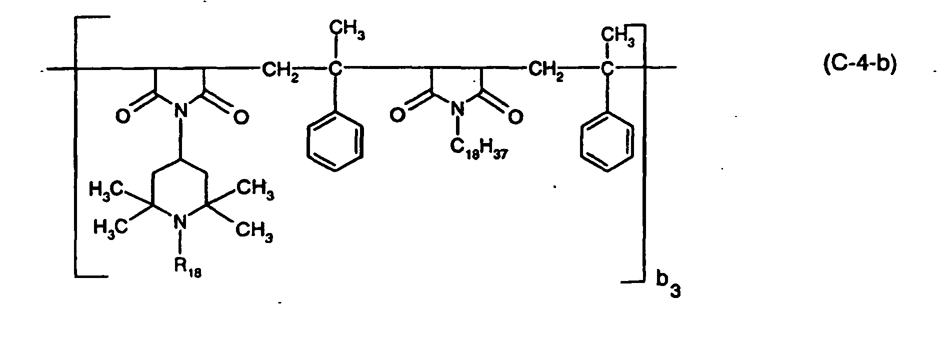 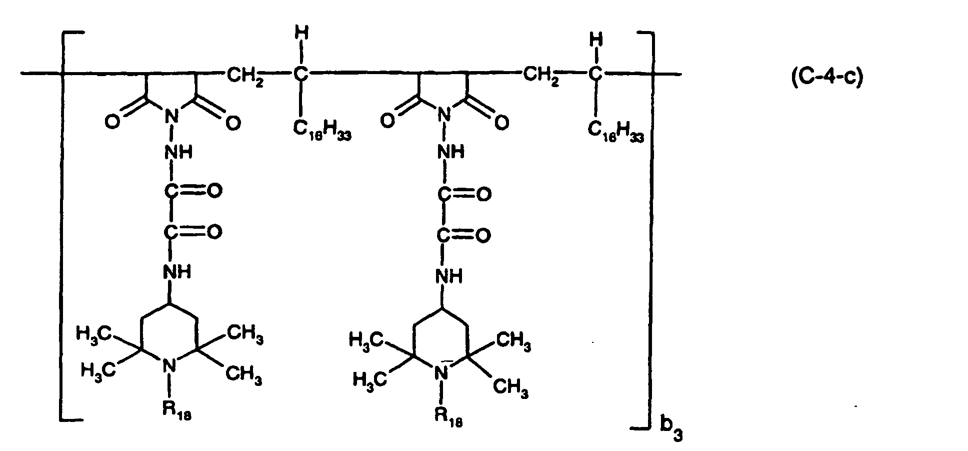 wherein b₃ is a number from 1 to 20 and R₁₈ has one of the meanings of R₆; 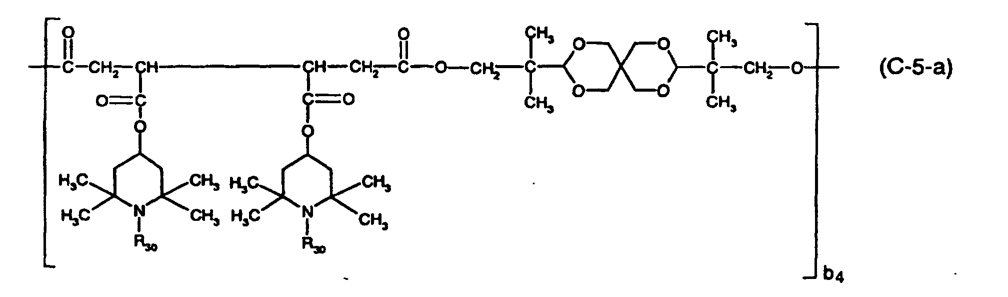 wherein b₄ is a number from 1 to 20 and R₃₀ has one of the meanings of R₆;
a product (C-6-a) obtainable by reacting a product, obtained by reaction of a polyamine of the formula (C-6-1-a) with cyanuric chloride, with a compound of the formula (C-6-2-a) 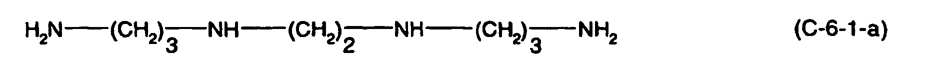 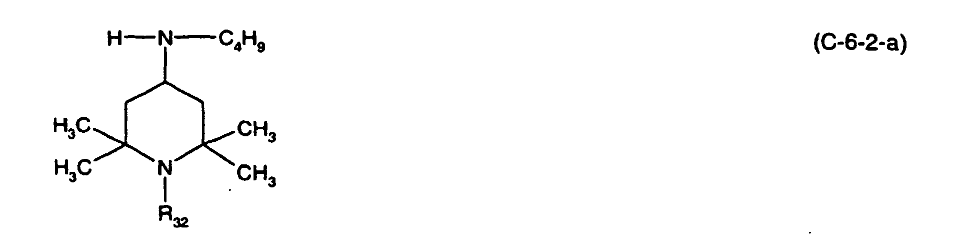 in which R₃₂ has one of the meanings of R₆.

10. An agricultural article according to claim 1 wherein
A₈ is hydrogen, C₁-C₄alkyl, C₁-C₁₀alkoxy, cyclohexyloxy, allyl, benzyl or acetyl;
E₁, E₈, E₁₂, E₁₃, E₁₆, E₁₈, E₂₂, E₂₃, E₂₅ and E₂₉ are hydrogen, C₁-C₄alkyl, C₁-C₁₀alkoxy, cyclohexyloxy, allyl, benzyl or acetyl;
R₆, R₁₃, R₁₆, R₁₈, R₃₀ and R₃₂ are hydrogen, C₁-C₄alkyl, C₁-C₁₀alkoxy, cyclohexyloxy, allyl, benzyl or acetyl.

11. An agricultural article according to claim 9 wherein
A₈, E₁, E₈, E₁₂, E₁₃, E₁₆, E₁₈, E₂₂, E₂₃, E₂₅, E₂₉, R₆, R₁₃, R₁₆, R₁₈, R₃₀ and R₃₂ are hydrogen or methyl and E₁ and R₆ additionally are C₁-C₈alkoxy.

12. An agricultural article according to claim 9 wherein
component (III) is a compound of the formula
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
(C-1-a), (C-1-b), (C-1-c), (C-1-d), (C-2-a), (C-3-a), (C-4-a) or (C-5-a) or a product (C-6-a).

13. An agricultural article according to claim 9 wherein
component (III) is a compound of the formula
(A-1-a), (A-2-a), (A-2-b),
(C-1-a), (C-1-b), (C-1-c), (C-1-d), (C-2-a), (C-3-a), (C-4-a) or (C-5-a) or a product (C-6-a).

14. An agricultural article according to claim 9 which contains as component (III) two different sterically hindered amine compounds selected from the group consisting of the compounds of the formulae
(A-1-a), (A-2-a), (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) and (C-5-a) and a product (C-6-a);
with the proviso that the two different sterically hindered amine compounds are not selected from the same generic formula.

15. An agricultural article according to claim 1 wherein
component (III) is a compound of the formula (A-1-a), or
a compound of the formula (C-1-a) wherein R₆ is hydrogen, or a combination of a compound of the formula (A-1-a) with a compound of the formula (C-1-a) wherein R₆ is hydrogen, or a combination of a compound of the formula (A-1-a) with a compound of the formula (C-2-a) wherein R₁₃ is methyl, or
a combination of a compound of the formula (B-1-b) wherein E₁ is hydrogen with a compound of the formula (C-1-a) wherein R₆ is hydrogen.

16. An agricultural article according to claim 1 which contains in addition one or more of the following components
(IV) an antioxidant,
(V) an UV absorber,
(VI) a filler,
(VII) a pigment,
(VIII) an inorganic or organic salt of Ca, Mg, Zn or Al.

17. An agricultural article according to claim 1 which additionally contains an aliphatic poly hydroxy-carboxyl acid.

18. An agricultural article according to claim 17 wherein the aliphatic poly hydroxy-carboxyl acid is citric acid.

19. An agricultural article according to claim 1 which is a mulch film.

20. A method for controlling the weathering resistance and the degradation of an agricultural organic polymer article, which comprises incorporating into the organic polymer components (II) and (III) as defined in claim 1.

21. The use of a mixture containing components (II) and (III) as defined in claim 1 for controlling the weathering resistance and the degradation of an agricultural organic polymer article.

22. A composition containing components (II) and (III) as defined in claim 1.

23. A composition according to claim 22
with the proviso that when the composition contains a polyolefin, the presence of an oxidizable unsaturated compound selected from the group consisting of natural rubber, styrene butadiene resin, fat or oil is disclaimed.

24. A composition according to claim 22
with the proviso that when the composition contains a polyolefin, the presence of an oxidizable unsaturated compound is disclaimed.

25. A composition containing components (II) and (III) as defined in claim 1 with the proviso that component (III) relates to two sterically hindered amine compounds.

26. A stabilizer composition containing components (II) and (III) as defined in claim 1 for an agricultural organic polymer article.

27. A stabilizer composition containing components (II) and (III) as defined in claim 1 for an agricultural organic polymer article with the proviso that component (III) relates to two sterically hindered amine compounds.

## Patentansprüche

1. Landwirtschaftlicher Artikel, umfassend die Komponenten
(I) ein organisches Polymer,
(II) ein organisches Salz von Fe, Ce, Co, Mn, Cu oder Vd, und
(III) ein oder mehrere sterisch gehinderte Aminverbindungen, ausgewählt aus der Gruppe, bestehend aus
einer Verbindung der Formel (A-1) 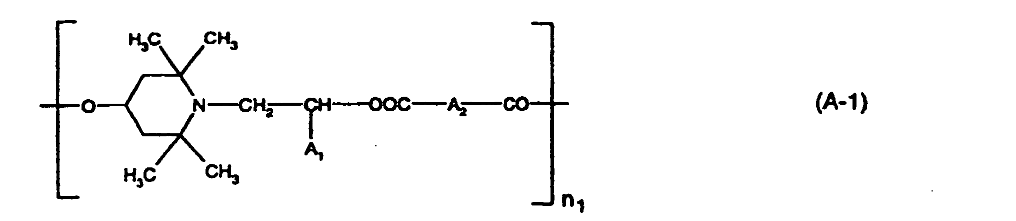 worin
A₁ Wasserstoff oder C₁-C₄-Alkyl ist,
A₂ eine direkte Bindung oder C₁-C₁₀-Alkylen ist, und
n₁ eine Zahl von 2 bis 50 ist;
mindestens einer Verbindung der Formeln (A-2-a) und (A-2-b) 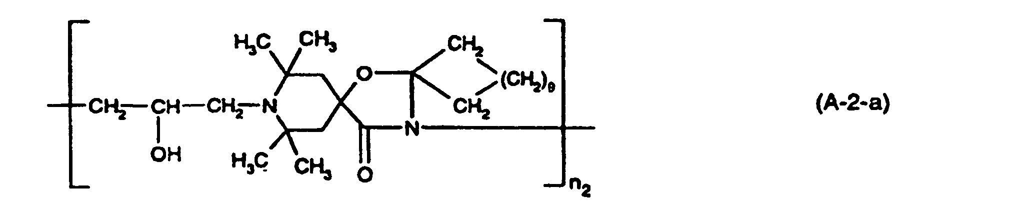 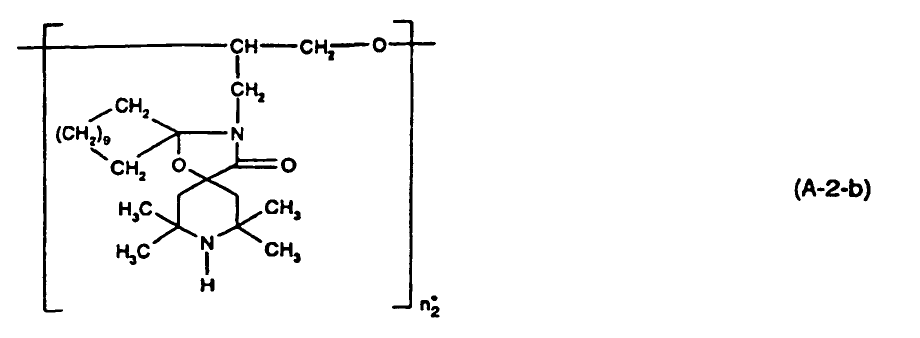 worin
n₂ und n₂* eine Zahl von 2 bis 50 sind;
einer Verbindung der Formel (A-3) 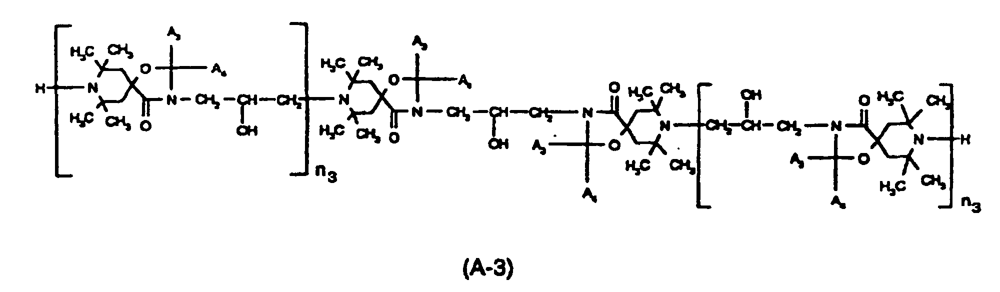 worin
A₃ und A₄ unabhängig voneinander Wasserstoff oder C₁-C₈-Alkyl sind, oder A₃ und A₄ zusammen eine C₂-C₁₄-Alkylengruppe bilden, und
die Variablen n₃ unabhängig voneinander eine Zahl von 1 bis 50 sind;
einer Verbindung der Formel (A-4) 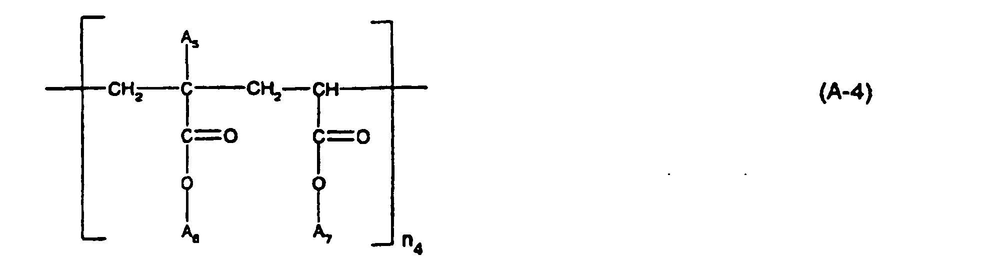 worin
n₄ eine Zahl von 2 bis 50 ist,
A₅ Wasserstoff oder C₁-C₄-Alkyl ist,
die Reste A₆ und A₇ unabhängig voneinander C₁-C₄-Alkyl oder eine Gruppe der Formel (a-I) sind 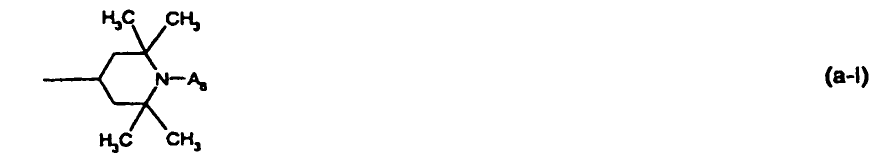 worin A₈ Wasserstoff, C₁-C₈-Alkyl, -O·, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder substituiert an dem Phenyl durch 1, 2 oder 3 C₁-C₄-Alkyl; oder C₁-C₈-Acyl ist,
mit der Maßgabe, daß mindestens 50 % der Reste A₇ eine Gruppe der Formel (a-I) sind;
einer Verbindung der Formel (B-1) 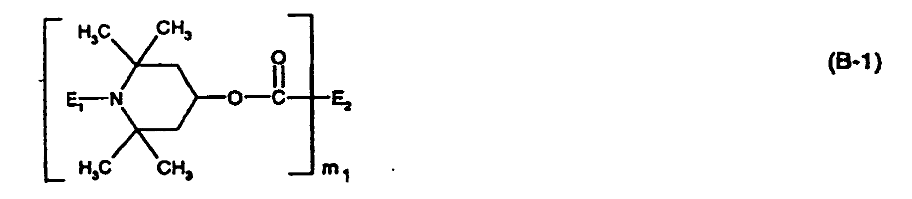 worin
E₁ Wasserstoff, C₁-C₈-Alkyl, -O·, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder substituiert an dem Phenyl durch 1, 2 oder 3 C₁-C₄-Alkyl; oder C₁-C₈-Acyl ist,
m₁ 1, 2 oder 4 ist,
wenn m₁ 1 ist, ist E₂ C₁-C₂₅-Alkyl,
wenn m₁ 2 ist, ist E₂ C₁-C₁₄-Alkylen oder eine Gruppe der Formel (b-I) 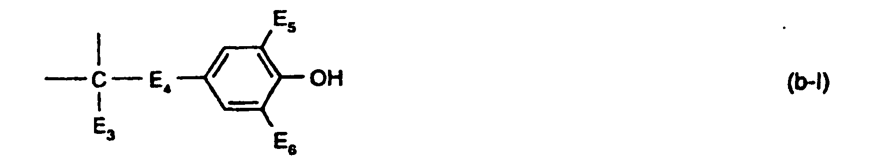 worin E₃ C₁-C₁₀-Alkyl oder C₂-C₁₀-Alkenyl ist, E₄ C₁-C₁₀-Alkylen ist, und
E₅ und E₆ unabhängig voneinander C₁-C₄-Alkyl, Cyclohexyl oder Methylcyclohexyl ist, und wenn m₁ 4 ist, ist E₂ C₄-C₁₀-Alkantetrayl;
einer Verbindung der Formel (B-2) 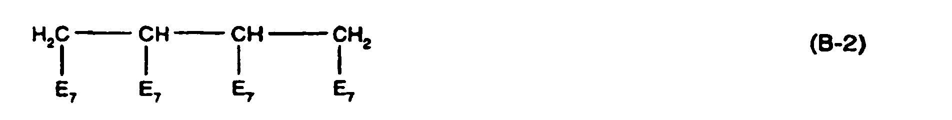 worin
zwei der Reste E₇ -COO-(C₁-C₂₀-Alkyl) sind, und
zwei der Reste E₇ eine Gruppe der Formel (b-II) sind 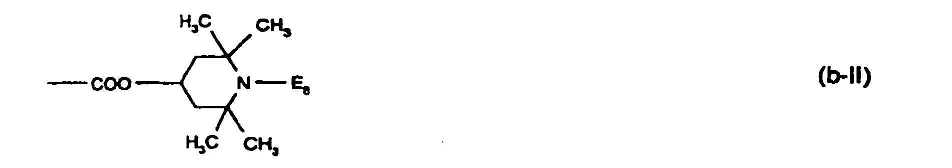 wobei E₈ eine der Bedeutungen von E₁ aufweist;
einer Verbindung der Formel (B-3) 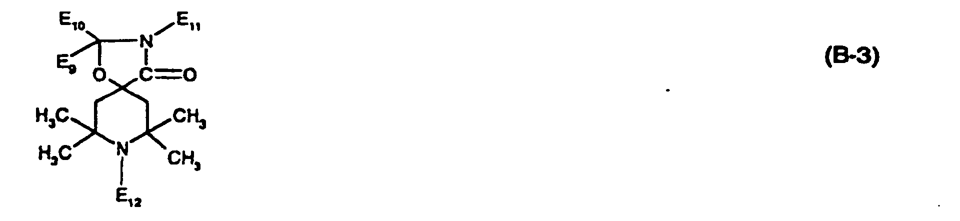 worin
E₉ und E₁₀ zusammen C₂-C₁₄-Alkylen bilden,
E₁₁ Wasserstoff oder eine Gruppe -Z₁-COO-Z₂ ist,
Z₁ C₂-C₁₄-Alkylen ist, und
Z₂ C₁-C₂₄-Alkyl ist, und
E₁₂ eine der Bedeutungen von E₁ aufweist;
einer Verbindung der Formel (B-4) 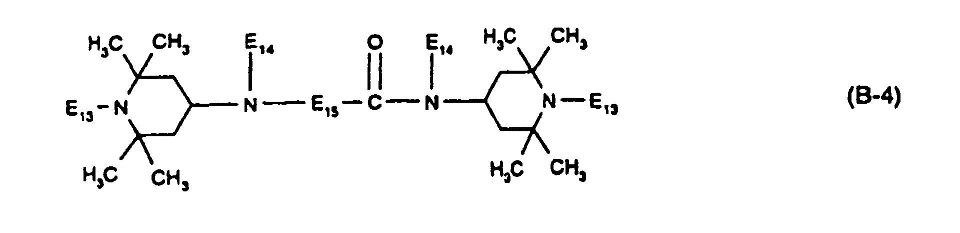 worin
die Reste E₁₃ unabhängig voneinander eine der Bedeutungen von E₁ aufweisen,
die Reste E₁₄ unabhängig voneinander Wasserstoff oder C₁-C₁₂-Alkyl sind, und E₁₅ C₁-C₁₀-Alkylen oder C₃-C₁₀-Alkyliden ist;
einer Verbindung der Formel (B-5) 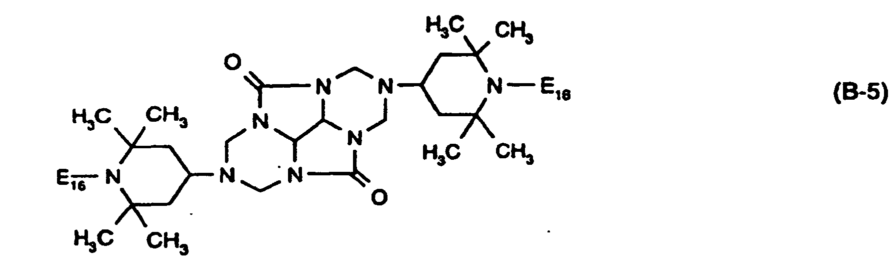 worin
die Reste E₁₆ unabhängig voneinander eine der Bedeutungen von E₁ aufweisen;
einer Verbindung der Formel (B-6) 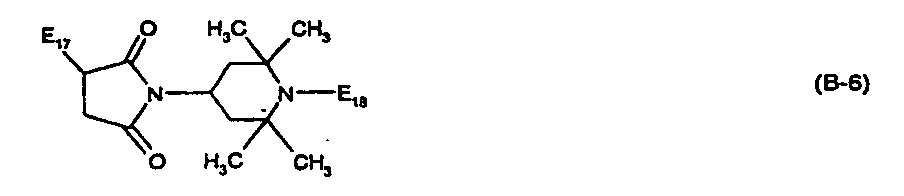 worin
E₁₇ C₁-C₂₄-Alkyl ist, und
E₁₈ eine der Bedeutungen von E₁ aufweist;
einer Verbindung der Formel (B-7) 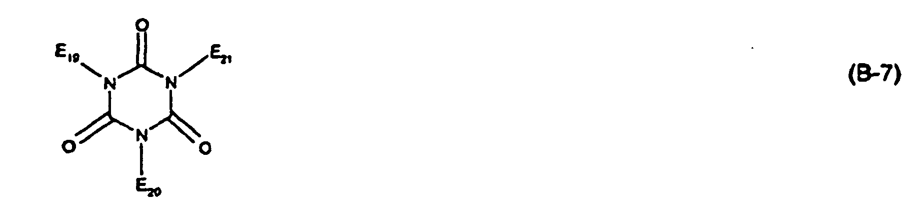 worin
E₁₉, E₂₀ und E₂₁ unabhängig voneinander eine Gruppe der Formel (b-III) sind 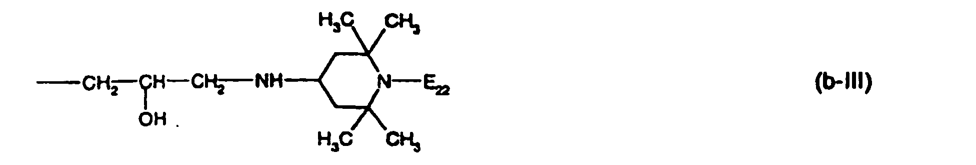 worin E₂₂ eine der Bedeutungen von E₁ aufweist;
einer Verbindung der Formel (B-8) 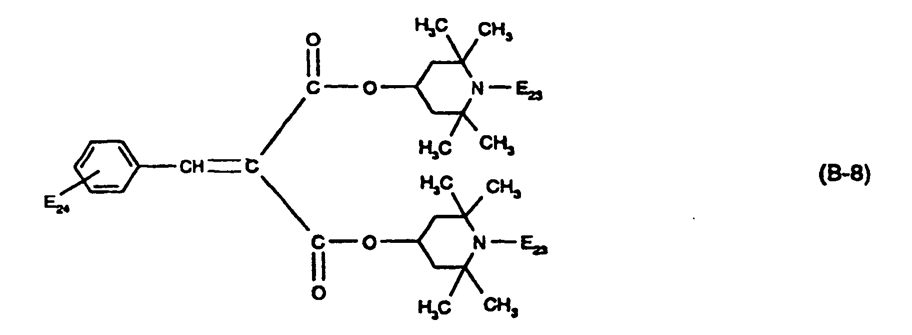 worin
die Reste E₂₃ unabhängig voneinander eine der Bedeutungen von E₁ aufweisen, und E₂₄ Wasserstoff, C₁-C₁₂-Alkyl oder C₁-C₁₂-Alkoxy ist;
einer Verbindung der Formel (B-9) 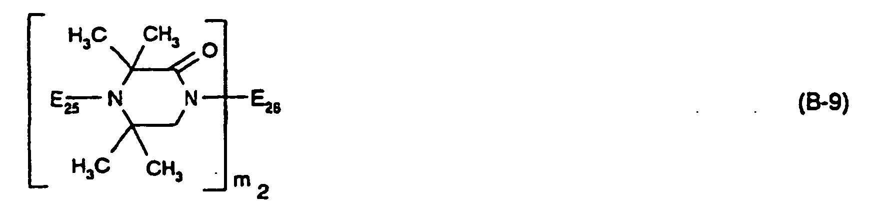 worin
m₂ 1, 2 oder 3 ist,
E₂₅ eine der Bedeutungen von E₁ aufweist, und
wenn m₂ 1 ist, ist E₂₆ eine Gruppe 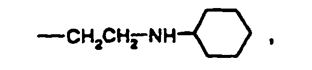 wenn m₂ 2 ist, ist E₂₆ C₂-C₂₂-Alkylen, und
wenn m₂ 3 ist, ist E₂₆ eine Gruppe der Formel (b-IV) 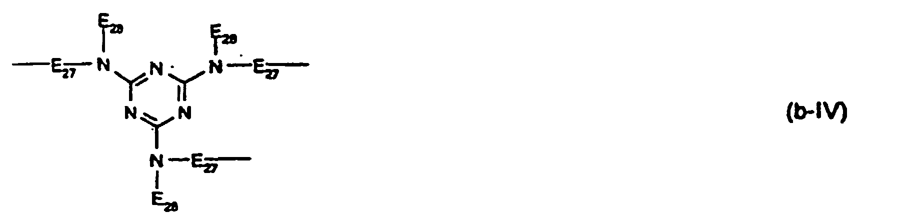 worin die Reste E₂₇ unabhängig voneinander C₂-C₁₂-Alkylen sind, und
die Reste E₂₈ unabhängig voneinander C₁-C₁₂-Alkyl oder C₅-C₁₂-Cycloalkyl sind;
einer Verbindung der Formel (B-10) 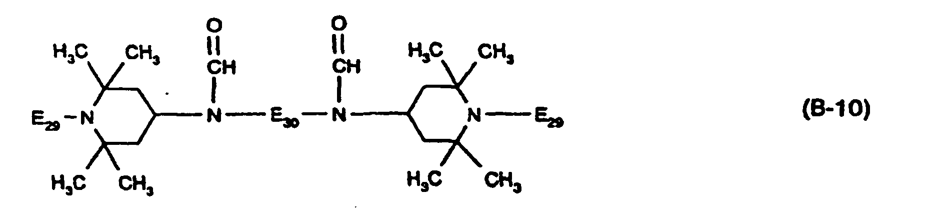 worin
die Reste E₂₉ unabhängig voneinander eine der Bedeutungen von E₁ aufweisen, und
E₃₀ C₂-C₂₂-Alkylen, C₅-C₇-Cycloalkylen, C₁-C₄-Alkylendi(C₅-C₇-cycloalkylen), Phenylen oder Phenylendi(C₁-C₄-alkylen) ist;
einer Verbindung der Formel (C-1) 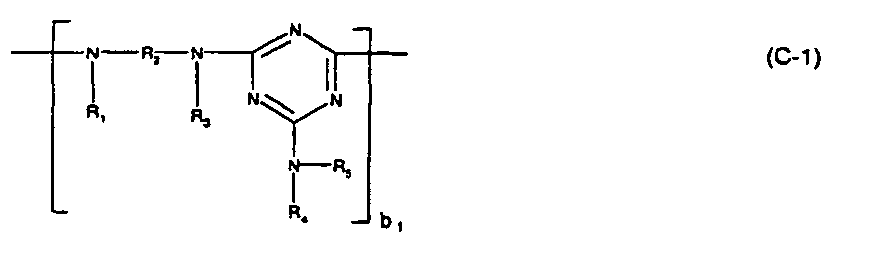 worin
R₁, R₃, R₄ und R₅ unabhängig voneinander Wasserstoff, C₁-C₁₂-Alkyl, C₅-C₁₂-Cycloalkyl, C₁-C₄-Alkyl-substituiertes C₅-C₁₂-Cycloalkyl, Phenyl, Phenyl, das durch -OH und/oder C₁-C₁₀-Alkyl substituiert ist; C₇-C₉-Phenylalkyl, C₇-C₉-Phenylalkyl, das an dem Phenylrest durch -OH und/oder C₁-C₁₀-Alkyl substituiert ist; oder eine Gruppe der Formel (c-I) sind 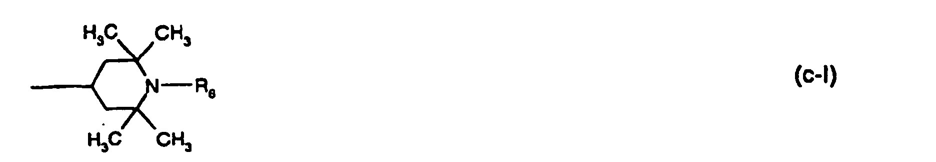 R₂ C₂-C₁₈-Alkylen, C₅-C₇-Cycloalkylen oder C₁-C₄-Alkylendi(C₅-C₇-Cycloalkylen) ist, oder die Reste R₁, R₂ und R₃ zusammen mit den Stickstoffatomen, an die sie gebunden sind, einen 5- bis 10-gliedrigen heterocyclischen Ring bilden, oder
R₄ und R₅ zusammen mit dem Stickstoffatom, an das sie gebunden sind, einen 5- bis 10-gliedrigen heterocyclischen Ring bilden;
R₆ Wasserstoff, C₁-C₈-Alkyl, -O⁻, -OH, -CH₂CN, C₁-C₁₈-Alkoxy, C₂-C₁₈-Alkoxy, substituiert durch -OH; C₅-C₁₂-Cycloalkoxy, C₃-C₆-Alkenyl, C₇-C₉-Phenylalkyl, unsubstituiert oder substituiert an dem Phenyl durch 1, 2 oder 3 C₁-C₄-Alkyl; oder C₁-C₈-Acyl ist, und
b₁ eine Zahl von 2 bis 50 ist,
mit der Maßgabe, daß mindestens einer der Reste R₁, R₃, R₄ und R₅ eine Gruppe der Formel (c-I) ist;
einer Verbindung der Formel (C-2) 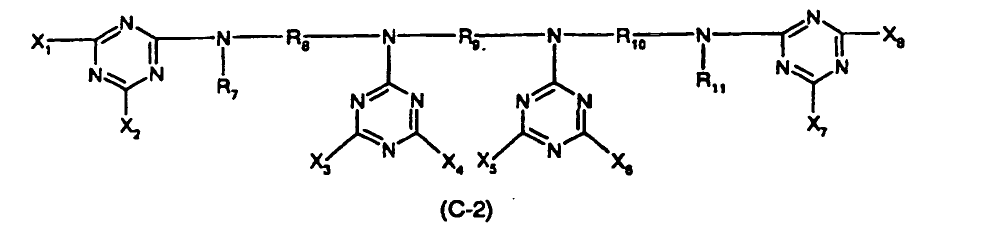 worin
R₇ und R₁₁ unabhängig voneinander Wasserstoff oder C₁-C₁₂-Alkyl sind,
R₈, R₉ und R₁₀ unabhängig voneinander C₂-C₁₀-Alkylen sind, und
X₁, X₂, X₃, X₄, X₅, X₆, X₇ und X₈ unabhängig voneinander eine Gruppe der Formel (c-II) sind, 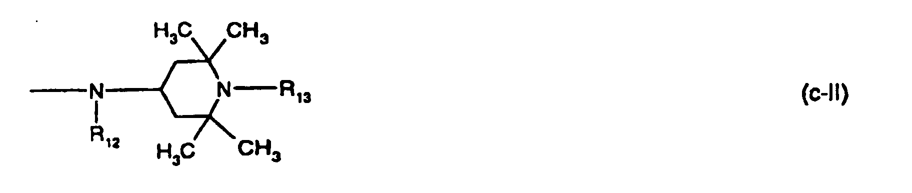 worin R₁₂ Wasserstoff, C₁-C₁₂-Alkyl, C₅-C₁₂-Cycloalkyl, C₁-C₄-Alkyl-substituiertes C₅-C₁₂-Cycloalkyl, Phenyl, -OH- und/oder C₁-C₁₀-Alkyl-substituiertes Phenyl, C₇-C₉-Phenylalkyl, C₇-C₉-Phenylalkyl, das an dem Phenylrest durch -OH und/oder C₁-C₁₀-Alkyl substituiert ist; oder eine Gruppe der Formel (c-I) ist, wie oben definiert, und
R₁₃ eine der Bedeutungen von R₆ aufweist;
einer Verbindung der Formel (C-3) 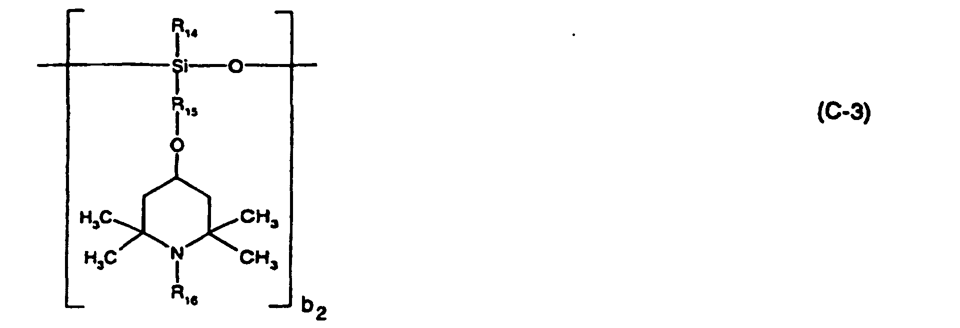 worin
R₁₄ C₁-C₁₀-Alkyl, C₅-C₁₂-Cycloalkyl, C₁-C₄-Alkyl-substituiertes C₅-C₁₂-Cycloalkyl, Phenyl oder C₁-C₁₀-Alkyl-substituiertes Phenyl ist,
R₁₅ C₃-C₁₀-Alkylen ist,
R₁₆ eine der Bedeutungen von R₆ aufweist, und
b₂ eine Zahl von 2 bis 50 ist;
einer Verbindung der Formel (C-4) 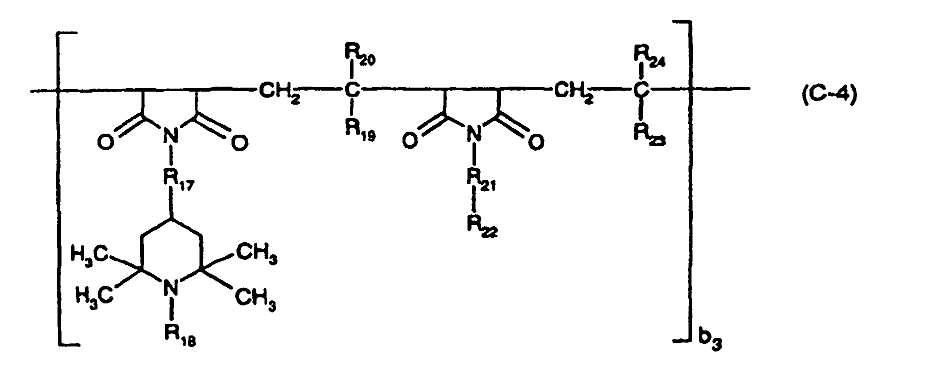 worin
R₁₇ und R₂₁ unabhängig voneinander eine direkte Bindung oder eine -N(X₉)-CO-X₁₀-CO-N(X₁₁)-Gruppe sind, wo X₉ und X₁₁ unabhängig voneinander Wasserstoff, C₁-C₈-Alkyl, C₅-C₁₂-Cycloalkyl, Phenyl, C₇-C₉-Phenylalkyl oder eine Gruppe der Formel (c-I) sind,
X₁₀ eine direkte Bindung oder C₁-C₄-Alkylen ist,
R₁₈ eine der Bedeutungen von R₆ aufweist,
R₁₉, R₂₀, R₂₃und R₂₄ unabhängig voneinander Wasserstoff, C₁-C₃₀-Alkyl, C₅-C₁₂-Cycloalkyl oder Phenyl sind,
R₂₂ Wasserstoff, C₁-C₃₀-Alkyl, C₅-C₁₂-Cycloalkyl, Phenyl, C₇-C₉-Phenylalkyl oder eine Gruppe der Formel (c-I) ist, und
b₃ eine Zahl von 1 bis 50 ist;
einer Verbindung der Formel (C-5) 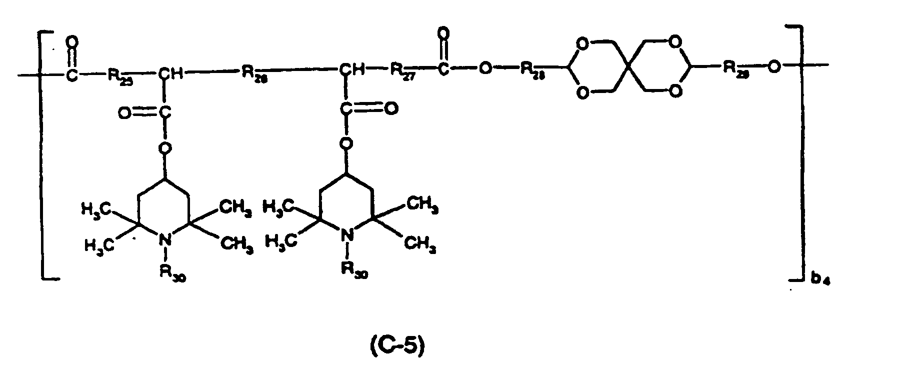 worin
R₂₅, R₂₆, R₂₇, R₂₈ und R₂₉ unabhängig voneinander eine direkte Bindung oder C₁-C₁₀-Alkylen sind,
R₃₀ eine der Bedeutungen von R₆ aufweist, und
b₄ eine Zahl von 1 bis 50 ist; und
einem Produkt (C-6), erhältlich durch Umsetzen eines Produktes, das durch Umsetzung eines Polyamins der Formel (C-6-1) mit Cyanursäurechlorid erhalten wurde, mit einer Verbindung der Formel (C-6-2) 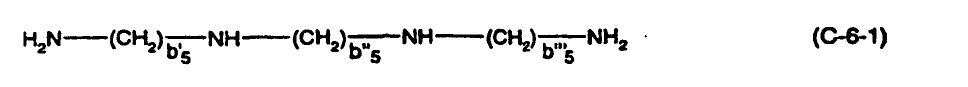 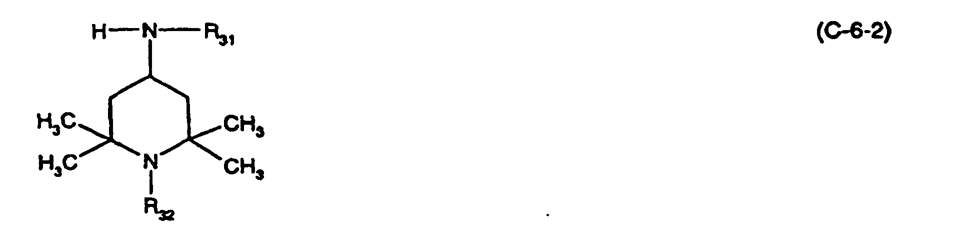 worin
b'₅, b"₅ und b'''₅ unabhängig voneinander eine Zahl von 2 bis 12 sind,
R₃₁ Wasserstoff, C₁-C₁₂-Alkyl, C₅-C₁₂-Cycloalkyl, Phenyl oder C₇-C₉-Phenylalkyl ist, und
R₃₂ eine der Bedeutungen von R₆ aufweist.

2. Landwirtschaftlicher Artikel nach Anspruch 1, wobei die Komponente (I) ein Polyolefinhomo- oder -copolymer, ein Stärke-modifiziertes Polyolefin, ein Stärke-basierender Polymerverbundstoff oder ein Biopolymer ist.

3. Landwirtschaftlicher Artikel nach Anspruch 1, wobei die Komponente (I) Polyethylen, Polypropylen, ein Polyethylencopolymer oder ein Polypropylencopolymer ist.

4. Landwirtschaftlicher Artikel nach Anspruch 1, wobei die Komponente (I) ein Biopolymer ist, ausgewählt aus der Gruppe, bestehend aus Polycaprolacton, Polymilchsäure, Polyglykolsäure, Polyhydroxybutyrat-valerat, Polybutylensuccinat, Polyvinylalkohol, Polyhydroxyalcanoat und Polyethylenadipat.

5. Landwirtschaftlicher Artikel nach Anspruch 1, wobei die Komponente (II) ein C₂-C₂₄-Carboxylat von Fe, Ce, Co, Mn, Cu oder Vd ist.

6. Landwirtschaftlicher Artikel nach Anspruch 1, wobei die Komponente (II) ein C₂-C₂₄-Carboxylat von Ce, Co oder Mn ist.

7. Landwirtschaftlicher Artikel nach Anspruch 1, wobei die Komponente (II) ein C₁₀-C₂₀-Alkanoat von Ce, Co oder Mn oder ein C₁₀-C₂₀-Alkenoat von Ce, Co oder Mn ist.

8. Landwirtschaftlicher Artikel nach Anspruch 1, wobei
A₁ Wasserstoff oder Methyl ist,
A₂ eine direkte Bindung oder C₂-C₆-Alkylen ist, und
n₁ eine Zahl von 2 bis 25 ist;
n₂ und n₂* eine Zahl von 2 bis 25 sind;
A₃ und A₄ unabhängig voneinander Wasserstoff oder C₁-C₄-Alkyl sind, oder A₃ und A₄ zusammen eine C₉-C₁₃-Alkylengruppe bilden, und
die Variablen n₃ unabhängig voneinander eine Zahl von 1 bis 25 sind;
n₄ eine Zahl von 2 bis 25 ist,
A₅ und A₆ unabhängig voneinander C₁-C₄-Alkyl sind, und
A₇ C₁-C₄-Alkyl oder eine Gruppe der Formel (a-I) ist,
mit der Maßgabe, daß mindestens 50 % der Reste A₇ eine Gruppe der Formel (a-I) sind; m₁ 1, 2 oder 4 ist,
wenn m₁ 1 ist, ist E₂ C₁₂-C₂₀-Alkyl,
wenn m₁ 2 ist, ist E₂ C₂-C₁₀-Alkylen oder ein Gruppe der Formel (b-I),
E₃ C₁-C₄-Alkyl ist,
E₄ C₁-C₆-Alkylen ist, und
E₅ und E₆ unabhängig voneinander C₁-C₄-Alkyl sind, und
wenn m₁ 4 ist, ist E₂ C₄-C₈-Alkantetrayl;
zwei der Reste E₇ -COO-(C₁₀-C₁₅-Alkyl) sind, und
zwei der Reste E₇ eine Gruppe der Formel (b-II) sind;
E₉ und E₁₀ zusammen C₉-C₁₃-Alkylen sind,
E₁₁ Wasserstoff oder eine Gruppe -Z₁-COO-Z₂ ist,
Z₁ C₂-C₆-Alkylen ist, und
Z₂ C₁₀-C₁₆-Alkyl ist;
E₁₄ Wasserstoff ist, und
E₁₅ C₂-C₆-Alkylen oder C₃-C₅-Alkyliden ist;
E₁₇ C₁₀-C₁₄-Alkyl ist;
E₂₄ C₁-C₄-Alkoxy ist;
m₂ 1, 2 oder 3 ist,
wenn m₂ 1 ist, ist E₂₆ eine Gruppe 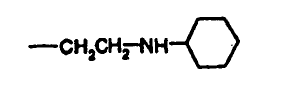 wenn m₂ 2 ist, ist E₂₆ C₂-C₆-Alkylen, und
wenn m₂ 3 ist, ist E₂₆ eine Gruppe der Formel (b-IV)
die Reste E₂₇ unabhängig voneinander C₂-C₆-Alkylen sind, und
die Reste E₂₈ unabhängig voneinander C₁-C₄-Alkyl oder C₅-C₈-Cycloalkyl sind; und E₃₀ C₂-C₈-Alkylen ist;
R₁ und R₃ unabhängig voneinander eine Gruppe der Formel (c-I) sind,
R₂ C₂-C₈-Alkylen ist,
R₄ und R₅ unabhängig voneinander Wasserstoff, C₁-C₁₂-Alkyl, C₅-C₈-Cycloalkyl oder eine Gruppe der Formel (c-I) sind, oder die Reste R₄ und R₅ zusammen mit dem Stickstoffatom, an das sie gebunden sind, einen 5- bis 10-gliedrigen heterocyclischen Ring bilden, und
b₁ eine Zahl von 2 bis 25 ist;
R₇ und R₁₁ unabhängig voneinander Wasserstoff oder C₁-C₄-Alkyl sind,
R₈, R₉ und R₁₀ unabhängig voneinander C₂-C₄-Alkylen sind, und
X₁, X₂, X₃, X₄, X₅, X₆, X₇ und X₈ unabhängig voneinander eine Gruppe der Formel (c-II) sind,
R₁₂ Wasserstoff, C₁-C₄-Alkyl, C₅-C₈-Cycloalkyl oder eine Gruppe der Formel (c-I) ist;
R₁₄ C₁-C₄-Alkyl ist,
R₁₅ C₃-C₆-Alkylen ist, und
b₂ eine Zahl von 2 bis 25 ist;
R₁₇ und R₂₁ unabhängig voneinander eine direkte Bindung oder eine Gruppe -N(X₉)-CO-X₁₀-CO-N(X₁₁)- sind,
X₉ und X₁₁ unabhängig voneinander Wasserstoff oder C₁-C₄-Alkyl sind,
X₁₀ eine direkte Bindung ist,
R₁₉ und R₂₃ C₁-C₂₅-Alkyl oder Phenyl sind,
R₂₀ und R₂₄ Wasserstoff oder C₁-C₄-Alkyl sind,
R₂₂ C₁-C₂₅-Alkyl oder eine Gruppe der Formel (c-I) ist, und
b₃ eine Zahl von 1 bis 25 ist;
R₂₅, R₂₆, R₂₇, R₂₈ und R₂₉ unabhängig voneinander eine direkte Bindung oder C₁-C₄-Alkylen sind, und
b₄ eine Zahl von 1 bis 25 ist;
b'₅, b"₅ und b'''₅ unabhängig voneinander eine Zahl von 2 bis 4 sind, und
R₃₁ Wasserstoff, C₁-C₄-Alkyl, C₅-C₈-Cycloalkyl, Phenyl oder Benzyl ist.

9. Landwirtschaftlicher Artikel nach Anspruch 1, wobei die Komponente (III) eine oder mehrere sterisch gehinderte Aminverbindungen ist, ausgewählt aus der Gruppe, bestehend aus Verbindungen der Formeln
(A-1-a), (A-2-a). (A-2-b), (A-3-a), (A-4-a),
(B-1-a), (B-1-b), (B-1-c), (B-1-d), (B-2-a), (B-3-a), (B-3-b), (B-4-a), (B-4-b), (B-5), (B-6-a),
(B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) und (C-5-a) und einem Produkt (C-6-a); 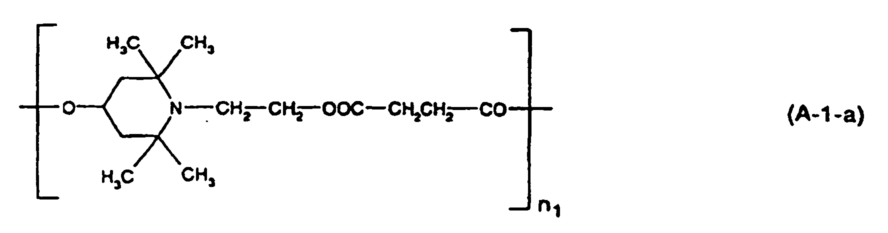 worin n₁ eine Zahl von 2 bis 20 ist; 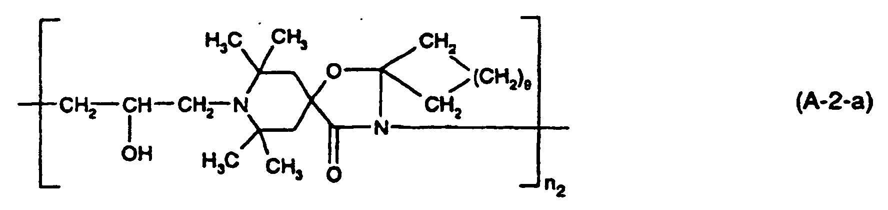 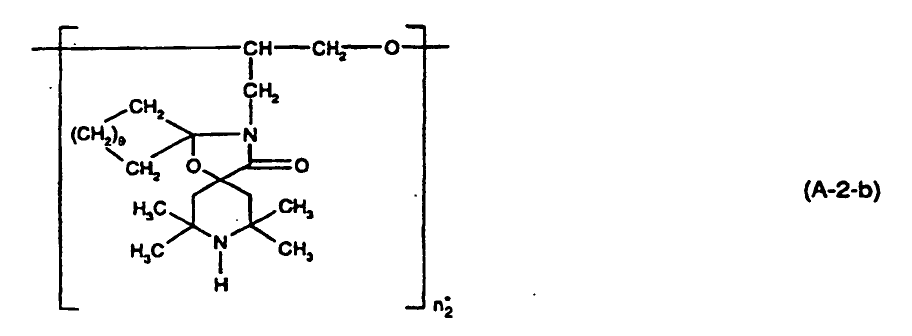 worin n₂ und n₂* eine Zahl von 2 bis 20 sind; 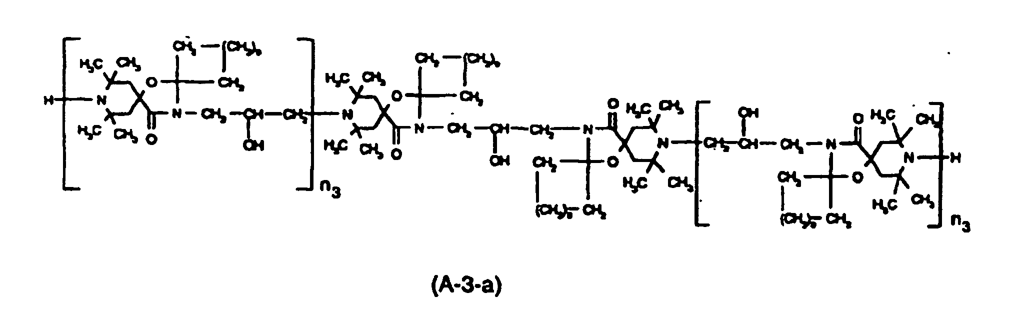 worin die Variablen n₃ unabhängig voneinander eine Zahl von 1 bis 20 sind; 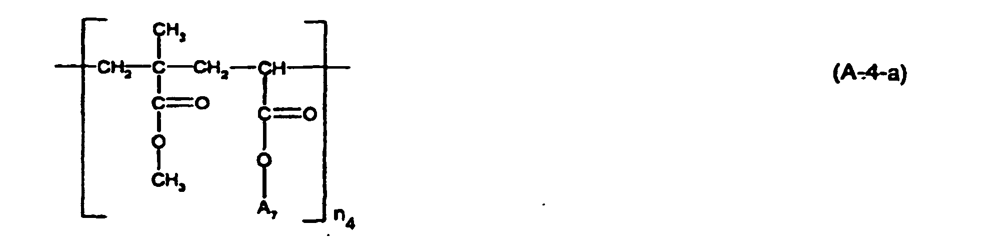 worin n₄ eine Zahl von 2 bis 20 ist, und
mindestens 50 % der Reste A₇ eine Gruppe der Formel (a-I) sind 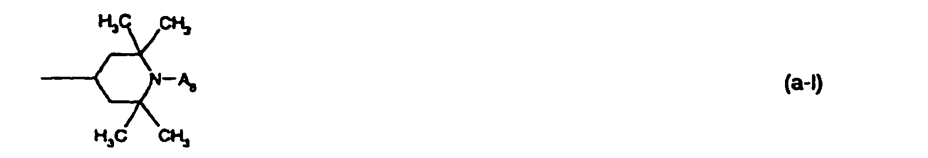 worin A₈ Wasserstoff, C₁-C₈-Alkyl, -O⁻, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder substituiert an dem Phenyl durch 1, 2 oder 3 C₁-C₄-Alkyl; oder C₁-C₈-Acyl ist,
und die übrigen Reste A₇ Ethyl sind; 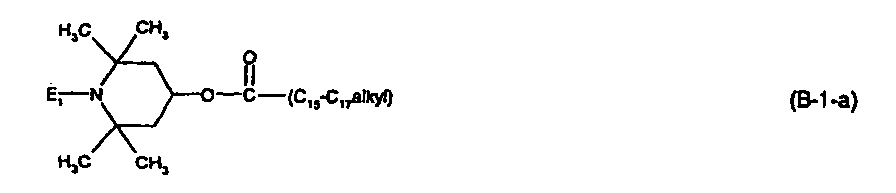 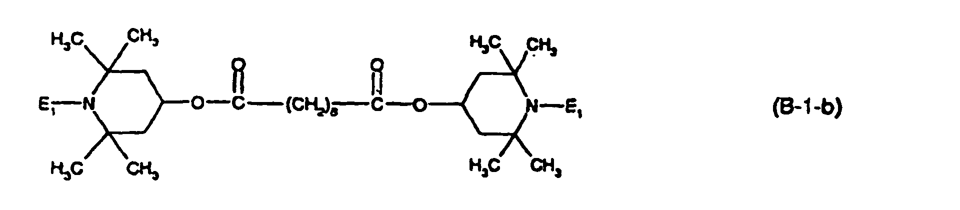 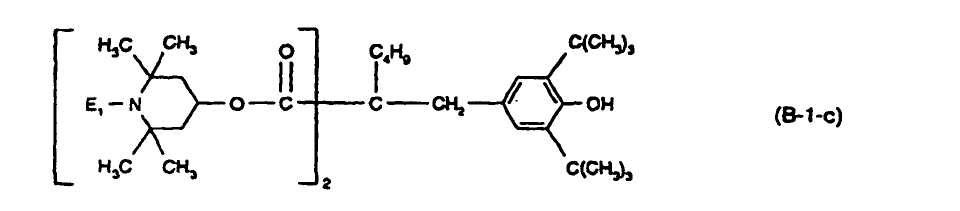 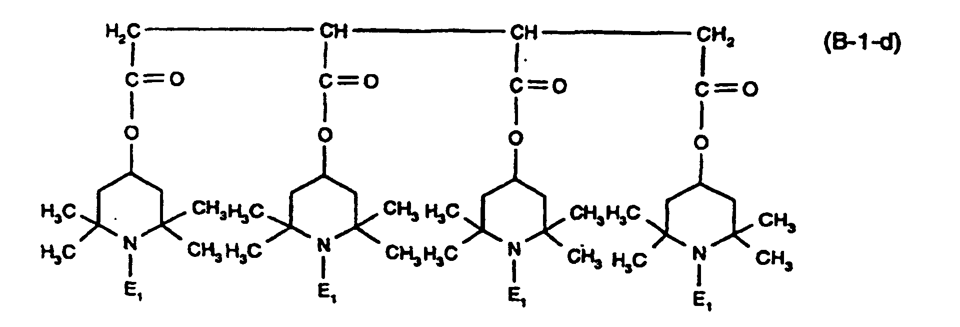 worin E₁ Wasserstoff, C₁-C₈-Alkyl, -O·, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder substituiert an dem Phenyl durch 1, 2 oder 3 C₁-C₄-Alkyl; oder C₁-C₈-Acyl ist; 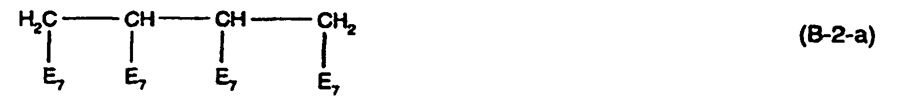 worin zwei der Reste E₇ -COO-C₁₃H₂₇ sind und zwei der Reste E₇ 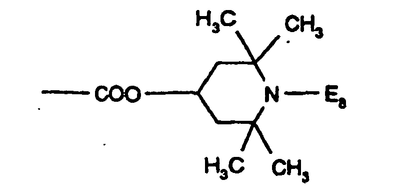 sind und E₈ eine der Bedeutungen von E₁ aufweist; 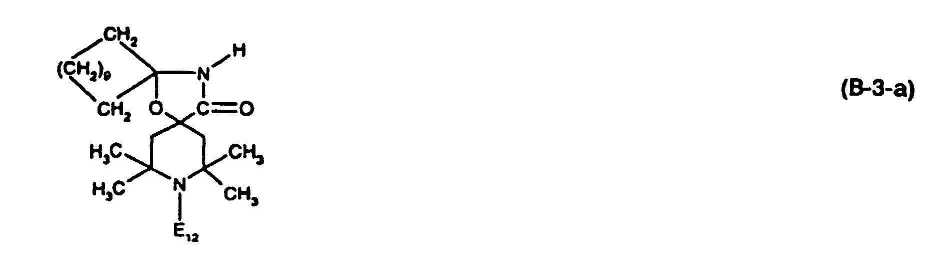 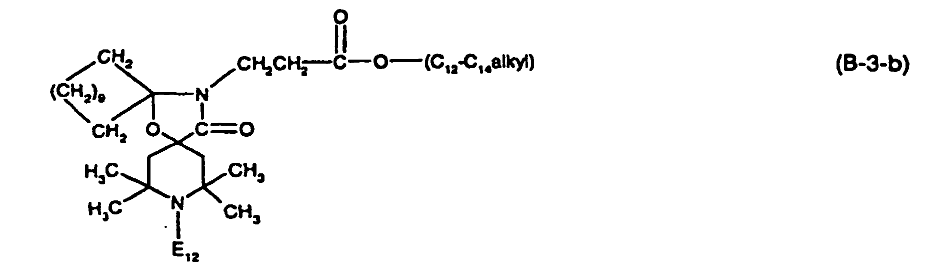 worin E₁₂ eine der Bedeutungen von E₁ aufweist; 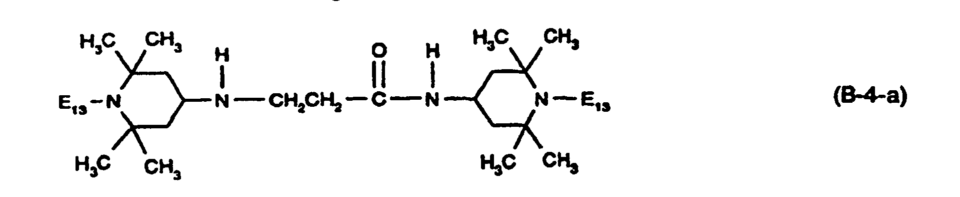 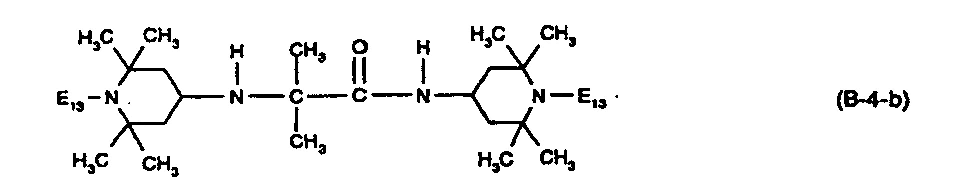 worin E₁₃ eine der Bedeutungen von E₁ aufweist; 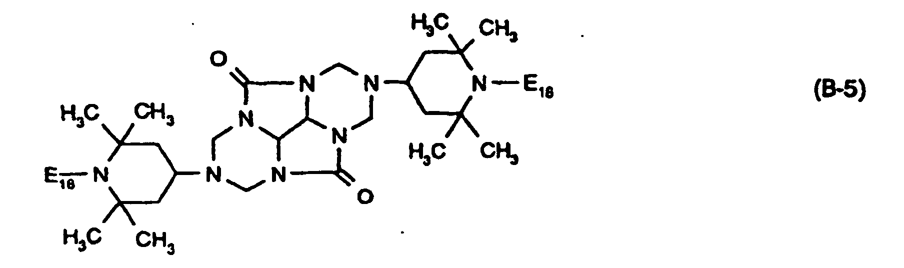 worin E₁₆ eine der Bedeutungen von E₁ aufweist; 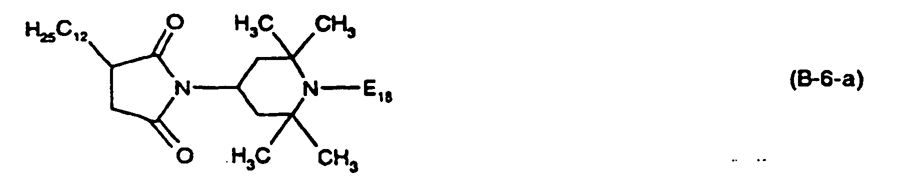 worin E₁₈ eine der Bedeutungen von E₁ aufweist; 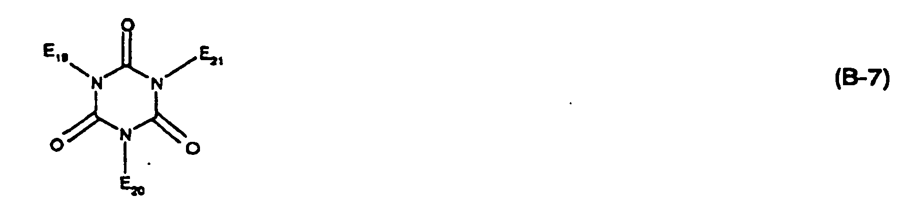 worin E₁₉, E₂₀ und E₂₁ unabhängig voneinander eine Gruppe der Formel (b-III) sind 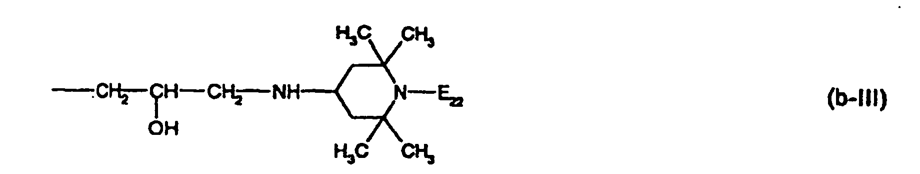 worin E₂₂ eine der Bedeutungen von E₁ aufweist; 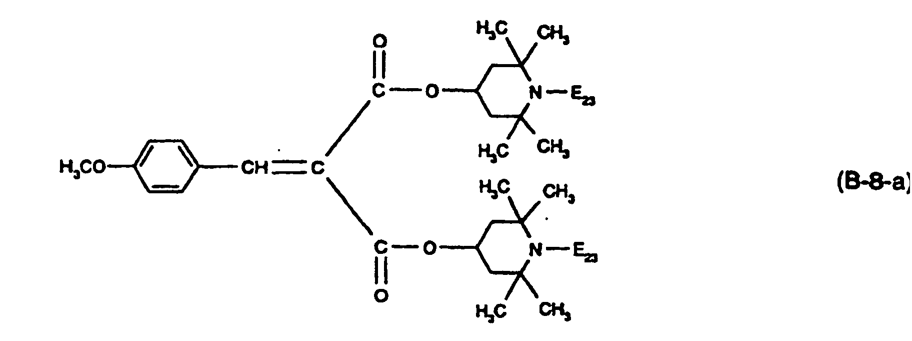 worin E₂₃ eine der Bedeutungen von E₁ aufweist; 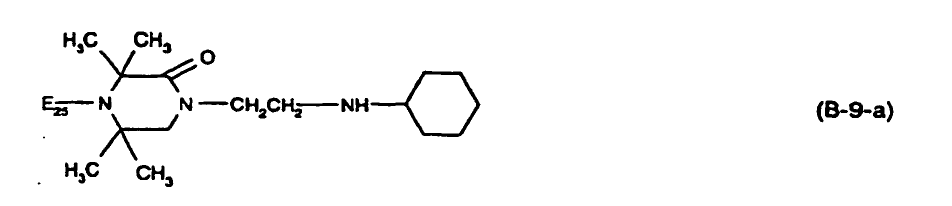 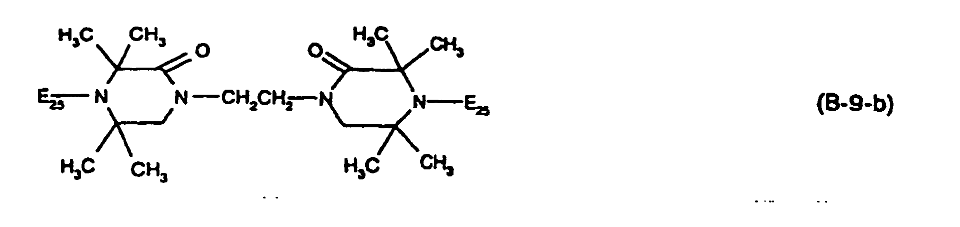 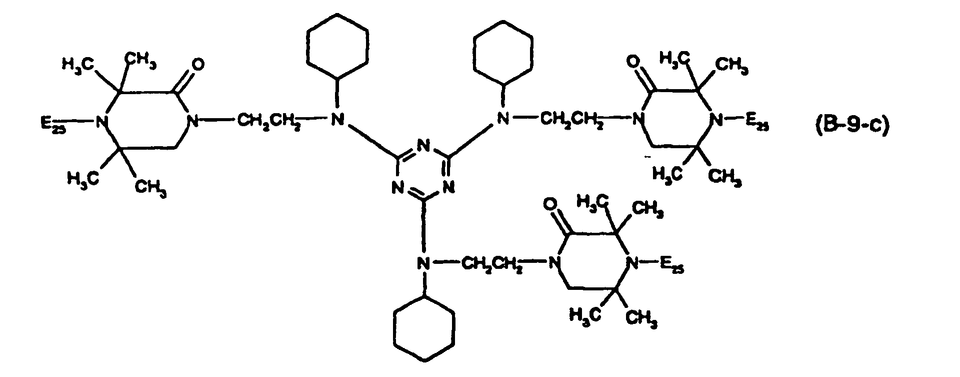 worin E₂₅ eine der Bedeutungen von E₁ aufweist; 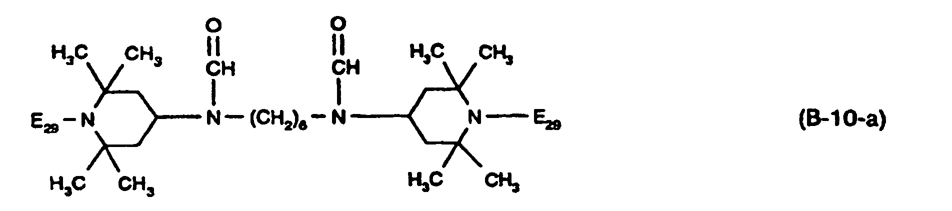 worin E₂₉ eine der Bedeutungen von E₁ aufweist; 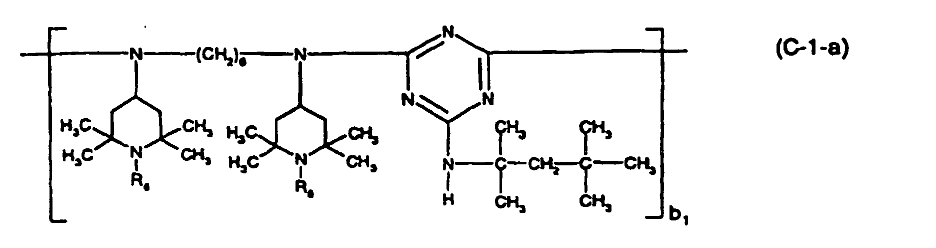 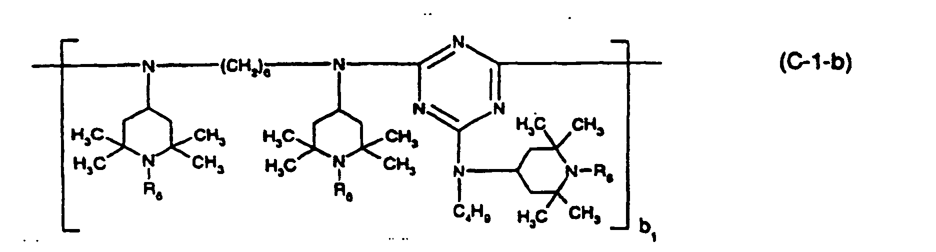 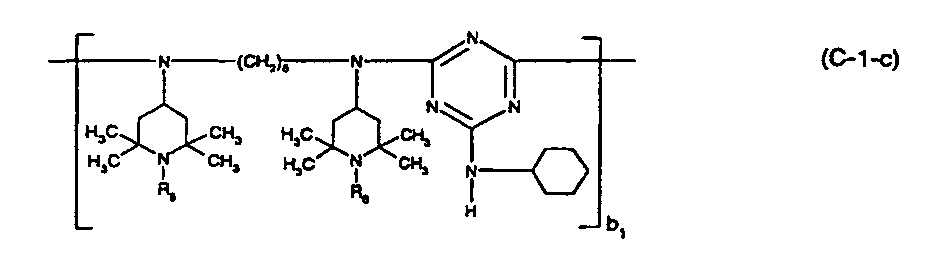 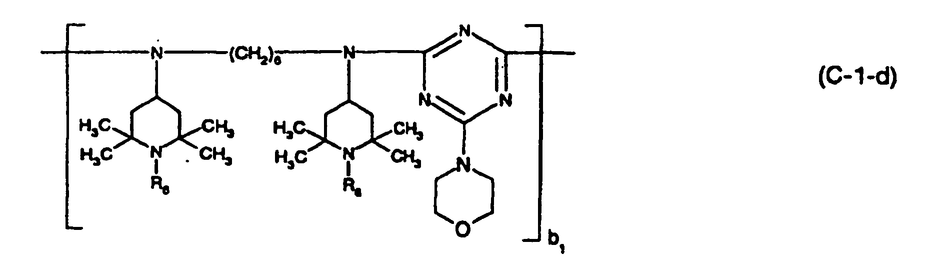 worin b₁ eine Zahl von 2 bis 20 ist und R₆ Wasserstoff, C₁-C₈-Alkyl, -O·, -OH, -CH₂CN, C₁-C₁₈-Alkoxy, C₅-C₁₂-Cycloalkoxy, C₃-C₆-Alkenyl, C₇-C₉-Phenylalkyl, unsubstituiert oder substituiert an dem Phenyl durch 1, 2 oder 3 C₁-C₄-Alkyl; oder C₁-C₈-Acyl ist; 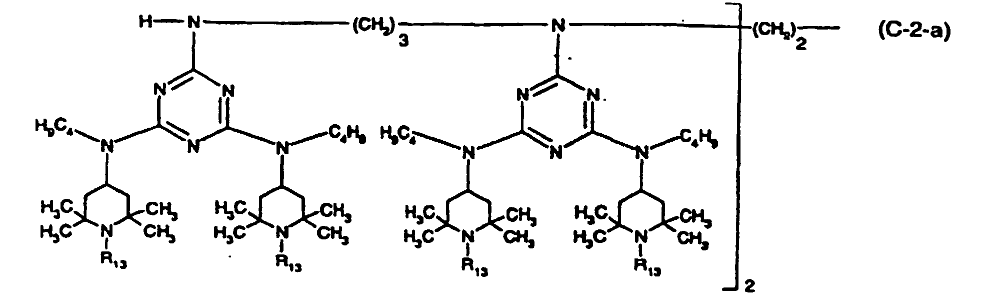 wobei R₁₃ eine der Bedeutungen von R₆ aufweist, 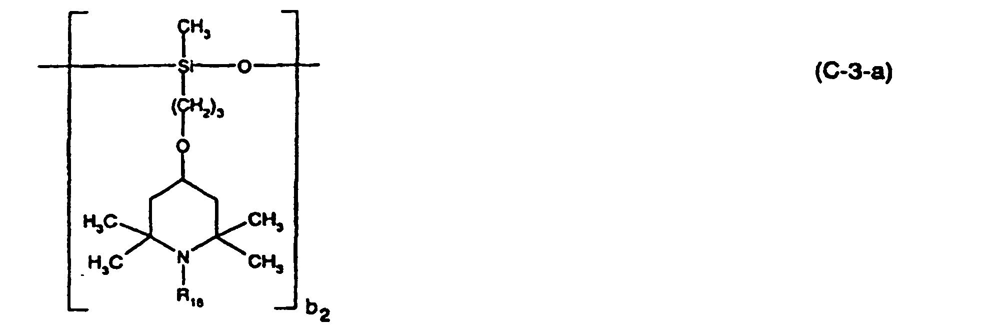 worin b₂ eine Zahl von 2 bis 20 ist und R₁₆ eine der Bedeutungen von R₆ aufweist; 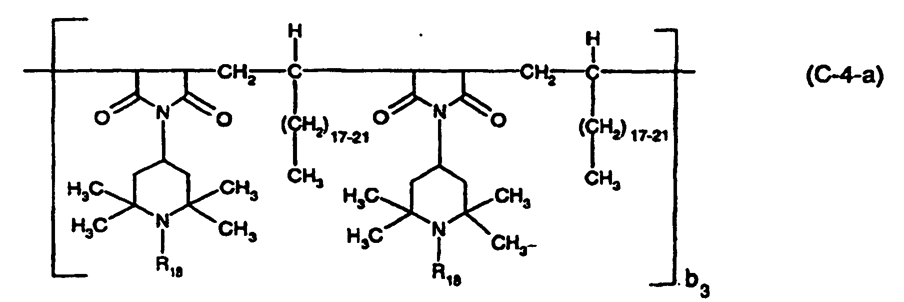 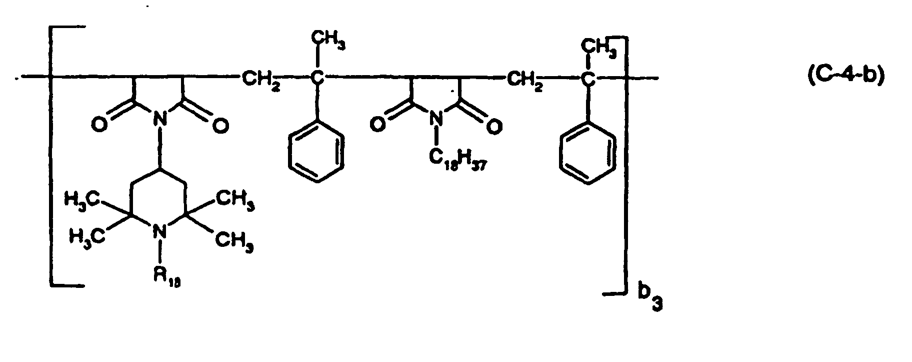 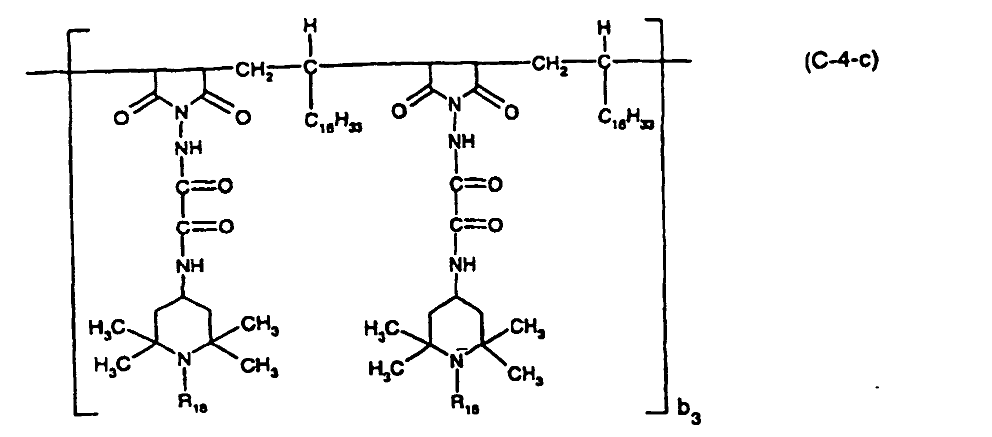 worin b₃ eine Zahl von 1 bis 20 ist und R₁₈ eine der Bedeutungen von R₆ aufweist; 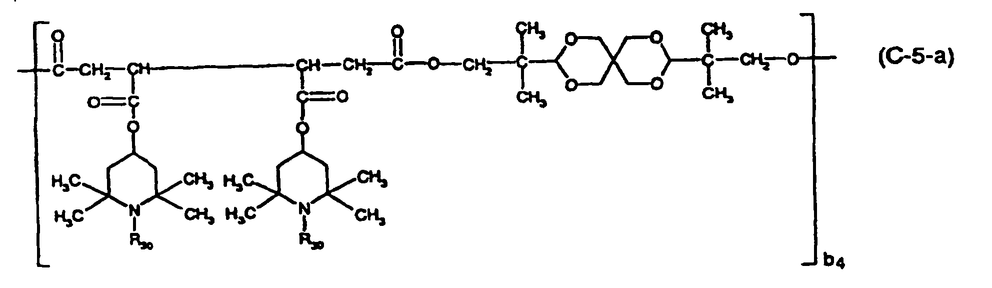 worin b₄ eine Zahl von 1 bis 20 ist und R₃₀ eine der Bedeutungen von R₆ aufweist;
einem Produkt (C-6-a), erhältlich durch Umsetzen eines Produktes, das durch Umsetzung
eines Polyamins der Formel (C-6-1-a) mit Cyanursäurechlorid erhalten wurde, mit einer Verbindung der Formel (C-6-2-a) 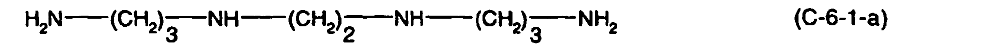 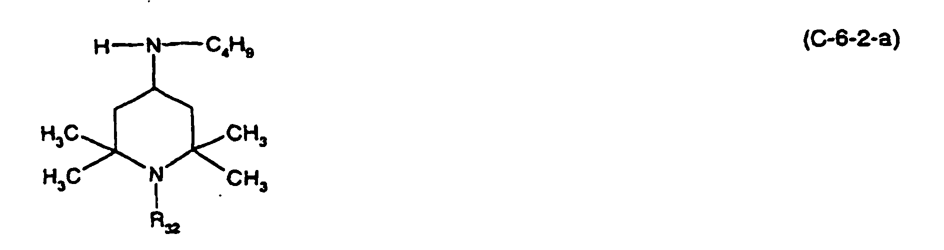 worin R₃₂ eine der Bedeutungen von R₆ aufweist.

10. Landwirtschaftlicher Artikel nach Anspruch 1, wobei
A₈ Wasserstoff. C₁-C₄-Alkyl, C₁-C₁₀-Alkoxy, Cyclohexyloxy, Allyl, Benzyl oder Acetyl ist; E₁, E₈, E₁₂, E₁₃, E₁₆, E₁₈, E₂₂, E₂₃, E₂₅ und E₂₉ Wasserstoff, C₁-C₄-Alkyl, C₁-C₁₀-Alkoxy, Cyclohexyloxy, Allyl, Benzyl oder Acetyl sind;
R₆, R₁₃, R₁₆, R₁₈, R₃₀ und R₃₂ Wasserstoff, C₁-C₄-Alkyl, C₁-C₁₀-Alkoxy, Cyclohexyloxy, Allyl, Benzyl oder Acetyl sind.

11. Landwirtschaftlicher Artikel nach Anspruch 9, wobei A₈, E₁, E₈, E₁₂, E₁₃, E₁₆, E₁₈, E₂₂, E₂₃, E₂₅, E₂₉, R₆, R₁₃, R₁₆, R₁₈, R₃₀ und R₃₂ Wasserstoff oder Methyl sind und E₁ und R₆ außerdem C₁-C₈-Alkoxy sind.

12. Landwirtschaftlicher Artikel nach Anspruch 9, wobei die Komponente (III) eine Verbindung der Formel
(A-1-a), (A-2-a), (A-2-b),
(B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
(C-1-a), (C-1-b), (C-1-c), (C-1-d), (C-2-a), (C-3-a), (C-4-a) oder (C-5-a) oder ein Produkt (C-6-a) ist.

13. Landwirtschaftlicher Artikel nach Anspruch 9, wobei die Komponente (III) eine Verbindung der Formel
(A-1-a), (A-2-a), (A-2-b),
(C-1-a), (C- 1-b), (C-1-c), (C-1-d), (C-2-a), (C-3-a), (C-4-a) oder (C-5-a) oder ein Produkt (C-6-a) ist.

14. Landwirtschaftlicher Artikel nach Anspruch 9, der als Komponente (III) zwei unterschiedliche sterisch gehinderte Aminverbindungen enthält, ausgewählt aus der Gruppe, bestehend aus den Verbindungen der Formeln
(A-1-a), (A-2-a), (A-2-b), (A-3-a), (A-4-a),
(B-1-a), (B- 1-b), (B-1-c), (B-1-d), (B-2-a), (B-3-a), (B-3-b), (B-4-a), (B-4-b), (B-5), (B-6-a),
(B-7), (B-8-a), (B-9-a), (B-9-b), (B-9-c), (B-10-a),
(C-1-a), (C-1-b), (C-1-c), (C-1-d), (C-2-a), (C-3-a), (C-4-a), (C-4-b), (C-4-c) und (C-5-a) und einem Produkt (C-6-a);
mit der Maßgabe, daß zwei unterschiedliche sterisch gehinderte Aminverbindungen nicht aus derselben generischen Formel ausgewählt sind.

15. Landwirtschaftlicher Artikel nach Anspruch 1, wobei
die Komponente (III) eine Verbindung der Formel (A-1-a), oder
eine Verbindung der Formel (C-1-a), worin R₆ Wasserstoff ist, oder
eine Kombination einer Verbindung der Formel (A-1-a) mit einer Verbindung der Formel (C-1-a), worin R₆ Wasserstoff ist, oder
eine Kombination einer Verbindung der Formel (A-1-a) mit einer Verbindung der Formel (C-2-a), worin R₁₃ Methyl ist, oder
eine Kombination einer Verbindung der Formel (B-1-b), worin E₁ Wasserstoff ist, mit einer Verbindung der Formel (C-1-a), worin R₆ Wasserstoff ist, ist.

16. Landwirtschaftlicher Artikel nach Anspruch 1, der außerdem eine oder mehrere der folgenden Komponenten enthält
(IV) ein Antioxidationsmittel,
(V) einen UV-Absorber,
(VI) einen Füllstoff,
(VII) ein Pigment,
(VIII) ein anorganisches oder organisches Salz von Ca, Mg, Zn oder Al.

17. Landwirtschaftlicher Artikel nach Anspruch 1, der außerdem eine aliphatische Polyhydroxycarboxylsäure enthält.

18. Landwirtschaftlicher Artikel nach Anspruch 17, wobei die aliphatische Polyhydroxycarboxylsäure Zitronensäure ist.

19. Landwirtschaftlicher Artikel nach Anspruch 1, der ein Mulchfilm ist.

20. Verfahren zur Kontrolle der Verwitterungsbeständigkeit und des Abbaus eines organischen, polymeren landwirtschaftlichen Artikels, welches das Einbringen der Komponenten
(II) und (III) in das organische Polymer nach Anspruch 1 umfaßt.

21. Verwendung eines Gemisches, enthaltend die Komponenten (II) und (III) nach Anspruch 1, zur Kontrolle der Verwitterungsbeständigkeit und des Abbaus eines organischen, polymeren landwirtschaftlichen Artikels.

22. Zusammensetzung, enthaltend die Komponenten (II) und (III) nach Anspruch 1.

23. Zusammensetzung nach Anspruch 22, mit der Maßgabe, daß, wenn die Zusammensetzung ein Polyolefin enthält, die Gegenwart einer oxidierbaren ungesättigten Verbindung, ausgewählt aus der Gruppe, bestehend aus Naturkautschuk, Styrolbutadienharz, Fett oder Öl, nicht beansprucht wird.

24. Zusammensetzung nach Anspruch 22, mit der Maßgabe, daß, wenn die Zusammensetzung ein Polyolefin enthält, die Gegenwart einer oxidierbaren ungesättigten Verbindung nicht beansprucht wird.

25. Zusammensetzung, enthaltend die Komponenten (II) und (III) nach Anspruch 1, mit der Maßgabe, daß sich die Komponente (III) auf zwei sterisch gehinderte Aminverbindungen bezieht.

26. Stabilisatorzusammensetzung, enthaltend die Komponenten (II) und (III) nach Anspruch 1, für einen organischen, polymeren landwirtschaftlichen Artikel.

27. Stabilisatorzusammensetzung, enthaltend die Komponenten (II) und (III) nach Anspruch 1, für einen organischen, polymeren landwirtschaftlichen Artikel, mit der Maßgabe, daß sich die Komponente (III) auf zwei sterisch gehinderte Aminverbindungen bezieht.

## Revendications

1. Article agricole comprenant les composants :
(I) un polymère organique,
(II) un sel organique de Fe, Ce, Mn, Cu ou Vd, et
(III) un ou plusieurs composés amine à encombrement stérique choisis dans le groupe constitué par
- un composé de formule (A-1) 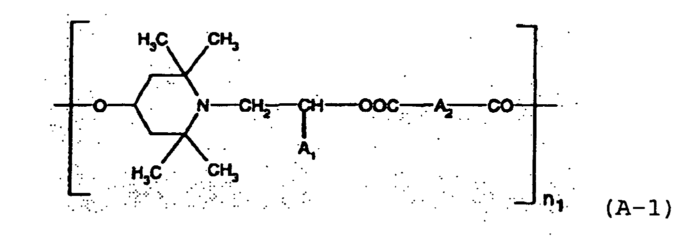 dans laquelle :
A₁ représente un atome d'hydrogène ou un groupe alkyle en C₁ à C₄,
A₂ représente une liaison directe ou un groupe alkylène en C₁ à C₁₀, et
n₁ est un nombre valant de 2 à 50 ;
- au moins un composé de formule (A-2-a) et (A-2-b) 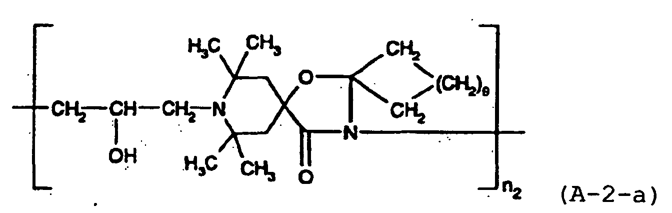 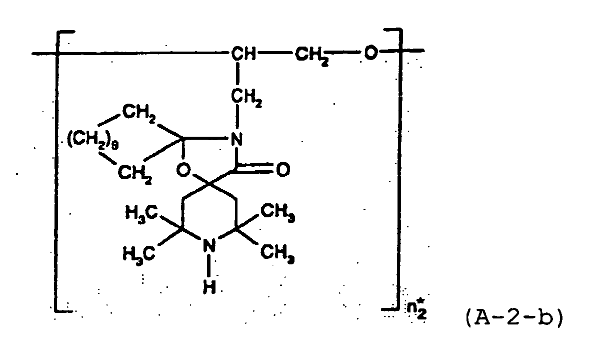 dans lesquelles :
n₂ et n₂* représentent un nombre valant de 2 à 50 ;
- un composé de formule (A-3) 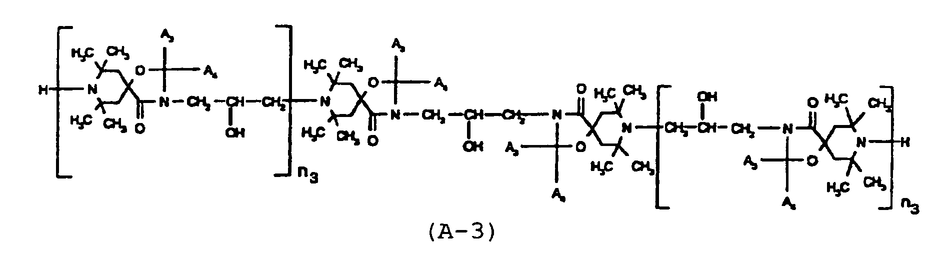 dans laquelle :
A₃ et A₄ représentent chacun, indépendamment l'un de l'autre, un atome d'hydrogène ou un groupe alkyle en C₁ à C₈, ou A₃ et A₄ forment ensemble un groupe alkylène en C₂ à C₁₄, et
les variables n₃ représentent, indépendamment les unes des autres, un nombre valant de 1 à 50 ;
- un composé de formule (A-4) 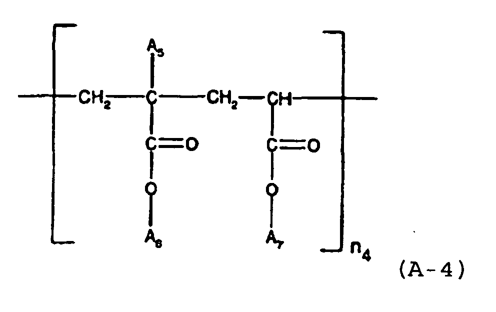 dans laquelle :
n₄ est un nombre valant de 2 à 50,
A₅ représente un atome d'hydrogène ou un groupe alkyle en C₁ à C₄,
les radicaux A₆ et A₇ représentent, indépendamment les uns des autres, un groupe alkyle en C₁ à C₄ ou un groupe de formule (a-I) 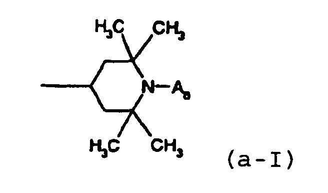
dans laquelle A₈ représente un atome d'hydrogène, un groupe alkyle en C₁ à C₈, -O⁻, -OH, -CH₂CN, alcoxyle en C₁ à C₁₈, alcoxyle en C₂ à C₁₈ substitué par -OH ; cycloalcoxyle en C₅ à C₁₂, alcényle en C₃ à C₆, phénylalkyle en C₇ à C₉ non substitué ou substitué sur le noyau phényle par 1, 2 ou 3 groupes alkyle en C₁ à C₄ ; ou acyle en C₁ à C₈,
à condition qu'au moins 50% des radicaux A₇ représentent un groupe de formule (a-I) ;
- un composé de formule (B-1) 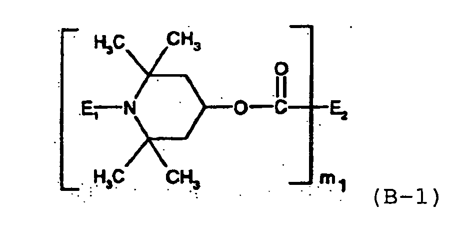 dans laquelle
E₁ représente un atome d'hydrogène, un groupe alkyle en C₁ à C₈, -O-, -OH, -CH₂CN, alcoxyle en C₁ à C₁₈, alcoxyle en C₂ à C₁₈ substitué par -OH ;
cycloalcoxyle en C₅ à C₁₂, alcényle en C₃ à C₆, phénylalkyle en C₇ à C₉ non substitué ou substitué sur le noyau phényle par 1, 2 ou 3 groupes alkyle en C₁ à C₄ ; ou acyle en C₁ à C₈,
m₁ vaut 1, 2 ou 4,
si m₁ vaut 1, E₂ représente un groupe alkyle en C₁ à C₂₅,
si m₁ vaut 2, E₂ représente un groupe alkylène en C₁ à C₁₄ ou un groupe de formule (b-I) 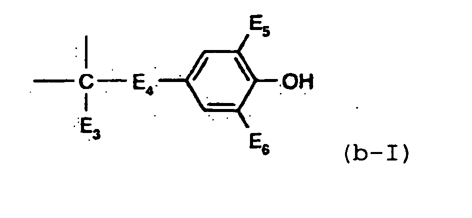 dans laquelle E₃ représente un groupe alkyle en C₁ à C₁₀ ou alcényle en C₂ à C₁₀, E₄ représente un groupe alkylène en C₁ à C₁₀, et
E₅ et E₈ représentent, indépendamment l'un de l'autre, un groupe alkyle en C₁ à C₄, cyclohexyle ou méthylcyclohexyle, et
si m₁ vaut 4, E₂ représente un groupe alcanetétrayle
en C₄ à C₁₀ ;
- un composé de formule (B-2) 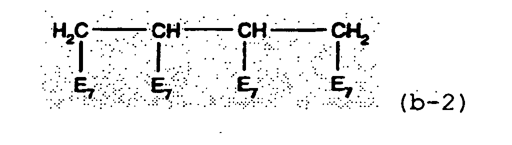 dans laquelle
deux des radicaux E₇ représentent -COO-(alkyle en C₁ à C₂₀), et
deux des radicaux E₇ représentent un groupe de formule (b-II) 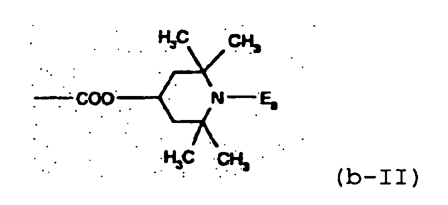 avec E₈ ayant l'une des significations de E₁ ;
- un composé de formule (B-3) 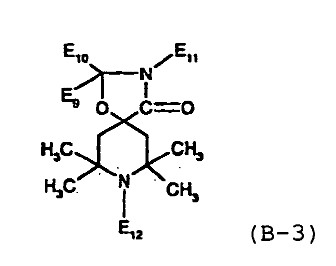 dans laquelle
E₉ et E₁₀ forment ensemble un groupe alkylène en C₂ à C₁₄, E₁₁ représente un atome d'hydrogène ou un groupe -Z₁-COO-Z₂,
Z₁ représente un groupe alkylène en C₂ à C₁₄, et
Z₂ représente un groupe alkyle en C₁ à C₂₄, et
E₁₂ a l'une des significations de E₁ ;
- un composé de formule (B-4) 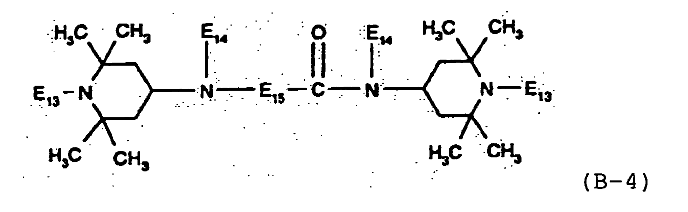 dans laquelle :
les radicaux E₁₃ ont, indépendamment l'un de l'autre, l'une des significations de E₁, les radicaux E₁₄ représentent chacun, indépendamment l'un de l'autre, un atome d'hydrogène ou un groupe alkyle en C₁ à C₁₂ et E₁₅ représente un groupe alkylène en C₁ à C₁₀ ou un groupe alkylidène en C₃ à C₁₀ ;
- un composé de formule (B-5) 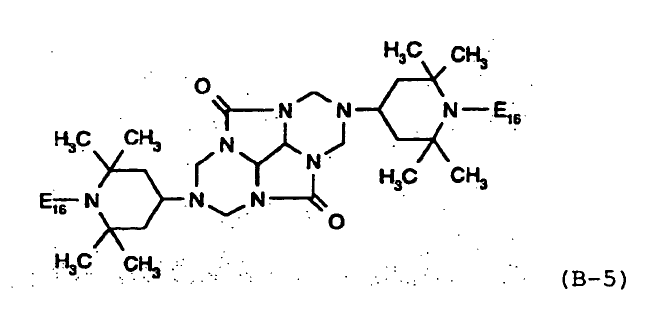 dans laquelle
les radicaux E₁₆ ont, indépendamment l'un de l'autre, l'une des significations de E₁ ;
- un composé de formule (B-6) 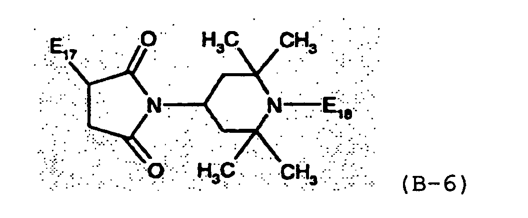 dans laquelle
E₁₇ représente un groupe alkyle en C₁ à C₂₄, et
E₁₈ a l'une des significations de E₁ ;
- un composé de formule (B-7) 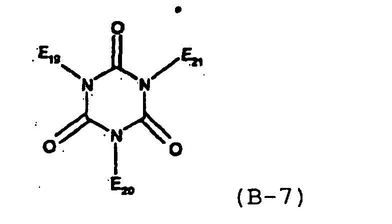 dans laquelle
E₁₉, E₂₀ et E₂₁ représentent, indépendamment les uns des autres, un groupe de formule (b-III) 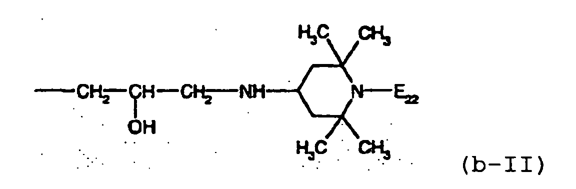 dans laquelle E₂₂ a l'une des significations de E₁ ;
- un composé de formule (B-8) 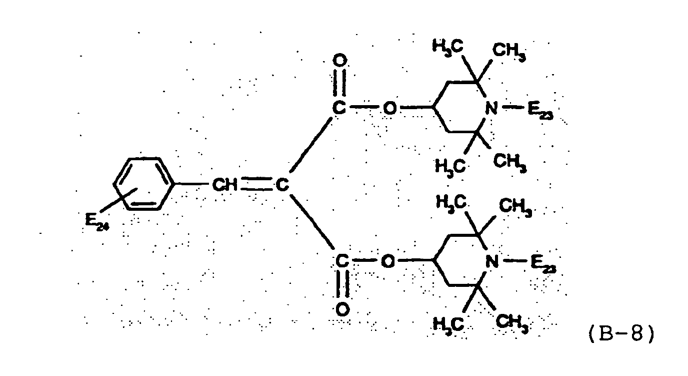 dans laquelle
les radicaux E₂₃ ont, indépendamment l'un de l'autre, l'une des significations de E₁,
et E₂₄ représente un atome d'hydrogène, un groupe alkyle en C₁ à C₁₂ ou alcoxyle en C₁ à C₁₂ ;
- un composé de formule (B-9) 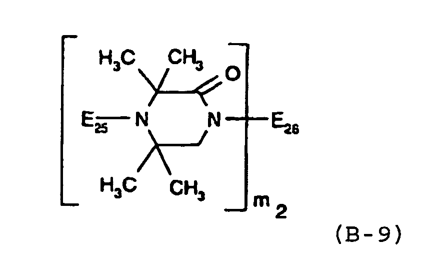 dans laquelle
m₂ vaut 1, 2 or 3,
E₂₅ a l'une des significations de E₁, et
lorsque m₂ vaut 1, E₂₆ représente un groupe 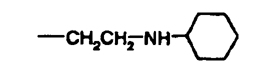 lorsque m₂ vaut 2, E₂₆ représente un groupe alkylène en C₂ à C₂₂, et
lorsque m₂ vaut 3, E₂₆ représente un groupe de formule (b-IV) 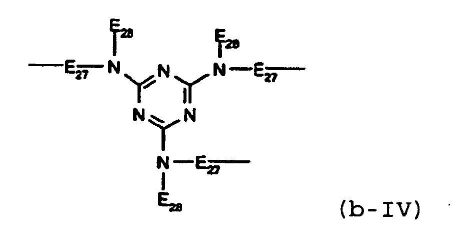 dans laquelle les radicaux E₂₇ représentent, indépendamment les uns des autres, un groupe alkylène en C₂ à C₁₂,
et les radicaux E₂₈ représentent, indépendamment les uns des autres, un groupe alkyle en C₁ à C₁₂ ou cycloalkyle en C₅ à C₁₂ ;
- un composé de formule (B-10) 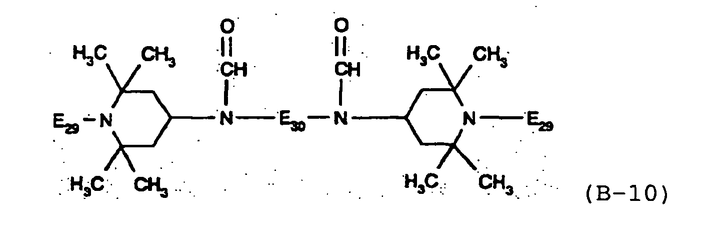 dans laquelle
les radicaux E₂₉ ont, indépendamment l'un de l'autre, l'une des significations de E₁, et
E₃₀ représente un groupe alkylène en C₂ à C₂₂, cycloalkylène en C₅ à C₇, (alkylène en C₁ à C₄)-di-(cycloalkylène en C₅ à C₇), phénylène ou phénylène-di(alkylène en C₁ à C₄) ;
- un composé de formule (C-1) 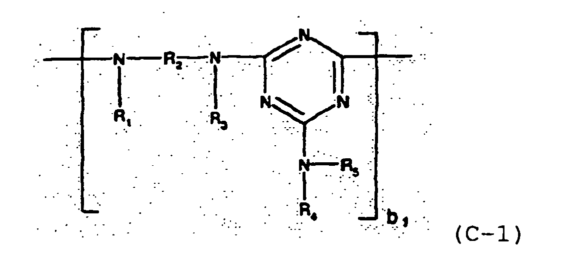 dans laquelle
R₁, R₃, R₄ et R₅ représentent chacun, indépendamment les uns des autres, un atome d'hydrogène, un groupe alkyle en C₁ à C₁₂, cycloalkyle en C₅ à C₁₂, cycloalkyle en C₅ à C₁₂ substitué par un alkyle en C₁ à C₄, phényle, phényle substitué par -OH et/ou par un groupe alkyle en C₁ à C₁₀ ; phénylalkyle en C₇ à C₉, phénylalkyle en C₇ à C₉ substitué sur le noyau phényle par -OH et/ou alkyle en C₁ à C₁₀ ; ou un groupe de formule (C-I) 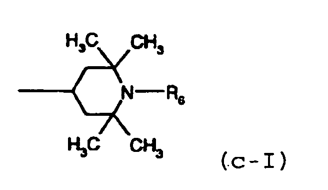 R₂ représente un groupe alkylène en C₂ à C₁₈, cycloalkylène en C₅ à C₇ ou (alkylène en C₁ à C₄)-di-(cycloalkylène en C₅ à C₇), ou
les radicaux R₁, R₂ et R₃, conjointement avec les atomes d'azote auxquels ils sont liés, forment un hétérocycle comportant de 5 à 10 éléments, ou
R₄ et R₅, conjointement avec l'atome d'azote auquel ils sont liés, forment un hétérocycle comportant de 5 à 10 éléments,
R₆ représente un atome d'hydrogène, un groupe alkyle en C₁ à C₈, -O-, -OH, -CH₂CN, alcoxyle en C₁ à C₁₈, alcoxyle en C₂ à C₁₈ substitué par -OH ; cycloalcoxyle en C₅ à C₁₂, alcényle en C₃ à C₆, phénylalkyle en C₇ à C₉ non substitué ou substitué sur le noyau phényle par 1, 2 ou 3 groupes alkyle en C₁ à C₄ ; ou un groupe acyle en C₁ à C₈, et
b₁ est un nombre valant de 2 à 50,
à condition qu'au moins un des radicaux R₁, R₃, R₄ et R₅ représente un groupe de formule (c-I) ;
- un composé de formule (C-2) 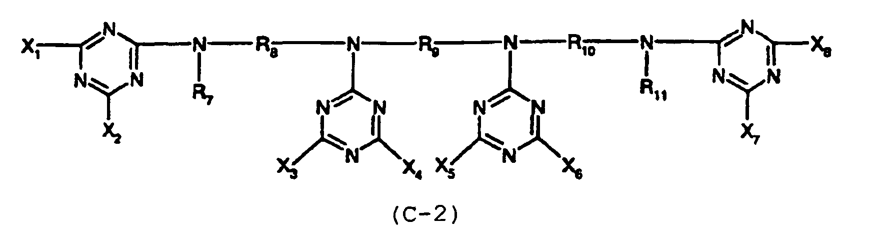 dans laquelle
R₇ et R₁₁ représentent chacun, indépendamment l'un de l'autre, un atome d'hydrogène ou un groupe alkyle en C₁ à C₁₂,
R₈, R₉ et R₁₀ représentent, indépendamment les uns des autres, un groupe alkylène en C₂ à C₁₀, et
X₁, X₂, X₃, X₄, X₅, X₆, X₇ et X₈ représentent, indépendamment les uns des autres, un groupe de formule (c-II), 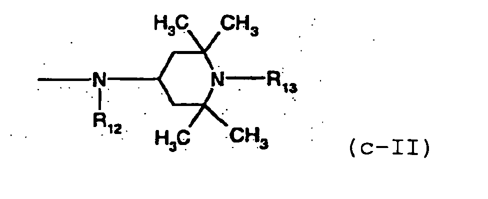 dans laquelle R₁₂ représente un atome d'hydrogène, un groupe alkyle en C₁ à C₁₂, cycloalkyle en C₅ à C₁₂, cycloalkyle en C₅ à C₁₂ substitué par un groupe alkyle en C₁ à C₄, phényle, -OH- et/ou phényle substitué par un groupe alkyle en C₁ à C₁₀, phénylalkyle en C₇ à C₉, phénylalkyle en C₇ à C₉ substitué sur le noyau phényle par -OH et/ou alkyle en C₁ à C₁₀ ; ou un groupe de formule (c-I) tel que défini ci-dessus, et
R₁₃ a l'une des significations de R₆ ;
- un composé de formule (C-3) 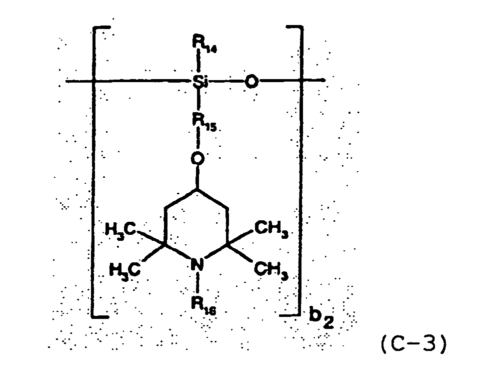 dans laquelle
R₁₄ représente un groupe alkyle en C₁ à C₁₀, cycloalkyle en C₅ à C₁₂, cycloalkyle en C₅ à C₁₂ substitué par un groupe alkyle en C₁ à C₄, phényle ou phényle substitué par un groupe alkyle en C₁ à C₁₀,
R₁₅ représente un groupe alkylène en C₃ à C₁₀,
R₁₆ a l'une des significations de R₆, et b2 est un nombre valant de 2 à 50 ;
- un composé de formule (C-4) 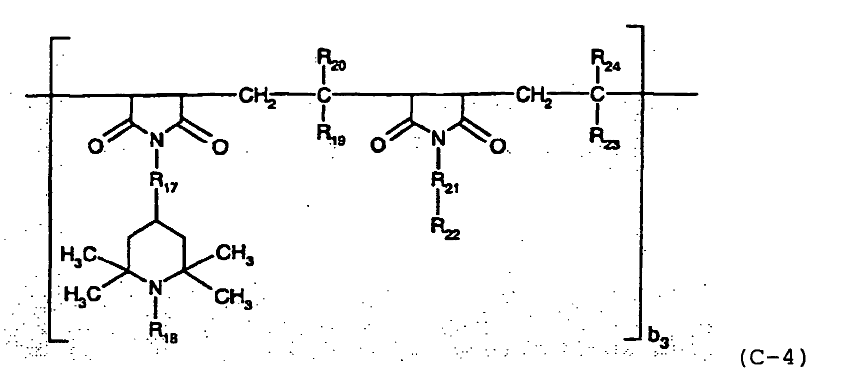 dans laquelle
R₁₇ et R₂₁ représentent, indépendamment l'un de l'autre, une liaison directe ou un groupe -N(X₉)-CO-X₁₀-CO-N(X₁₁), dans lequel X₉ et X₁₁ représentent chacun, indépendamment l'un de l'autre, un atome d'hydrogène, un groupe alkyle en C₁ à C₈, cycloalkyle en C₅ à C₁₂, phényle, phénylalkyle en C₇ à C₉ ou un groupe de formule (c-I),
X₁₀ représente une liaison directe ou un groupe alkylène en C₁ à C₄,
R₁₈ a l'une des significations de R₆,
R₁₉, R₂₀, R₂₃ et R₂₄ représentent chacun, indépendamment les uns des autres, un atome d'hydrogène, un groupe alkyle en C₁ à C₃₀, cycloalkyle en C₅ à C₁₂ ou phényle,
R₂₂ représente un atome d'hydrogène, un groupe alkyle en C₁ à C₃₀, cycloalkyle en C₅ à C₁₂, phényle, phénylalkyle en C₇ à C₉ ou un groupe de formule (c-I), et
b3 est un nombre valant de 1 à 50 ;
- un composé de formule (C-5) 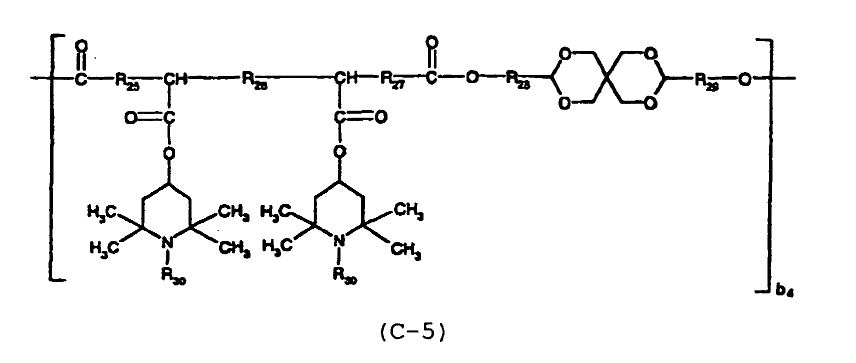 dans laquelle
R₂₅, R₂₆, R₂₇, R₂₈ et R₂₉ représentent, indépendamment les uns des autres, une liaison directe ou un groupe alkylène en C₁ à C₁₀,
R₃₀ a l'une des significations de R₆, et
b4 est un nombre valant de 1 à 50 ; et
- un produit (C-6) pouvant être obtenu en faisant réagir un produit, obtenu par la réaction d'une polyamine de formule (C-6-1) avec du chlorure cyanurique, avec un composé de formule (C-6-2) 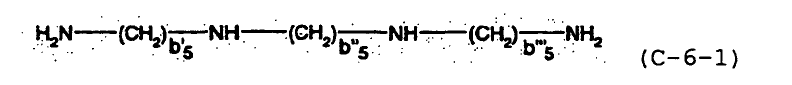 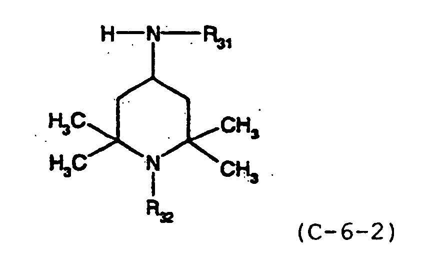 dans laquelle
b'5, b''5 et b'''5 représentent, indépendamment les uns des autres, un nombre valant de 2 à 12,
R₃₁ représente un atome d'hydrogène, un groupe alkyle en C₁ à C₁₂, cycloalkyle en C₅ à C₁₂, phényle ou phénylalkyle en C₇ à C₉, et
R₃₂ a l'une des significations de R₆.

2. Article agricole selon la revendication 1, dans lequel
le composant (I) est une polyoléfine homo- ou copolymère, une polyoléfine modifiée par l'amidon, un polymère composite à base d'amidon ou un biopolymère.

3. Article agricole selon la revendication 1, dans lequel
le composant (I) est le polyéthylène, le polypropylène, un copolymère de polyéthylène ou un copolymère de polypropylène.

4. Article agricole selon la revendication 1, dans lequel
le composant (I) est un biopolymère choisi dans le groupe constitué par la polycaprolactone, le poly(acide lactique), le poly(acide glycolique), le polyhydroxybutyrate-valérate, le poly(succinate de butylène), le poly(alcool vinylique), le polyhydroxyalcanoate et le poly(adipate d'éthylène).

5. Article agricole selon la revendication 1, dans lequel
le composant (II) représente un carboxylate en C₂ à C₂₄ de Fe, Ce, Co, Mn, Cu ou Vd.

6. Un article agricole selon la revendication 1, dans lequel le composant (II) représente un carboxylate en C₂ à C₂₄ de Ce, Co ou Mn.

7. Article agricole selon la revendication 1, dans lequel
le composant (II) représente un groupe alcanoate en C₁₀ à C₂₀ de Ce, Co ou Mn ou un groupe alcénoate en C₁₀ à C₂₀ de Ce, Co ou Mn.

8. Article agricole selon la revendication 1, dans lequel
- A₁ représente un atome d'hydrogène ou un groupe méthyle,
- A₂ représente une liaison directe ou un groupe alkylène en C₂ à C₆, et
- n₁ est un nombre valant de 2 à 25 ;
- n₂ et n₂* représentent un nombre valant de 2 à 25 ;
- A₃ et A₄ représentent chacun, indépendamment l'un de l'autre, un atome d'hydrogène ou un groupe alkyle en C₁ à C₄, ou A₃ et A₄ forment ensemble un groupe alkylène en C₉ à C₁₃, et
- les variables n₃ représentent, indépendamment les unes des autres, un nombre valant de 1 à 25 ;
- n₄ est un nombre valant de 2 à 25,
- A₅ et A₆ représentent, indépendamment l'un de l'autre, un groupe alkyle en C₁ à C₄, et
- A₇ représente un groupe alkyle en C₁ à C₄ ou un groupe de formule (a-I)
à condition qu'au moins 50% des radicaux A₇ représentent un groupe de formule (a-I) ;
- m₁ vaut 1, 2 ou 4,
- si m₁ vaut 1, E₂ représente un groupe alkyle en C₁₂ à C₂₀,
- si m₁ vaut 2, E₂ représente un groupe alkylène en C₂ à C₁₀ ou un groupe de formule (b-I),
- E₃ représente un groupe alkyle en C₁ à C₄,
- E₄ représente un groupe alkylène en C₁ à C₆, et
- E₅ et E₆ représentent, indépendamment l'un de l'autre, un groupe alkyle en C₁ à C₄, et
- si m₁ vaut 4, E₂ représente un groupe alcanetétrayle en C₄ à C₈ ;
- deux des radicaux E₇ représentent -COO-(alkyle en C₁₀ à C₁₅), et
- deux des radicaux E₇ représentent un groupe de formule (b-II)
- E₉ et E₁₀ forment ensemble un groupe alkylène en C₉ à C₁₃,
- E₁₁ représente un atome d'hydrogène ou un groupe - Z₁-COO-Z₂,
- Z₁ représente un groupe alkylène en C₂ à C₆, et
- Z₂ représente un groupe alkyle en C₁₀ à C₁₆ ;
- E₁₄ représente un atome d'hydrogène, et
- E₁₅ représente un groupe alkylène en C₂ à C₆ ou un groupe alkylidène en C₃ à C₅ ;
- E₁₇ représente un groupe alkyle en C₁₀ à C₁₄ ;
- E₂₄ représente un groupe alcoxyle en C₁ à C₄ ;
- m₂ vaut 1, 2 or 3,
- lorsque m₂ vaut 1, E₂₆ représente un groupe 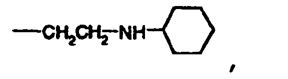
- lorsque m₂ vaut 2, E₂₆ représente un groupe alkylène en C₂ à C₆, et
- lorsque m₂ vaut 3, E₂₆ représente un groupe de formule (b-IV)
- les radicaux E₂₇ représentent, indépendamment les uns des autres, un groupe alkylène en C₂ à C₆, et
- les radicaux E₂₈ représentent, indépendamment les uns des autres, un groupe alkyle en C₁ à C₄ ou cycloalkyle en C₅ à C₈ ; et
- E₃₀ représente un groupe alkylène en C₂ à C₈ ;
- R₁ et R₃ représentent, indépendamment l'un de l'autre, un groupe de formule (c-I)
- R₂ représente un groupe alkylène en C₂ à C₈,
- R₄ et R₅ représentent chacun, indépendamment l'un de l'autre, un atome d'hydrogène, un groupe alkyle en C₁ à C₁₂, cycloalkyle en C₅ à C₈ ou un groupe de formule (c-I), ou les radicaux R₄ et R₅ forment, conjointement avec l'atome d'azote auquel ils sont liés, un hétérocycle comportant 5 à 10 éléments, et
- b₁ est un nombre valant de 2 à 25 ;
- R₇ et R₁₁ représentent chacun, indépendamment l'un de l'autre, un atome d'hydrogène ou un groupe alkyle en C₁ à C₄,
- R₈, R₉ et R₁₀ représentent, indépendamment les uns des autres, un groupe alkylène en C₂ à C₄, et
- X₁, X₂, X₃, X₄, X₅, X₆, X₇ et X₈ représentent, indépendamment les uns des autres, un groupe de formule (c-II),
- R₁₂ représente un atome d'hydrogène, un groupe alkyle en C₁ à C₄, cycloalkyle en C₅ à C₈ ou un groupe de formule (c-I) ;
- R₁₄ représente un groupe alkyle en C₁ à C₄,
- R₁₅ représente un groupe alkylène en C₃ à C₆, et
- b₂ est un nombre valant de 2 à 25 ;
- R₁₇ et R₂₁ représentent, indépendamment l'un de l'autre, une liaison directe ou un groupe -N(X₉)-CO-X₁₀-CO-N(X₁₁)-,
- X₉ et X₁₁ représentent, indépendamment l'un de l'autre, un atome d'hydrogène ou un groupe alkyle en C₁ à C₄,
- X₁₀ représente une liaison directe,
- R₁₉ et R₂₃ représentent un groupe alkyle en C₁ à C₂₅ ou phényle,
- R₂₀ et R₂₄ représentent un atome d'hydrogène ou un groupe alkyle en C₁ à C₄,
- R₂₂ représente un groupe alkyle en C₁ à C₂₅ ou un groupe de formule (c-I), et
- b₃ est un nombre valant de 1 à 25 ;
- R₂₅, R₂₆, R₂₇, R₂₈ et R₂₉ représentent, indépendamment les uns des autres, une liaison directe ou un groupe alkylène en C₁ à C₄,
- b₄ est un nombre valant de 1 à 25 ;
- b'₅, b"₅ et b'''₅ représentent, indépendamment les uns des autres, un nombre valant de 2 à 4, et
- R₃₁ représente un atome d'hydrogène, un groupe alkyle en C₁ à C₄, cycloalkyle en C₅ à C₈, phényle ou benzyle.

9. Article agricole selon la revendication 1, dans lequel
le composant (III) représente un ou plusieurs composés amine à encombrement stérique choisis dans le groupe constitué par les composés de formule :
- (A-1-a), (A-2-a), (A-2-b), (A-3-a), (A-4-a),
- (B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
- (C-1-a), (C-1-b), (C-1-c), (C-1-d), (C-2-a), (C-3-a), (C-4-a), (C-4-b), (C-4-c) et (C-5-a) et un produit (C-6-a) ; 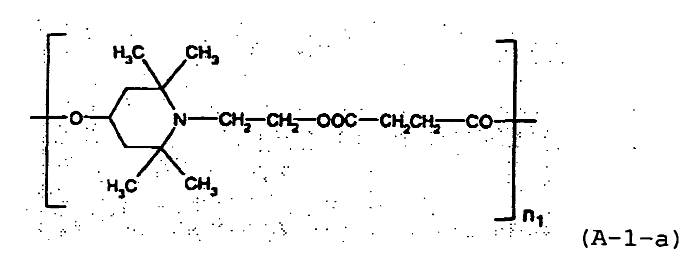 dans laquelle n₁ est un nombre valant de 2 à 20 ; 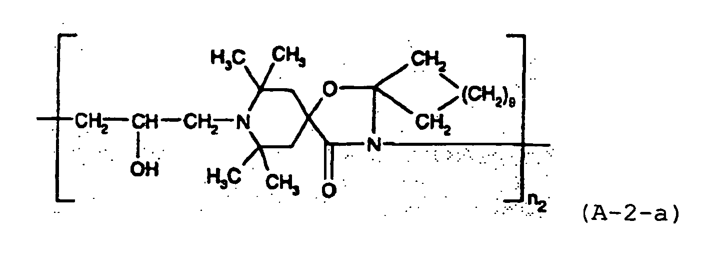 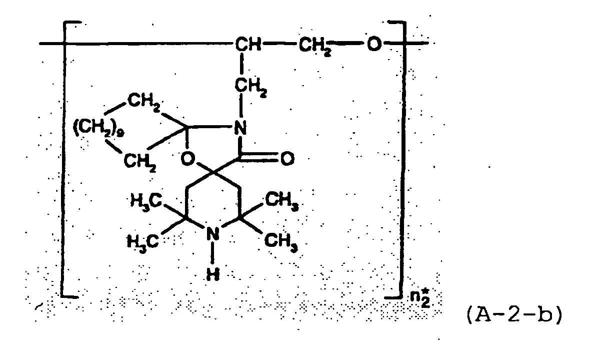 dans lesquelles n₂ et n₂* représentent un nombre valant de 2 à 20 ; 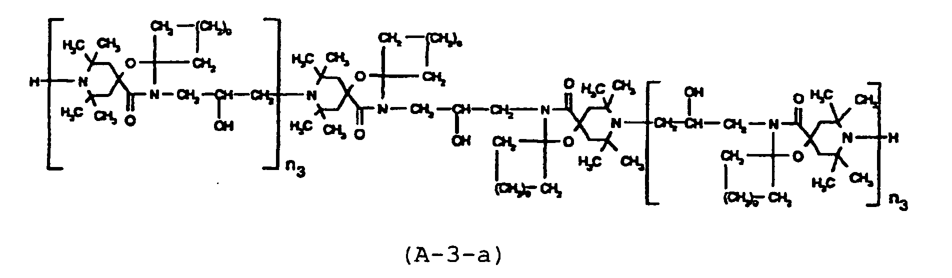 dans laquelle les variables n₃ représentent, indépendamment les unes des autres, un nombre valant de 1 à 20 ; 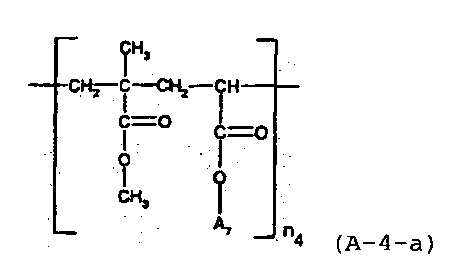 dans laquelle n₄ est un nombre valant de 2 à 20, et au moins 50% des radicaux A₇ représentent un groupe de formule (a-I) 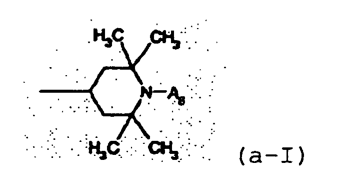 dans laquelle A₈ représente un atome d'hydrogène, un groupe alkyle en C₁ à C₈, O⁻, -OH, -CH₂CN, alcoxyle en C₁ à C₁₈, cycloalcoxyle en C₅ à C₁₂, alcényle en C₃ à C₆, phénylalkyle en C₇ à C₉ non substitué ou substitué sur le noyau phényle par 1, 2 ou 3 groupes alkyle en C₁ à C₄ ; ou acyle en C₁ à C₈,
et les radicaux A₇ restants représentent un groupe éthyle ; 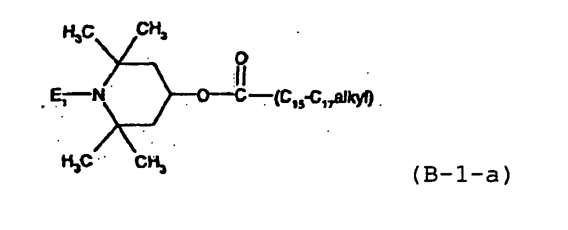 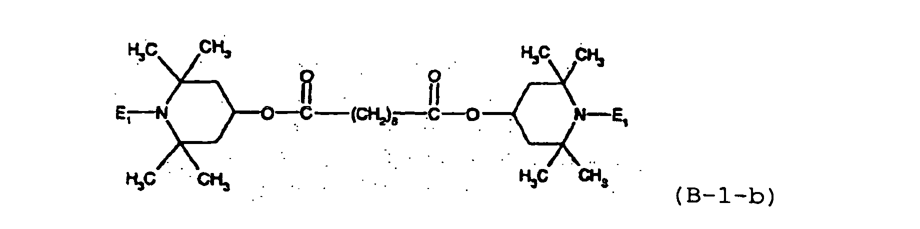 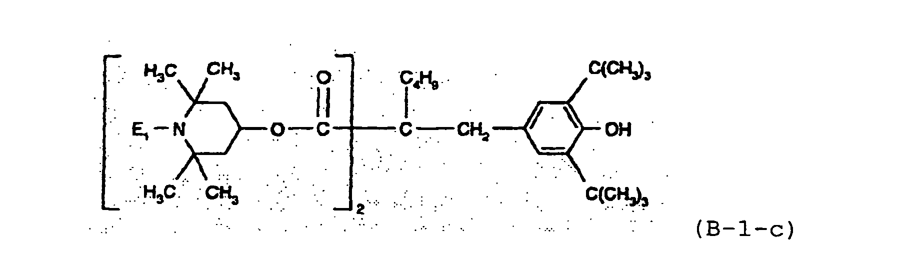 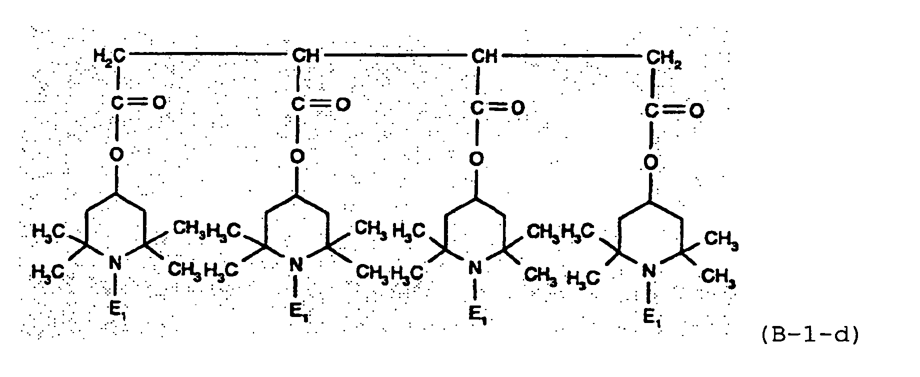 dans lesquelles E₁ représente un atome d'hydrogène, un groupe alkyle en C₁ à C₈, O⁻, -OH, -CH₂CN, alcoxyle en C₁ à C₁₈, cycloalcoxyle en C₅ à C₁₂, alcényle en C₃ à C₆, phénylalkyle en C₇ à C₉ non substitué ou substitué sur le noyau phényle par 1, 2 ou 3 groupes alkyle en C₁ à C₄ ; ou alkylène en C₁ à C₃ ; 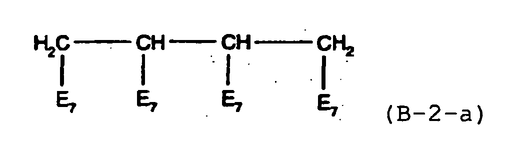 dans laquelle deux des radicaux E₇ représentent -COO-C₁₃H₂₇ et
deux des radicaux E₇ représentent 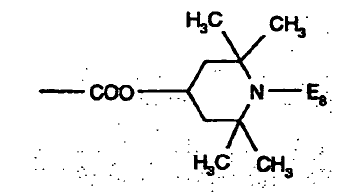 et E₈ a l'une des significations de E₁ ; 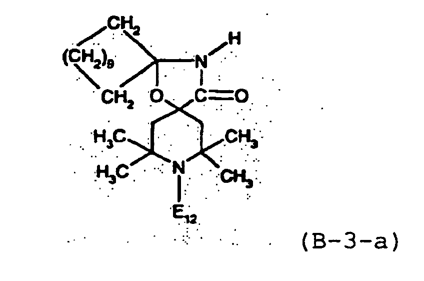 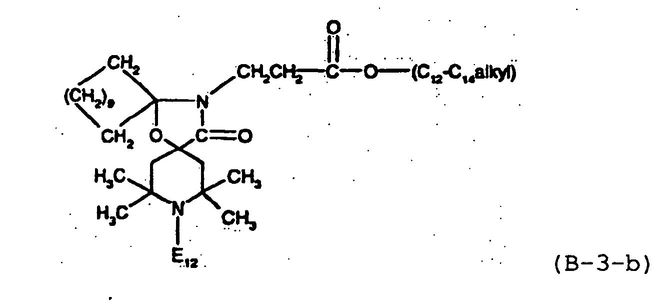 dans lesquelles E₁₂ a l'une des significations de E₁ ; 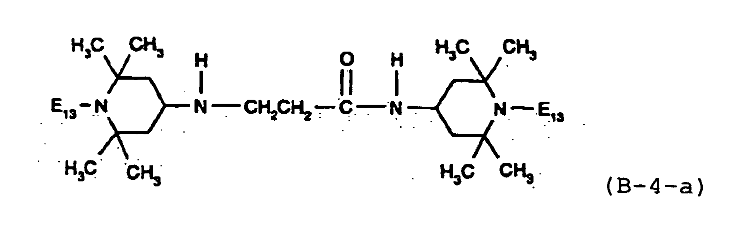 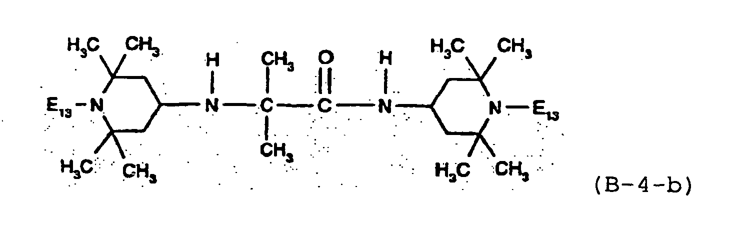 dans lesquelles E₁₃ a l'une des significations de E₁ ; 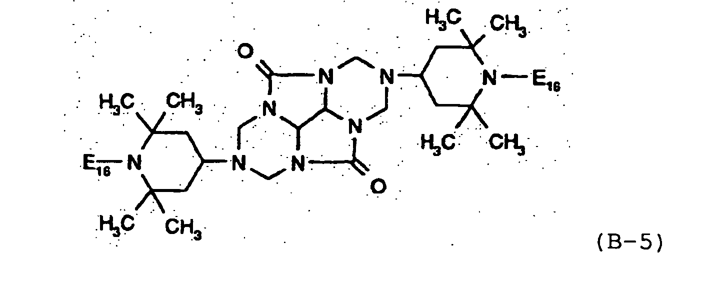 dans laquelle E₁₆ a l'une des significations de E₁ ; 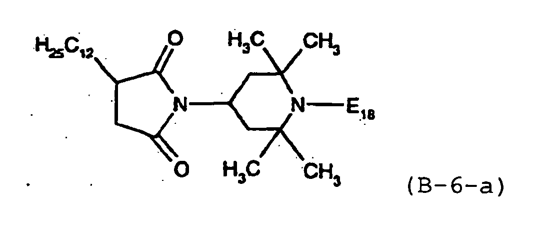 dans laquelle E₁₈ a l'une des significations de E₁ ; 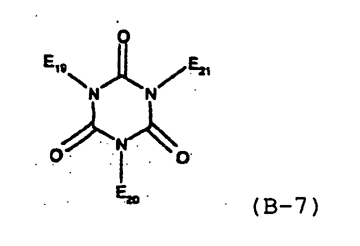 dans laquelle E₁₉, E₂₀ et E₂₁ représentent, indépendamment les uns des autres, un groupe de formule (b-III) 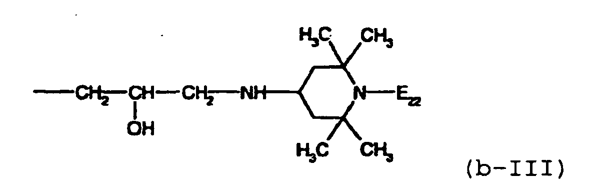 dans laquelle E₂₂ a l'une des significations de E₁ ; 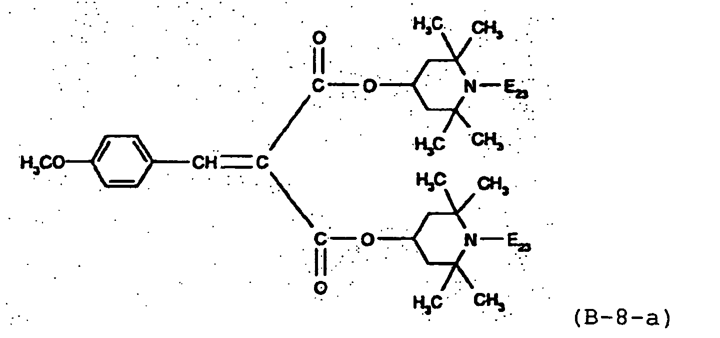 dans laquelle E₂₃ a l'une des significations de E₁ ; 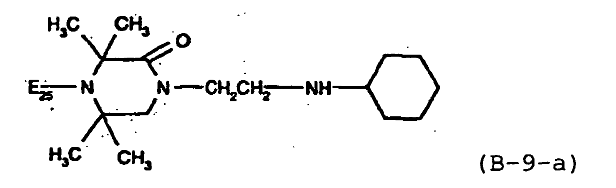 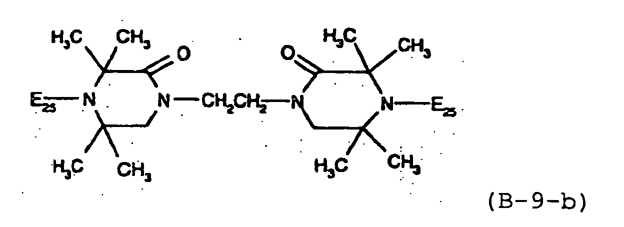 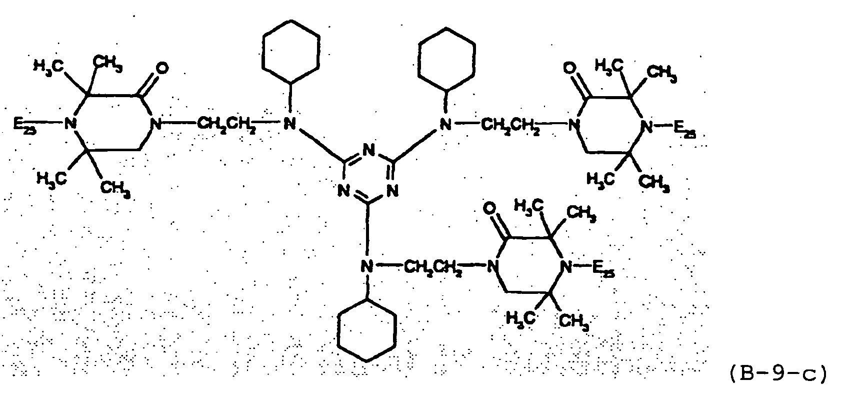 dans lesquelles E₂₃ a l'une des significations de E₁ ; 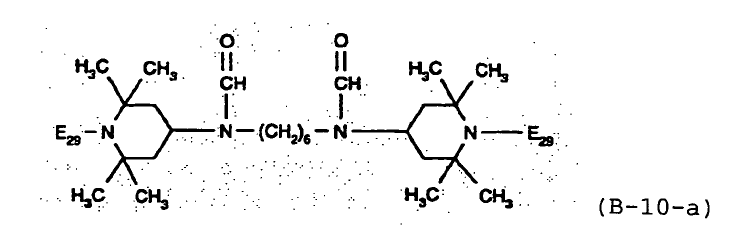 dans laquelle E₂₉ a l'une des significations de E₁ ; 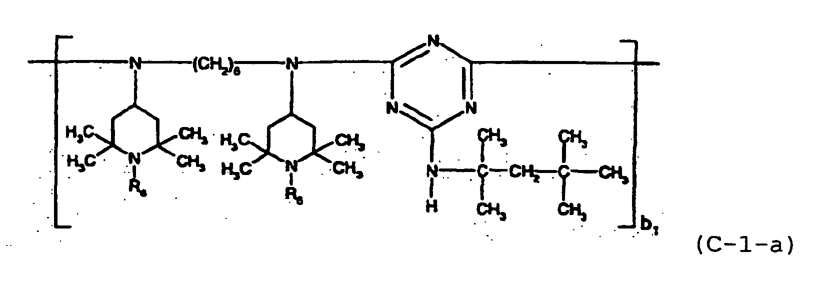 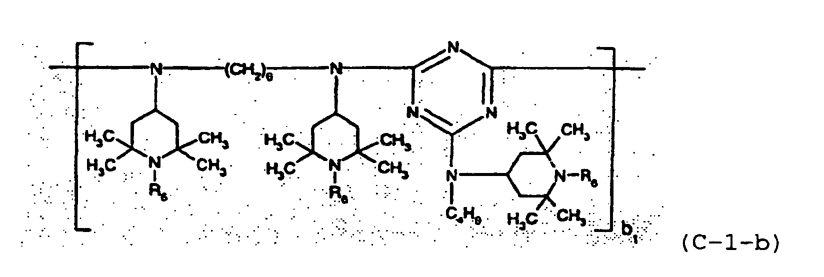 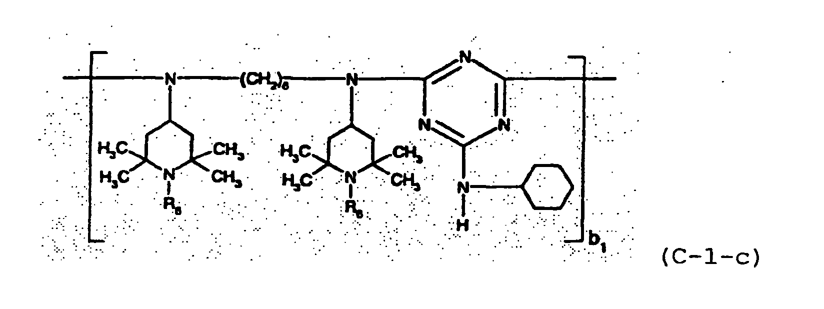 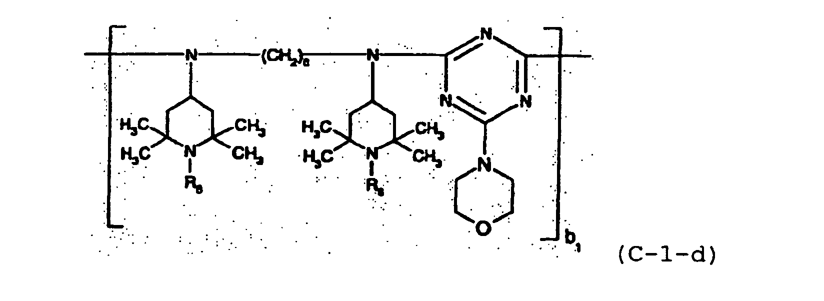 dans lesquelles b₁ représente un nombre valant de 2 à 20 et R₆ représente un atome d'hydrogène, un groupe alkyle en C₁ à C₈, -O⁻, -OH, -CH₂CN, alcoxyle en C₁ à C₁₈, cycloalcoxyle en C₅ à C₁₂, alcényle en C₃ à C₆, phénylalkyle en C₇ à C₉ non substitué ou substitué sur le noyau phényle par 1, 2 ou 3 groupes alkyle en C₁ à C₄ ; ou acyle en C₁ à C₈ ; 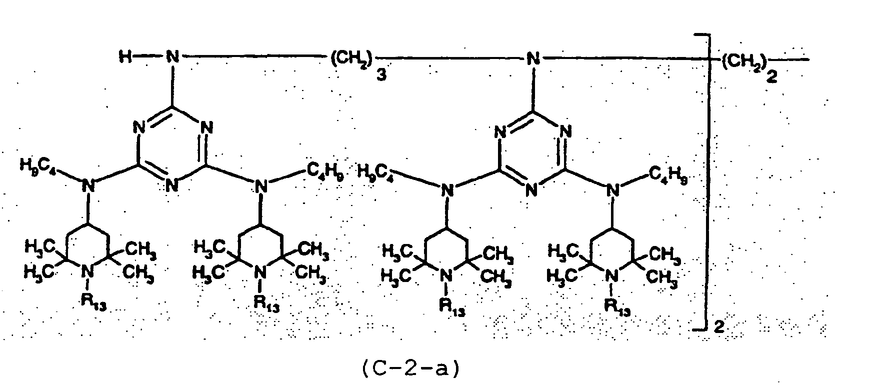 dans laquelle R₁₃ a l'une des significations de R₆ ; 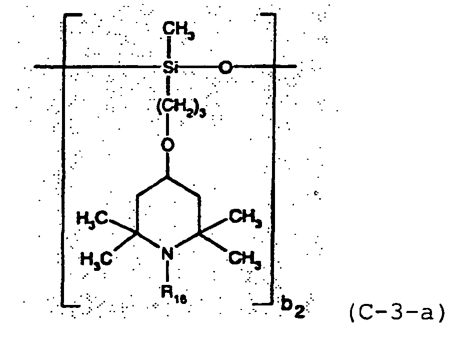 dans laquelle b₂ est un nombre valant de 2 à 20 et R₁₆ a l'une des significations de R₆ ; 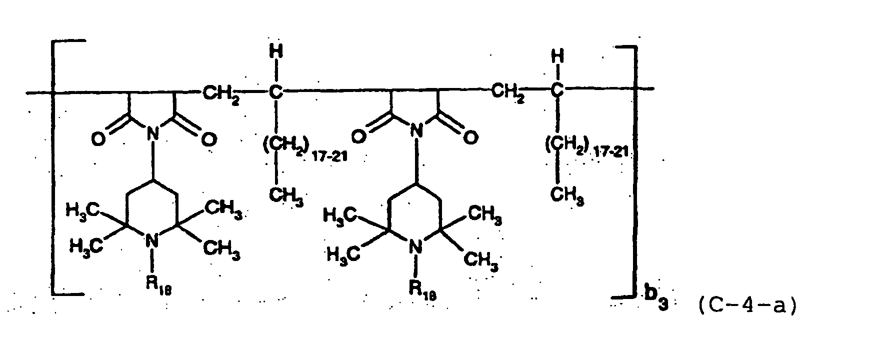 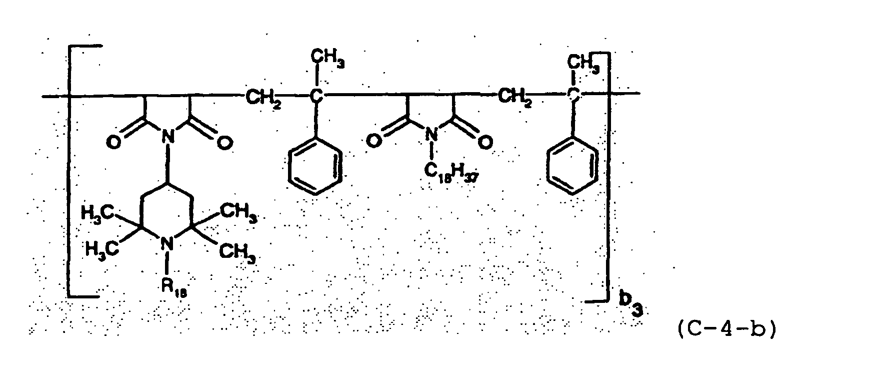 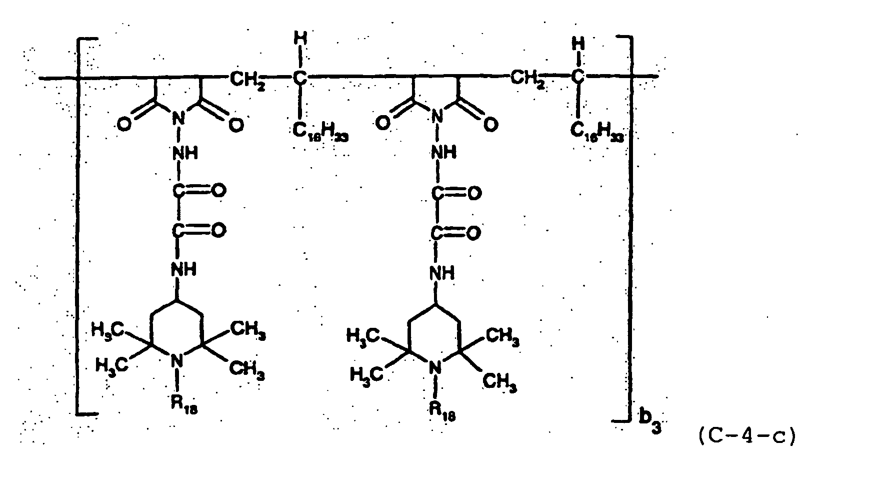 dans lesquelles b₃ est un nombre valant de 1 à 20 et R₁₈ a l'une des significations de R₆ ; 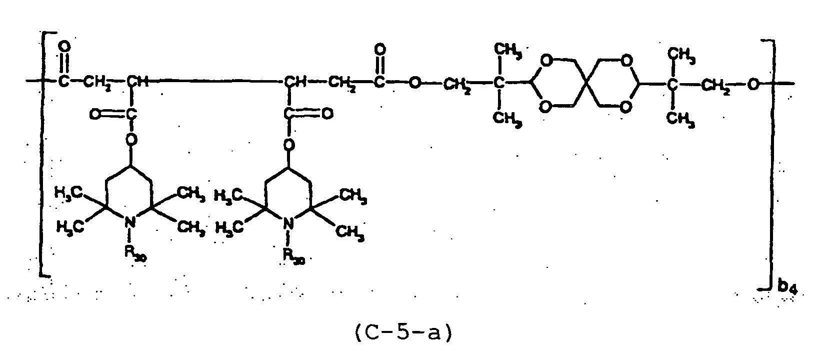 dans laquelle b₄ est un nombre valant de 1 à 20 et R₃₀ a l'une des significations de R₆ ;
- un produit (C-6-a) pouvant être obtenu en faisant réagir un produit, obtenu par la réaction d'une polyamine de formule (C-6-1-a) avec du chlorure cyanurique, avec un composé de formule (C-6-2-a) 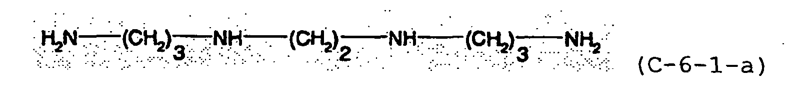 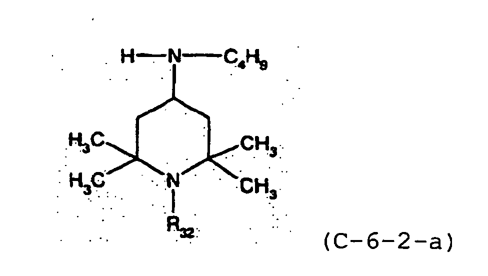
dans laquelle R₃₂ a l'une des significations de R₆.

10. Article agricole selon la revendication 1, dans lequel
- A₈ représente un atome d'hydrogène, un groupe alkyle en C₁ à C₄, alcoxyle en C₁ à C₁₀, cyclohexyloxy, allyle, benzyle ou acétyle ;
- E₁, E₈, E₁₂, E₁₃, E₁₆, E₁₈, E₂₂, E₂₃, E₂₅ et E₂₉ représentent chacun un atome d'hydrogène, un groupe alkyle en C₁ à C₄, alcoxyle en C₁ en C₁₀, cyclohexyloxy, allyle, benzyle ou acétyle ;
- R₆, R₁₃, R₁₆, R₁₈, R₃₀ et R₃₂ représentent chacun un atome d'hydrogène, un groupe alkyle en C₁ à C₄, alcoxyle en C₁ à C₁₀, cyclohexyloxy, allyle, benzyle ou acétyle.

11. Article agricole selon la revendication 9, dans lequel
A₈, E₁, E₈, E₁₂, E₁₃, E₁₆, E₁₈, E₂₂, E₂₃, E₂₅, E₂₉, R₆, R₁₃, R₁₆, R₁₈, R₃₀ et R₃₂ représentent chacun un atome d'hydrogène ou un groupe méthyle et E₁ et R₆ représentent en outre un groupe alcoxyle en C₁ à C₈.

12. Article agricole selon la revendication 9, dans lequel
le composant (III) est un composé de formule
- (A-1-a), (A-2-a), (A-2-b),
- (B-1-a), (B-1-b), (B-1-c), (B-1-d), (B-2-a), (B-3-a), (B-3-b), (B-4-a), (B-4-b), (B-5), (B-6-a), (B-8-a), (B-9-b), (B-10-a),
- (C-1-a), (C-1-b), (C-1-c), (C-1-d), (C-2-a), (C-3-a), (C-4-a) ou (C-5-a), ou un produit (C-6-a).

13. Article agricole selon la revendication 9, dans lequel
le composant (III) est un composé de formule
- (A-1-a), (A-2-a), (A-2-b),
- (C-1-a), (C-1-b), (C-1-c), (C-1-d), (C-2-a), (C-3-a), (C-4-a) ou (C-5-a), ou un produit (C-6-a).

14. Article agricole selon la revendication 9, qui contient en tant que composant (III) deux composés amine à encombrement stérique différents choisis dans le groupe constitué par les composés de formule
- (A-1-a), (A-2-a), (A-2-b), (A-3-a), (A-4-a),
- (B-1-a), (B-1-b), (B-1-c), (B-1-d), (B-2-a), (B-3-a), (B-3-b), (B-4-a), (B-4-b), (B-5), (B-6-a), (B-7), (B-8-a), (B-9-a), (B-9-b), (B-9-c), (B-10-a),
- (C-1-a), (C-1-b), (C-1-c), (C-1-d), (C-2-a), (C-3-a), (C-4-a), (C-4-b), (C-4-c) et (C-5-a) et un produit (C-6-a) ;
à condition que les deux composés amine à encombrement stérique différents ne soient pas choisis dans la même formule générique.

15. Article agricole selon la revendication 1, dans lequel
le composant (III) est un composé de formule (A-1-a), ou
- un composé de formule (C-1-a) dans laquelle R₈ représente un atome d'hydrogène, ou
- une combinaison d'un composé de formule (A-1-a) avec un composé de formule (C-1-a) dans laquelle R₆ représente un atome d'hydrogène, ou
- une combinaison d'un composé de formule (A-1-a) avec un composé de formule (C-2-a) dans laquelle R₁₃ représente un groupe méthyle, ou
- une combinaison d'un composé de formule (B-1-b)
dans laquelle E₁ représente un atome d'hydrogène avec un composé de formule (C-1-a) dans laquelle R₆ représente un atome d'hydrogène.

16. Article agricole selon la revendication 1, qui contient en outre un ou plusieurs des composants suivants
(IV) un antioxydant,
(V) un absorbeur d'ultraviolets,
(VI) une charge,
(VII) un pigment,
(VIII) un sel inorganique ou organique de Ca, de Mg, de Zn ou d'Al.

17. Article agricole selon la revendication 1, qui contient en outre un acide polyhydroxycarboxylique aliphatique.

18. Article agricole selon la revendication 17, dans lequel l'acide polyhydroxycarboxylique aliphatique est l'acide citrique.

19. Article agricole selon la revendication 1, qui est un film pour paillis.

20. Procédé pour maîtriser la résistance aux agents atmosphériques et la dégradation d'un article agricole de polymère organique, qui comprend l'incorporation des composants (II) et (III) tels que définis dans la revendication 1 dans le polymère organique.

21. Utilisation d'un mélange contenant les composants (II) et (III) tels que définis dans la revendication 1 pour maîtriser la résistance aux agents atmosphériques et la dégradation d'un article agricole de polymère organique.

22. Composition contenant les composants (II) et (III) tels que définis dans la revendication 1.

23. Composition selon la revendication 22 à condition que lorsque la composition contient une polyoléfine, la présence d'un composé insaturé oxydable choisi dans le groupe constitué par le caoutchouc naturel, la résine styrène-butadiène, la graisse ou l'huile soit rejetée.

24. Composition selon la revendication 22
à condition que lorsque la composition contient une polyoléfine, la présence d'un composé insaturé oxydable soit rejetée.

25. Composition contenant les composants (II) et (III) tels que définis dans la revendication 1, à condition que le composant (III) ait trait à deux composés à encombrement stérique.

26. Composition stabilisatrice contenant les composants (II) et (III) tels que définis dans la revendication 1 pour un article polymère organique agricole.

27. Composition stabilisatrice contenant les composants (II) et (III) tels que définis dans la revendication 1 pour un article polymère organique agricole, à condition que le composant (III) ait trait à deux composés à encombrement stérique.
